(19) Europäisches Patentamt
European Patent Office
Office européen des brevets

(11) EP 4 154 729 A1

(12) **EUROPEAN PATENT APPLICATION**
published in accordance with Art. 153(4) EPC

(43) Date of publication:
**29.03.2023 Bulletin 2023/13**

(21) Application number: **21809617.0**

(22) Date of filing: **20.05.2021**

(51) International Patent Classification (IPC):
***A23L 13/00*** $^{(2016.01)}$ ***A23L 17/00*** $^{(2016.01)}$
***A23L 17/40*** $^{(2016.01)}$ ***A23L 27/00*** $^{(2016.01)}$
***A23L 27/20*** $^{(2016.01)}$ ***A23L 29/00*** $^{(2016.01)}$

(52) Cooperative Patent Classification (CPC):
**A23L 27/50; A23L 13/00; A23L 13/428; A23L 13/72; A23L 17/00; A23L 17/40; A23L 27/204; A23L 27/21**

(86) International application number:
**PCT/JP2021/019188**

(87) International publication number:
**WO 2021/235521 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.05.2020 JP 2020089844**
**22.05.2020 JP 2020089845**

(71) Applicant: **Kikkoman Corporation**
**Noda-shi, Chiba 278-8601 (JP)**

(72) Inventors:
- **OKAMURA, Gaku**
  **Noda-Shi, Chiba 278-8601 (JP)**
- **INOMOTO, Yasushi**
  **Noda-Shi, Chiba 278-8601 (JP)**
- **KUNITAKE, Yuri**
  **Noda-shi, Chiba 278-8601 (JP)**

(74) Representative: **Schulz Junghans Patentanwälte PartGmbB**
**Großbeerenstraße 71**
**10963 Berlin (DE)**

# (54) COMPOSITION PACKED IN CONTAINER, USE THEREOF, AND PROCESSED FOOD PACKED IN CONTAINER

(57) The purpose of the present invention is to provide a container-packed composition in which a heat deterioration smell, such as a retort smell based on contained ingredients such as soy sauce, meat, and soybean protein, is reduced; a processed food using the composition and a method of producing the processed food; and a composition in which a smell specific to meat is suppressed, and a flavor of the meat is improved so as to impart umami of meat, regardless of the type of meat. The purpose is achieved by: a container-packed composition containing at least one ingredient selected from the group consisting of a seasoning component, vegetables, meat, and seafood and having a phenethyl acetate content of 1.0 ppb or more and less than 1,000 ppb; and a container-packed composition containing animal meat and having a phenethyl acetate content of 1 ppb or more and less than 1,500 ppb.



Processed by Luminess, 75001 PARIS (FR)

## Description

Technical Field

The present invention relates to a container-packed composition, processed food using the composition, a method of producing the processed food, and container-packed processed food.

Background Art

A method of filling and sealing food or seasonings in a heat resistant container such as a pouch and subjecting it to retort sterilization treatment with a retort device is widely used. The retort sterilization method is a method of sterilization by heating under pressure at a high temperature exceeding 100°C. A general retort sterilization method includes a method of placing a container in a retort tank, raising the temperature of the retort tank to about 120°C by a heat medium such as steam and hot water, and heating the center of food inside the container at 120°C for 4 minutes or in a state where heat equivalent to or higher than that is applied to sterilize it.

When subjected to retort sterilization treatment, the food and seasonings in the container can be stored at ambient temperature. However, there is a problem that the food and seasonings having been subjected to retort sterilization treatment sometimes generate a distinctive retort smell, resulting in a deterioration of the quality of the products. Various means have been researched and developed to suppress the retort smell.

Specifically, a meat cooking composition characterized by having a total content of isobutyl alcohol, n-butyl alcohol, and isoamyl alcohol of less than 2 ppm and a maltol content of 2 ppm or more, and a retort food containing meat characterized by containing meat prepared with the composition are known (see, for example, Patent Literature 1).

A retort curry characterized by containing 0.001 to 0.3% by weight of a green chili pepper extract and 0.1 to 10% by weight of soybean protein is known (see, for example, Patent Literature 2). Food containing soybean protein with improved flavor characterized by the addition of polyphenols extracted from tea is known (see, for example, Patent Literature 3).

On the other hand, meat, a natural ingredient, is generally obtained from a raised livestock animal. Methods of raising livestock animals vary depending on regions such as countries, livestock farmers, and the like, thus affecting the quality of meat and resulting in fluctuations in the price of meat.

For example, beef can be classified into Wagyu, domestic beef, and imported beef. Of these, imported beef is considered inferior in flavor to Wagyu and domestic beef. Most imported beef is grass-fed beef, and grass-fed beef tends to have a grass smell (grassy smell) and less umami than Wagyu, domestic beef, and grain-fed beef. Therefore, it is very useful to increase the palatability of grass-fed beef.

It is known that Japanese Black beef has a specific Wagyu beef aroma, to which lactones such as nonalactone, decalactone, undecalactone, and dodecalactone are likely to contribute (see, for example, Non Patent Literature 1). A method for generating Wagyu beef aroma based on lactones or the like using lipase has been disclosed (see, for example, Patent Literature 4).

Similarly, a method of producing processed meat with an improved grass smell is known, which is characterized by adding lactones to grass-fed beef at a concentration of 0.1 to 100 ppm in terms of lactones and homogeneously distributing the lactones in the meat (see, for example, Patent Literature 5).

It is known that not only beef but also all meats including chicken, pork, and the like have their specific smells. Chicken is known to have a specific broiler smell as an adverse effect of short-fed breeds, and pork is known to have an unpleasant smell combining an animal smell, an oxidized smell, a bloody smell (iron smell), and a raw smell. A method for reducing the chicken smell using flour and cumin powder is known (see, for example, Patent Literature 6).

On the other hand, as food containing phenethyl acetate to be added, tomato *moromi* with phenethyl acetate of 510 ppb is known, which is obtained by mixing tomato paste with pureed and defatted soybean soy sauce moromi, subsequently adding salt and soy sauce yeast for fermentation and aging, followed by firing at 80°C for 30 minutes (see, for example, Patent Literature 7).

As food containing phenethyl alcohol instead of phenethyl acetate, soy sauce having a β-phenethyl alcohol content of 50 mg/L or 200 mg/L is known, which is fired at 85°C for 30 minutes (see, for example, Patent Literature 8). Beverages containing phenethyl acetate are also known (see, for example, Patent Literatures 9 and 10).

Citation List

Patent Literature

Patent Literature 1: Japanese Patent Laid-Open No. 2018-121633
Patent Literature 2: Japanese Patent No. 6040278
Patent Literature 3: Japanese Patent No. 3432614
Patent Literature 4: Japanese Patent Laid-Open No. 2006-340693
Patent Literature 5: Japanese Patent No. 4704300
Patent Literature 6: Japanese Patent No. 6325277
Patent Literature 7: Japanese Patent Laid-Open No. 2014-168458
Patent Literature 8: Japanese Translation of PCT International Application Publication No. 2019-526228
Patent Literature 9: Japanese Patent Laid-Open No. 2015-027309
Patent Literature 10: Japanese Patent Laid-Open No. 2006-121958

Non Patent Literature

Non Patent Literature 1: Nihon Chikusan Gakkaiho 75 (3): 409-415, 2004

Summary of Invention

Technical Problem

In the meat cooking composition described in Patent Literature 1, concentrated soy sauce under reduced pressure is used as a seasoning containing maltol. In contrast, there is a problem that *koikuchi shoyu* (regular soy sauce) cannot be used because it has a large content of isobutyl alcohol, n-butyl alcohol, and isoamyl alcohol, causing a retort smell.

In addition, there is a problem that a green chili pepper extract and a tea extract employed in food described in Patent Literatures 2 and 3 may bring about foreign tastes, such as a spicy taste and a bitter taste, and coloration.

Furthermore, little is known about retort seasonings containing soy sauce but with a reduced retort smell, regardless of types of soy sauce such as koikuchi shoyu (regular soy sauce).

Therefore, the present invention has a first object to be achieved by the present invention to provide a container-packed composition in which a heat deterioration smell, such as a retort smell based on contained food materials (ingredients) such as soy sauce, meat, and soybean protein, is reduced; a processed food using the composition; and a method of producing the processed food. The present invention also has a second object to be achieved by the present invention to provide a container-packed processed food capable of being consumed by itself.

On the other hand, as described in Patent Literatures 4 and 5, the grass smell is reduced by using lactones. However, according to the examination made by the present inventors, nonalactone, a lactone, can indeed reduce a grass smell but there is a problem that it cannot improve the umami of meat.

In addition, since cumin powder is used in the method described in Patent Literature 6 but the cumin powder has a pungent taste and strong fragrance, there is a problem of imparting a cumin-specific flavor to meat to be used.

Furthermore, the methods described in Patent Literatures 4 to 6, each target a certain type of meat, and little is known about components and methods to improve the meat flavor, regardless of the type of meat.

Therefore, the present invention has a third object to be achieved by the present invention to provide a composition in which a smell specific to meat is suppressed, and a flavor of the meat is improved so as to impart umami of meat, regardless of the type of meat.

Note that the tomato moromi described in Patent Literature 7 is different from soy sauce obtained by fermenting, aging, and then pressing soy sauce moromi, and does not have a heat deterioration smell if it is subjected to heat sterilization such as retort sterilization. Besides, the soy sauce described in Patent Literature 8 contains phenethyl alcohol, but not phenethyl acetate. In contrast, Patent Literature 8 describes that Huangjiu, cooking wine, vinegar, and Baijiu (Chinese liquor) produced using certain yeasts contain 2-phenylethyl acetate. The beverages described in Patent Literatures 9 and 10 are less likely to contain components that would cause a heat deterioration smell because of the nature of the beverages, and even if they contain such components, they are not sterilized by heat under conditions that would cause the heat deterioration smell.

Solution to Problem

The present inventors have conducted diligent research to achieve the above objects and repeated trial and error to obtain food and seasonings in which a heat deterioration smell based on contained ingredients is hardly perceived even after heat sterilization, and a composition with an improved meat flavor, regardless of the type of meat, by using many components alone or in combination as appropriate.

As a result of numerous unsuccessful attempts, surprisingly, the present inventors found that a heat deterioration

smell based on ingredients is suppressed by containing a predetermined amount of phenethyl acetate along with the ingredients. More surprisingly, as described in Table 2B and Table 2C in Examples below, when not only retort sterilization but also heat sterilization under normal pressure at 100°C or lower (for example, at a temperature with Fo value of 0.00126 or more) (hereinafter also referred to as non-retort sterilization) were performed, the heat deterioration smell was suppressed. Note that phenethyl acetate was confirmed to suppress heat deterioration smells in a wide variety of ingredients, and for example, a heat deterioration smell was suppressed when ingredients such as meat and soybean protein were used with soy sauce or without soy sauce.

On the other hand, surprisingly, it was eventually found that one having a predetermined amount of phenethyl acetate added along with meat could be a composition with an improved meat flavor. Given that a smell threshold value of phenethyl acetate is reported to be 3,000 ppb (National Institute of Health Sciences, [online] http://www.nihs.go.jp/hse/food-info/chemical/kanshi/table3.xls), there is a probability that improving action of phenethyl acetate at an amount of this threshold value or less on a meat flavor is not solely due to an aroma of phenethyl acetate and is thus an unexpected action.

More surprisingly, it was found that phenethyl acetate has flavor improving actions not only for meat but also for seafood and that the addition of phenethyl acetate in combination with alanine enhanced the flavor improving actions of animal meats such as meat and seafood.

On the basis of the above findings, the present inventors successfully created a container-packed composition capable of achieving the object of the present invention; processed food; a method of producing processed food; container-packed processed food, and the like. The present invention is an invention that has been completed based on such findings or successful examples.

Thus, according to each aspect of the present invention, the following Group I to Group VI are provided:

Group I

[1] A container-packed seasoning composition containing 1.0 ppb or more and less than 1,000 ppb phenethyl acetate.
[2] The composition according to [1], further containing at least one ingredient selected from the group consisting of a seasoning component, vegetables, meat, and seafood.
[3] The composition according to [1] or [2], wherein the ingredient is at least one ingredient selected from the group consisting of soy sauce, beef, pork, chicken, and soybean protein.
[4] The composition according to any one of [1] to [3], wherein the composition is a composition for suppressing a heat deterioration smell based on the ingredient.
[5] The composition according to any one of [1] to [4], wherein the composition is a composition having been subjected to retort sterilization.
[6] A processed food containing the composition according to any one of [1] to [5] and an ingredient as raw materials.
[7] A method of producing a cooked food, including a step of cooking a mixture of the composition according to any one of [1] to [5] and an ingredient to obtain the cooked food.
[8] A container-packed processed food containing 1.0 ppb or more and less than 1,000 ppb phenethyl acetate.
[9] The container-packed processed food according to [8], further containing at least one ingredient selected from the group consisting of a seasoning component, vegetables, meat, and seafood.
[10] The container-packed processed food according to [8] or [9], wherein the ingredient is at least one ingredient selected from the group consisting of soy sauce, beef, pork, chicken, and soybean protein.

Group II

[1] A container-packed seasoning composition containing soy sauce and 0.5 ppb or more and less than 1,000 ppb phenethyl acetate.
[2] The composition according to [1], wherein the composition is a composition for suppressing a retort smell.
[3] The composition according to [1] or [2], wherein the composition is a composition having been subjected to retort sterilization.
[4] The composition according to any one of [1] to [3], wherein the composition has a phenethyl acetate content of 5 ppb or more and less than 1,000 ppb to the soy sauce.
[5] A processed food containing the composition according to any one of [1] to [4] and an ingredient as raw materials.
[6] A method of producing a processed food, including a step of mixing the composition according to any one of [1] to [4] with an ingredient to obtain the processed food.

[7] A method of producing a cooked food, including a step of cooking a mixture of the composition according to any one of [1] to [4] and an ingredient to obtain the cooked food.
[8] A container-packed processed food containing soy sauce and 0.5 ppb or more and less than 1,000 ppb phenethyl acetate.
[9] The container-packed processed food according to [8], wherein the container-packed processed food is a container-packed processed food for suppressing a retort smell.
[10] The container-packed processed food according to [8] or [9], wherein the container-packed processed food is a container-packed processed food having been subjected to retort sterilization.

Group III

[1] A container-packed seasoning composition containing meat and 1 ppb or more and less than 2,000 ppb phenethyl acetate.
[2] The composition according to [1], wherein the composition is a composition for suppressing a meat heating smell due to retort sterilization.
[3] The composition according to [1] or [2], wherein the composition is a composition having been subjected to retort sterilization.
[4] The composition according to any one of [1] to [3], wherein the composition has a phenethyl acetate content of 5 ppb or more and less than 10,000 ppb to the meat.
[5] The composition according to any one of [1] to [4], wherein the composition contains soy sauce.
[6] The composition according to [5], wherein the composition has a phenethyl acetate content of 10 ppb or more and less than 20,000 ppb to the soy sauce.
[7] A processed food containing the composition according to any one of [1] to [6] and an ingredient as raw materials.
[8] A method of producing a processed food, including a step of mixing the composition according to any one of [1] to [6] with an ingredient to obtain the processed food.
[9] A method of producing a cooked food, including a step of cooking a mixture of the composition according to any one of [1] to [6] and an ingredient to obtain the cooked food.
[10] A container-packed processed food containing meat and 1 ppb or more and less than 2,000 ppb phenethyl acetate.
[11] The container-packed processed food according to [10], wherein the container-packed processed food is the container-packed processed food for suppressing a meat heating smell due to retort sterilization.
[12] The container-packed processed food according to [10] or [11], wherein the container-packed processed food is a container-packed processed food having been subjected to retort sterilization.

Group IV

[1] A container-packed seasoning composition containing soybean protein and 1 ppb or more and less than 1,000 ppb phenethyl acetate.
[2] The composition according to [1], wherein the composition is a composition for suppressing a soybean stuffy smell due to retort sterilization.
[3] The composition according to [1] or [2], wherein the composition is a composition having been subjected to retort sterilization.
[4] The composition according to any one of [1] to [3], wherein the composition has a phenethyl acetate content of 10 ppb or more and less than 10,000 ppb to the soybean protein.
[5] The composition according to any one of [1] to [4], wherein the composition contains soy sauce.
[6] The composition according to [5], wherein the composition has a phenethyl acetate content of 10 ppb or more and less than 10,000 ppb to the soy sauce.
[7] A processed food containing the composition according to any one of [1] to [6] and an ingredient as raw materials.
[8] A method of producing a processed food, including a step of mixing the composition according to any one of [1] to [6] with an ingredient to obtain the processed food.
[9] A method of producing a cooked food, including a step of cooking a mixture of the composition according to any one of [1] to [6] and an ingredient to obtain the cooked food.
[10] A container-packed processed food containing soybean protein and 1 ppb or more and less than 1,000 ppb phenethyl acetate.

[11] The container-packed processed food according to [10], wherein the container-packed processed food is the container-packed processed food for suppressing a soybean stuffy smell due to retort sterilization.
[12] The container-packed processed food according to [10] or [11], wherein the container-packed processed food is a container-packed processed food having been subjected to retort sterilization.

Group V

[1] A method for suppressing a heat deterioration smell, including a step of heating a container-packed composition containing an ingredient and having a phenethyl acetate content of 1.0 ppb or more and less than 1,000 ppb to suppress the heat deterioration smell due to the ingredient.
[2] A method of producing a heated container-packed composition, including a step of heating a container-packed composition containing an ingredient and having a phenethyl acetate content of 1.0 ppb or more and less than 1,000 ppb to obtain a container-packed composition in which a heat deterioration smell due to the ingredient is suppressed.
[3] The method according to [1] or [2], wherein the ingredient is at least one ingredient selected from the group consisting of a seasoning component, vegetables, meat, and seafood.
[4] The method according to [1] or [2], wherein the ingredient is at least one ingredient selected from the group consisting of soy sauce, beef, pork, chicken, and soybean protein.
[5] The method according to any one of [1] to [4], wherein the container-packed composition is a container-packed seasoning composition or a container-packed processed food.
[6] A heated container-packed composition,

containing an ingredient, and
having a phenethyl acetate content of 1.0 ppb or more and less than 1,000 ppb,
wherein a heat deterioration smell is suppressed compared to a heated container-packed composition containing the ingredient and having a phenethyl acetate content of less than 1.0 ppb.

[7] The composition according to [6], wherein the ingredient is at least one ingredient selected from the group consisting of a seasoning component, vegetables, meat, and seafood.
[8] The composition according to [6], wherein the ingredient is at least one ingredient selected from the group consisting of soy sauce, beef, pork, chicken, and soybean protein.
[9] The composition according to any one of [6] to [8], wherein the container-packed composition is a container-packed seasoning composition or a container-packed processed food.

Group VI

[1] A container-packed composition containing at least one animal meat selected from the group consisting of meat and seafood, and 1 ppb or more and less than 1,500 ppb phenethyl acetate.
[2] The composition according to [1], further containing 0.1 mg/g or more and less than 65 mg/g alanine.
[3] The composition according to [1] or [2], wherein the composition is a flavor-improving composition for the animal meat.
[4] The composition according to any one of [1] to [3], wherein the composition is a composition having been subjected to heat sterilization.
[5] The composition according to any one of [1] to [4], wherein the composition has a phenethyl acetate content of 5 ppb or more and less than 7,500 ppb to the animal meat and/or has an alanine content of 0.5 mg/g or more and less than 325 mg/g to the animal meat.
[6] The composition according to any one of [1] to [5], wherein the composition contains soy sauce.
[7] The composition according to [6], wherein the composition has a phenethyl acetate content of 10 ppb or more and less than 15,000 ppb to the soy sauce and/or has an alanine content of 1 mg/g or more and less than 650 mg/g to the soy sauce.
[8] A processed food containing the composition according to any one of [1] to [7] and an ingredient as raw materials.
[9] A method of producing a processed food, including a step of by mixing the composition according to any one of [1] to [7] with an ingredient to obtain the processed food.
[10] A method of producing a cooked food, including a step of cooking a mixture of the composition according to any one of [1] to [7] and an ingredient to obtain the cooked food.

[11] A container-packed processed food containing at least one animal meat selected from the group consisting of meat and seafood, and 1 ppb or more and less than 1500 ppb phenethyl acetate.

[12] The container-packed processed food according to [11], further containing 0.1 mg/g or more and less than 65 mg/g alanine.

[13] The container-packed processed food according to [11] or [12], wherein the container-packed processed food is the container-packed processed food for improving an animal meat flavor.

[14] The container-packed processed food according to any one of [11] to [13], wherein the container-packed processed food is a container-packed processed food having been subjected to heat sterilization.

[15] A method for improving an animal meat flavor, including a step of mixing at least one animal meat selected from the group consisting of meat and seafood with phenethyl acetate so that the mixture has a phenethyl acetate content of 1 ppb or more and less than 1,500 ppb, to improve the animal meat flavor.

[16] A method for improving an animal meat flavor, including a step of mixing at least one animal meat selected from the group consisting of meat and seafood with phenethyl acetate and alanine so that the mixture has a phenethyl acetate content of 1 ppb or more and less than 1,500 ppb and an alanine content of 0.1 mg/g or more and less than 65 mg/g, to improve the animal meat flavor.

[17] A flavor improving composition for at least one animal meat selected from the group consisting of meat and seafood, containing phenethyl acetate as an active component.

[18] A flavor improving composition for at least one animal meat selected from the group consisting of meat and seafood, containing phenethyl acetate and alanine as active components.

## Advantageous Effects of Invention

According to the container-packed composition, the processed food, and the method of producing the processed food, which are one aspect of the present invention, by using the composition as a composition in which heat deterioration smells such as a retort smell, a meat heating smell, and a soybean stuffy smell have been suppressed, it is possible to prepare a processed food containing an ingredient with a desired excellent flavor, for example, cooked food, without imparting a foreign smell caused by heat sterilization. In addition, the container-packed processed food, which is one aspect of the present invention, can be easily consumed at home, instead of a conventional processed food.

According to the present invention, an animal meat flavor can be improved so that a smell specific to animal meat is suppressed and that umami of meat can be perceived, regardless of the type of animal meat such as meat or seafood. As a result, according to the present invention, it is possible to prepare a processed food containing animal meat with an excellent flavor, for example, a cooked food. Besides, according to the present invention, it can be put on edible raw animal meat to increase the palatability of the edible raw meat.

## Description of Embodiments

Hereinafter, each aspect of the present invention is described in detail, but the present invention is not limited only by items in this section, and the present invention can take various aspects as long as the purpose of the present invention can be achieved.

Each term in this description is used in the meaning generally used by those skilled in the food field unless otherwise specified and should not be interpreted as having an unduly restrictive meaning. In addition, since speculations and theories in this description are based on previous findings and experiences of the present inventors, the present invention is not restricted by such speculations and theories.

The term "composition" is not particularly limited and means composition as well known, and is, for example, one composed of a combination of two or more components.

The term "container-packed" means being filled or stored in a container.

The term "ppb" is a unit as the usually known meaning, and specifically, 1 ppb is $1/10^9$ and is 1 ng/g in terms of grams.

The term "and/or" means any one, or an arbitrary combination of two or more, or a combination of all of a plurality of related items listed.

The term "content" has the same meaning as concentration and amount used and means the proportion of the amount of a component based on the total amount of a composition. Unless otherwise specified, a unit of content herein means "% by mass (wt% or %(w/w))". However, the total content of the component does not exceed 100% by mass. The terms "more than" and "less than" respectively mean the lower limit and the upper limit, without including the following numerical value, and for example, "more than 1" means a numerical value greater than 1, and "less than 100" means a numerical value smaller than 100.

The term "to" for indicating a range of values is intended to include values preceding and following the wording; for example, "0% by mass to 100% by mass" means a range that is 0% by mass or more and 100% by mass or less.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The term "F value" represents the time (minute) corresponding to the time taken for food to be heated at the reference temperature. Since the "F value" varies depending on the reference temperature and a Z value of a heat resistant parameter of a microorganism, the F value at a reference temperature of 121.1°C and a Z value of 10°C is indicated as an "Fo value" and used to evaluate sterilization. The Fo value is calculated by the following formula (see, for example, Youki Zume Shokuhin no Kanetsu Sakkin (Riron oyobi Ouyou) (Heat Sterilization of Container-Packed Food (Theory and Application)) (published by Japan Canners Association).

$$Fo = t \times 10^{((T - 121.1)/10)}$$

The Fo value is an index of microbial inactivation capacity in moist heat sterilization. For example, a Fo value for heat sterilization treatment at 110°C for 9 minutes is 0.70, applying the above formula. Note that this value is a value when the temperature instantly reaches 110°C and is cooled instantly after 9 minutes. In reality, since the Fo value is calculated and output by a heat sterilizer at regular intervals during the heat sterilization treatment, even if the heat sterilizer shows a Fo value of 0.70, it does not necessarily mean that the temperature and time have reached the values mentioned above. Among heat sterilization treatments in Examples below, those with Fo values described show heat sterilization treatments in which the temperature and time are adjusted so that a Fo value indicated by the heat sterilizer reaches a predetermined value, and the temperature and time calculated by the above formula are appended for reference; and those with temperature and time described indicate a heat sterilization treatment in which the temperature is reached and then maintained for a predetermined period of time.

The term "flavor" means an aroma that comes up from the inside of the mouth to the nose when taken into the mouth (retronasal aroma), the taste perceived on the tongue when taken into the mouth (taste), or both. The term "aroma" means an aroma perceived only by the nose not by the mouth (orthonasal aroma). The term "fragrance" means, flavor, aroma, or both.

The term "animal meat" means meat, seafood, or both.

The term "improving action on an animal meat flavor" means at least one action selected from the group consisting of enhancing the animal meat flavor, maintaining the animal meat flavor, and suppressing (mitigating, preventing, and inhibiting) deterioration of the animal meat flavor.

The term "heat deterioration smell" due to ingredients refers to an unpleasant smell and a stuffy smell (a smell with a sensation of steaming in the nose) that comes up from the inside of the mouth to the nose when food and seasonings containing the ingredients sealed in a sealed container such as a retort pouch are heated and then opened to consume the food and the seasonings. The term "suppressing the heat deterioration smell due to ingredients" refers to making a heat deterioration smell generated by a heat treatment less perceivable, but it does not preclude the possibility of inhibiting the generation of the heat deterioration smell.

The number of digits in an integer value matches the number of digits in a significant figure. For example, a significant figure of 1 is one digit and a significant figures of 10 is two digit. In a decimal value, the number of digits after the decimal point matches the number of significant figure. For example, a significant figure of 0.1 is one digit and a significant figures of 0.10 is two digit.

The number of digits in an integer value matches the number of digits in a significant figure. For example, a significant figure of 1 is one digit and a significant figures of 10 is two digit. In a decimal value, the number of digits after the decimal point matches the number of significant figure. For example, a significant figure of 0.1 is one digit and a significant figures of 0.10 is two digit.

The composition of one aspect of the present invention is a container-packed composition containing an ingredient and phenethyl acetate. The composition of one aspect of the present invention can be used as a composition for suppressing a heat deterioration smell by containing phenethyl acetate along with ingredients. The composition of one aspect of the present invention is a composition for suppressing a heat deterioration smell based on the ingredient. The phenethyl acetate content is 1.0 ppb or more and less than 1,000 ppb.

The composition of another aspect of the present invention is a container-packed seasoning composition containing soy sauce and phenethyl acetate. The container-packed processed food of another aspect of the present invention is a container-packed processed food containing soy sauce and phenethyl acetate. The composition and container-packed processed food of one aspect of the present invention are a composition and a processed food in which a retort smell is suppressed by themselves. The term "retort smell" refers to an unpleasant deterioration smell

perceived when food and seasonings containing soy sauce, sealed in retort pouches, are subjected to retort sterilization treatment. The term "suppressing the retort smell due to retort sterilization" refers to making a retort smell generated by retort sterilization less perceivable, but it does not preclude the possibility of inhibiting the generation of the retort smell.

The composition of another aspect of the present invention is a container-packed seasoning composition containing meat and phenethyl acetate. The container-packed processed food of another aspect of the present invention is a container-packed processed food containing meat and phenethyl acetate. The composition and container-packed processed food of one aspect of the present invention are a composition and a processed food in which a meat heating smell due to retort sterilization is suppressed by themselves. The term " meat heating smell due to retort sterilization" refers to an unpleasant deterioration smell perceived when food and seasonings containing meat, sealed in retort pouches, are subjected to retort sterilization treatment. Specifically, it refers to a combined smell of an animal smell specific to the animal of lipids in meat and an unpleasant smell caused by oxidation of the lipids in meat by heating, known as warmed-over flavor (WOF). The term "suppressing the meat heating smell due to retort sterilization" refers to making a meat heating smell generated by retort sterilization less perceivable, but it does not preclude the possibility of preventing the generation of the meat heating smell due to retort sterilization.

The composition of another aspect of the present invention is a container-packed seasoning composition containing soybean protein and phenethyl acetate. The container-packed processed food of another aspect of the present invention is a container-packed processed food containing soybean protein and phenethyl acetate. The composition and container-packed processed food of one aspect of the present invention are a composition and a processed food in which a soybean stuffy smell due to retort sterilization is suppressed by themselves. The term "the soybean stuffy smell due to retort sterilization" refers to an unpleasant deterioration smell perceived when food and seasonings containing soybean protein, sealed in retort pouches, are subjected to retort sterilization treatment. Specifically, it refers to a combined foreign smell of grassy soybean smell, roasted soybean flour-like smell, and a distinctive undesirable smell generated when soybeans are heated in a closed system, and means what is perceived when it comes up from the inside of the mouth to the nose when consumed. Note that the distinctive undesirable smell generated during heating is, in detail, a smell derived from a sulfur-containing compound that is generated when amino acids containing sulfur, such as methionine, in the soybean are heated. The term "suppressing the soybean stuffy smell due to retort sterilization" refers to making a soybean stuffy smell generated by retort sterilization less perceivable, but it does not preclude the possibility of preventing the generation of the soybean stuffy smell due to retort sterilization.

The composition of another aspect of the present invention is a container-packed composition containing animal meat and phenethyl acetate. The composition of another aspect of the present invention is a container-packed composition containing animal meat, phenethyl acetate, and alanine. The container-packed processed food of another aspect of the present invention is a container-packed processed food containing animal meat and phenethyl acetate. The container-packed processed food of another aspect of the present invention is a container-packed processed food containing animal meat, phenethyl acetate, and alanine. The composition and container-packed processed food of one aspect of the present invention are a composition and a processed food in which an animal meat flavor is improved by themselves.

The composition of one aspect of the present invention and the processed food of one aspect of the present invention differ from each other in that the composition of one aspect of the present invention is used for seasoning or preparing, while the processed food of one aspect of the present invention can be consumed by itself, but share other configurations. Therefore, in the following, the composition of one aspect of the present invention is described by way of examples, and the processed food of one aspect of the present invention can be referred to the description of the composition of one aspect of the present invention. Note that it is preferable that the composition of one aspect of the present invention and the processed food of one aspect of the present invention be not, or do not contain tomato moromi described in Patent Literature 7 or tomato-containing seasonings containing phenethyl acetate, which are produced from the tomato moromi as a raw material. In addition, it is preferable that the composition of one aspect of the present invention and the processed food of one aspect of the present invention are not, or do not contain Huangjiu, cooking wine, vinegar, or Baijiu (Chinese liquor) containing 2-phenylethyl acetate, as described in Patent Literature 8. Furthermore, it is preferable that the composition of one aspect of the present invention and the processed food of one aspect of the present invention contain or consist of components such as seasonings and ingredients in which the heat deterioration smell can be perceived by being subjected to heat sterilization in the absence of phenethyl acetate.

In the following, the present invention is described in detail by dividing it into: as those having a heat suppressing action, an aspect mainly containing soy sauce and phenethyl acetate, an aspect mainly containing meat and phenethyl acetate, and an aspect mainly containing soybean protein and phenethyl acetate; and as one having an improving action on an animal meat flavor, an aspect mainly containing animal meat and phenethyl acetate.

[1. Aspect Mainly Containing Soy Sauce and Phenethyl Acetate]

When food and seasonings containing soy sauce are subjected to retort sterilization, a retort smell is usually

produced. However, the retort smell is less likely to be perceived in those containing phenethyl acetate along with soy sauce. Thus, the composition of one aspect of the present invention can be used as composition for suppressing a retort smell by containing phenethyl acetate along with soy sauce. In addition, it is preferable that the composition of one aspect of the present invention be one having been subjected to putrefaction preventing treatment, such as sterilization treatment, in consideration of its preservation properties. It is preferable that the composition of one aspect of the present invention be a composition having been subjected to sterilization treatment under conditions usually employed in sterilizing food and seasonings, for example, a composition having been sterilized by heat at 100°C or lower, but it is preferable that the composition be a composition having been subjected to retort sterilization. The composition having been subjected to retort sterilization is one in a retort sterilized state, and the concept is well established as a term to identify the structure or characteristics of an object, such as "retort food" (see, for example, "Kojien, 5th ed.", 1998). Note that as described in Examples below, suppressing effect of phenethyl acetate on the retort smell can be demonstrated even when heated at 85°C for 5 minutes (Fo value: 0.00126) .

Soy sauce is not particularly limited as long as it is described as shoyu or the like and is usually known, and examples thereof include those defined in "Quality Labeling Standard for Soy Sauce" indicated by Ministry of Agriculture, Forestry and Fisheries. Specific examples of the soy sauce include koikuti shoyu (regular soy sauce), usukuchi shoyu (light-colored soy sauce), tamari shoyu (rich soy sauce), rebrewed soy sauce, shiro shoyu (very light-colored soy sauce), dashi shoyu (Japanese broth-added soy sauce), teri shoyu (soy sauce for imparting a glaze), kiage shoyu (raw soy sauce), and unheated soy sauce, but koikuti shoyu (regular soy sauce) is preferred in order to impart a robust soy sauce flavor to ingredients. The form of soy sauce is not particularly limited and may be either liquid or solid such as powder and granules. The soy sauce can be used alone or in combination of two or more of the above. In order to have a flavor inherent in soy sauce, for example, the soy sauce preferably has an HEMF content of 20 ppm or more, and more preferably has an HEMF content of 30 ppm or more. Note that soy sauce obtained by a brewing process usually contains a 20 ppm or more HEMF. For example, usukuchi shoyu (light-colored soy sauce) has an HEMF content of 20 ppm or more, and koikuchi shoyu (regular soy sauce) has an HEMF content of 30 ppm or more.

Phenethyl acetate is, as usually known, a compound consisting of a structure shown in the following formula (I) .

[Formula 1]

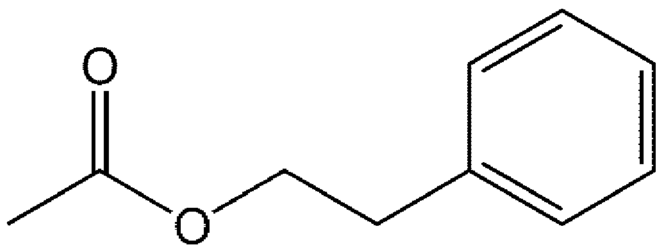

(I)

The composition of one aspect of the present invention contains soy sauce, but the retort smell is suppressed by containing phenethyl acetate. Therefore, the phenethyl acetate content in the composition of one aspect of the present invention may be an amount capable of suppressing the retort smell. As described in Examples below, according to the examination made by the present inventors, the retort smell is suppressed when a seasoning liquid containing soy sauce contain 0.5 ppb or more phenethyl acetate. Therefore, the lower limit of the phenethyl acetate content in the composition of one aspect of the present invention is 0.5 ppb or more based on the total amount of the composition.

If a seasoning composition containing soy sauce contains 0.5 ppb or more phenethyl acetate, the retort smell is suppressed. However, since phenethyl acetate by itself has a rose aroma with an aroma threshold value of 3,000 ppb to 3,800 ppb, when the composition has a high phenethyl acetate content and specifically contains 1,000 ppb or more phenethyl acetate, it is not preferred because an undesired, foreign smell perceived when eating the seasoning composition is imparted thereto. Therefore, the upper limit of the phenethyl acetate content in the composition of one aspect of the present invention is less than 1,000 ppb based on the total amount of the composition.

As described above, the phenethyl acetate content in the composition of one aspect of the present invention is 0.5 ppb or more and less than 1,000 ppb, but preferably 1.0 ppb or more and less than 1,000 ppb, and more preferably 2 ppb or more and 500 ppb or less in order to suppress the retort smell. Note that the term "0.5 ppb or more and less than 1,000 ppb phenethyl acetate" means, for example, 50 ng or more and less than 100,000 ng (= 100 μg) phenethyl acetate to 100 g of the seasoning composition.

In addition, as described in Examples below, the retort smell is suppressed when a seasoning liquid containing soy sauce contain 5 ppb or more of phenethyl acetate to soy sauce. Therefore, the phenethyl acetate content in the composition of one aspect of the present invention is preferably 5 ppb or more and less than 1,000 ppb to soy sauce, and in order to suppress the retort smell, more preferably 10 ppb or more and less than 1,000 ppb to soy sauce, further preferably 20 ppb or more and 500 ppb or less to soy sauce, and even more preferably 30 ppb or more and 500 ppb or less to soy sauce.

The soy sauce content is not particularly limited and can be set appropriately according to the desired flavor. When it is desired to impart a robust soy sauce texture and flavor to a processed food obtained by preparing ingredients using the composition of one aspect of the present invention, the soy sauce content is, for example, preferably 1.0% by mass or more, more preferably 5% by mass or more, and further preferably 10% by mass or more based on the total amount of the composition of one aspect of the present invention. The upper limit of the soy sauce content is not particularly limited, but is, for example, about 95% by mass or less based on the total amount of the composition of one aspect of the present invention.

As phenethyl acetate, phenethyl acetate itself may be used, or a phenethyl acetate-containing material that contains phenethyl acetate may be used. When phenethyl acetate itself is used, a product commercially available as a flavoring agent can be used.

The phenethyl acetate-containing material is not particularly limited as long as it contains phenethyl acetate, and examples thereof include soy sauce produced by a method described in Japanese Patent No. 6343710. In other words, the soy sauce is produced by a method including performing solid-liquid separation of soy sauce *moromi* obtained after lactic acid fermentation by a usual method of producing soy sauce, further subjecting the liquid portion to filtration treatment using a filter medium such as diatomaceous earth or various permeable membranes such as a UF membrane and an MF membrane to obtain soy sauce moromi soup, and subsequently subjecting the soy sauce moromi soup to yeast fermentation with soy sauce yeast. Since such soy sauce contains phenethyl acetate, it can be used as phenethyl acetate-containing soy sauce. Other specific examples of phenethyl acetate-containing materials include alcoholic beverages such as *seishu* (refined sake), *ginjo* sake, and other Japanese sake, and fermented seasonings.

The soy sauce yeast is not particularly limited as long as it is yeast usually used in the production of soy sauce, and examples thereof include salt-tolerant yeast such as *Zygosaccharomyces rouxii, Zygosaccharomyces bailii (Z. bailii), Candida etchellsii,* and *Candida versatilis (C. versatilis).* The yeast used in Patent Literature 8 is sake brewing yeast (such as *Saccharomyces cerevisiae*), and the sake brewing yeast is less likely to be used in the production of soy sauce. Although there is a description in Example 7 of Patent Literature 8 that soy sauce was produced by fermentation and aging using sake brewing yeast even at high table salt concentrations, the description significantly departs from common general knowledge in the art as of the filing. In addition, as described in MEMOIRS OF THE FACULTY OF AGRICULTURE OF KINDAI UNIVERSITY, (5), (1972) pp. 85 to 91, p. 86, line 4, and p. 87, lines 3 to 4 or the like, it is the common general knowledge in the art as of the filing that *Saccharomyces cerevisiae,* sake brewing yeast, is salt concentration-sensitive and cannot grow under high salt concentrations.

When phenethyl acetate-containing soy sauce is used, soy sauce in the composition of one aspect of the present invention may be phenethyl acetate-containing soy sauce or a mixed soy sauce of usual soy sauce and phenethyl acetate-containing soy sauce.

The composition of one aspect of the present invention can contain, in addition to soy sauce and phenethyl acetate, other components. Such other components are not particularly limited but are, for example, components used in food and seasonings. Specifically, examples of solid components include table salt, saccharides (such as sugar, glucose, fructose, starch syrup, and isomerized liquid sugar), grain components (such as bread crumbs, flour, and oatmeal), spices (such as ginger, chili pepper, pepper, basil, oregano, ginger, mixed spices), thickener (such as thickening polysaccharides like carrageenan, starch, processed starch, and gums), processed meat components (such as chicken powder, meat powder, and fish powder), chemical seasonings (such as sodium glutamate, glycine, sodium inosinate, and sodium guanylate), flavors, miso, and curry powder; and examples of liquid components include water, alcohol, sweet taste components (such as sweet sake, liquid sugar, starch syrup), acidic taste components (such as vinegar and flavorful acidic citrus fruits like apple, yuzu, and lemon), oil and fat components (such as sesame oil, olive oil, vegetable oil, soybean oil, chili oil, butter, beef tallow, and lard), liquor components (such as wine and seishu (refined sake)), and fruit juice (such as apple juice).

The composition of one aspect of the present invention may contain extract, soup stock, ingredients, and the like.

Examples of the extract include seafood extract obtained from bonito, dried bonito, scallops, and the like; seaweed extracts obtained from kelp and the like; meat extract obtained from meat such as chicken, pork, and beef; vegetable extract obtained from vegetables such as garlic, ginger, and shiitake mushroom; yeast extract; and protein hydrolysate.

Examples of the soup stock include soup stock obtained by extracting milled and sliced dried fishes such as dried bonito, dried bullet tuna, dried mackerel, dried tuna, and dried sardine; milled and boiled-dried fishes such as dried sardine, mackerel, horse mackerel, and shrimp; seaweeds such as kelp and wakame; and mushrooms such as shiitake

mushroom with solvents such as hot water and ethanol.

Examples of ingredients include vegetables such as white radish, onion, green onion, carrot, burdock root, lotus root, ginger, garlic, cabbage, green pepper, tomato, corn, and bamboo shoot; spicy vegetables such as perilla, parsley, celery, Chinese chives, and Japanese honewort; mushrooms such as shiitake mushroom, mushroom, enoki mushroom, and shimeji mushroom; fruits such as apple, pear, kiwi fruit, pineapple, and Japanese apricot; nuts and seeds such as sesame, nuts, and chestnut; meat such as beef, pork, chicken, horse, and mutton; seafood such as tuna, squid, scallops, crabs, and salmon; seaweeds such as hijiki, kelp, and wakame; and processed food such as egg, tofu, aburaage (thin fried bean curd), konnyaku, and soybean protein. These ingredients may be grated, made into a paste, milled, shredded, or cut into dice, strips, or other shapes for use.

Other components can be used alone or in combination of two or more of the above. The content of the other components can be set appropriately as long as the object of the present invention can be achieved. As specific examples of such other components, for example, when the composition of one aspect of the present invention is used to prepare *Niku Tofu* (simmered meat with tofu), sugar, table salt, sweet sake, processed starch, beef tallow, yeast extract, kelp extract, and the like are preferably used along with ground beef as an ingredient in order to impart sweet taste, viscosity, and the like to the composition of one aspect of the present invention.

The composition of one aspect of the present invention is not particularly limited in terms of its form, and for example, liquid compositions in the form of liquid, suspension, paste, or the like, and liquid compositions with fillings are preferred from the viewpoint of a container-packed seasoning composition.

The composition of one aspect of the present invention is a container-packed composition sealed by filling the composition into a container and encapsulating it. The container is not particularly limited as long as it is made of a material and shape that can be sealed, and examples thereof include pouches, sachets, bottles, cans, jars, and other packaging containers made of metals such as aluminum, plastics such as PET, one-layer or laminated films, and glass, and other materials. Specific examples thereof include glass jars and containers made of films laminated with a heat-weldable resin layer comprising an olefinic resin such as polypropylene or polyethylene on the inside and a layer comprising a resin having high gas-barrier properties such as polyester or polyamide and/or aluminum foil on the outside.

The degree of heating is not particularly limited as long as it is sufficient to make a heat deterioration smell perceivable in the contained ingredients. Heating conditions for the composition of one aspect of the present invention may be set appropriately based on indexes such as the presence or absence of pressure, temperature, time, and Fo value, and examples thereof include heating conditions under pressure at 110°C to 130°C and preferably at about 120°C for 2 minutes to 60 minutes and preferably for 4 minutes to 30 minutes; and heating conditions where the Fo value is measured as 0.1 to 60, preferably 0.2 to 30, and more preferably 0.2 to 10. In addition, it is preferable that the composition of one aspect of the present invention is subjected to retort sterilization. The retort sterilization may be performed at a temperature, pressure, and time that allow sterilization for long-term preservation. Although not particularly limited, the sterilization is performed, for example, under pressure at 100°C to 130°C and preferably at about 121.1°C for 0.5 minutes to 30 minutes and preferably for 4 minutes to 30 minutes with a Fo value of 0.5 or more and preferably 4 to 30, as an index of heat sterilization effects.

The action of suppressing the retort smell of the composition of one aspect of the present invention refers to the action of completely or partially suppressing the retort smell perceived when a composition containing the same amount of soy sauce but not phenethyl acetate is subjected to retort sterilization. The action of suppressing the retort smell of the composition of one aspect of the present invention can be checked by a method described in Examples below. Similarly, the action of suppressing the heat deterioration smell of the composition of one aspect of the present invention refers to the action of completely or partially suppressing the heat deterioration smell perceived when a composition containing the same amount of soy sauce but not phenethyl acetate is subjected to heat sterilization. The action of suppressing the heat deterioration smell of the composition of one aspect of the present invention can be checked by a method described in Examples below.

The amount of the composition of one aspect of the present invention used can be set appropriately according to the type of ingredients and processed food to be served with the composition of one aspect of the present invention and is not particularly limited. For example, when the composition of one aspect of the present invention is used to prepare Niku Tofu (simmered meat with tofu), 100 g to 200 g of the composition of one aspect of the present invention may be used per a cake of tofu (about 350 g).

The method of producing the composition of one aspect of the present invention is not particularly limited, and examples thereof include a method of producing a seasoning by mixing each component as usually known, and specifically include a method including mixing soy sauce, soy sauce, and phenethyl acetate, and other components, if necessary, by subjecting them to mixing means such as stirring treatment under room temperature or heated temperature. Soy sauce and other components may be pretreated by subjecting them to treatment such as shredding, milling, swelling, and heating.

The composition of one aspect of the present invention can be used, for example, to mix with ingredients such as water, saccharides, vegetables, spicy vegetables, mushrooms, fruits, nuts and seeds, meat, seafood, seaweed, eggs,

processed meat product, and processed food, and to prepare them at ambient temperature or by heating in order to obtain desired processed food. Another aspect of the present invention is processed food containing the composition of one aspect of the present invention and an ingredient as raw materials.

The ingredient used with the composition of one aspect of the present invention may be pretreated by cutting it to an appropriate size or heating it, such as baking and stir-frying. Since the composition of one aspect of the present invention can suppress not only a retort smell but also a heat deterioration smell due to cooking, the processed food of one aspect of the present invention may be cooked food. In the following, processed food obtained by using the composition of one aspect of the present invention is described by way of examples of cooked food, but processed food is not limited to cooked food.

The method of cooking by using the composition of one aspect of the present invention is not particularly limited and can be set appropriately according to the type and amount of ingredients used, the type of cooked food, and the like. Examples of cooking include usual cooking methods such as stir-frying, deep-frying, baking, steaming, heating with a microwave oven, heating with hot air, and heating in hot water, and these cooking methods may be carried out appropriately in combination. Since the heat deterioration smell due to cooking may be pronounced in stir-fry cooking, which is heated at a higher temperature, it is preferable that the composition of one aspect of the present invention be used in stir-fry cooking.

Cooked food obtained by using the composition of one aspect of the present invention is not particularly limited, and examples thereof include Niku Tofu (simmered meat with tofu), *Buta Kimuchi* (stir-fried pork and Kimchi), *Tori Daikon* (simmered chicken and white radish), *Niku-jaga* (stewed meat and potato), *Soboro Ankake* (Japanese broth and minced meat sauce), *Mizore-itame* (stir-fried grated radish), *Mizore-ni* (simmered grated-white radish), omelets, stir-fried meat and vegetable, *Nimono* (simmered dish), and *Goya Chanpuru* (bitter melon stir fry).

Examples of specific methods of using the composition of one aspect of the present invention include, when cooked food is Niku Tofu (simmered meat with tofu), a method including adding tofu to a frying pan heated with oil such as vegetable oil and stir-frying until lightly browned, subsequently adding desired vegetables and stir-frying slightly, or without adding vegetables, and then adding the composition of one aspect of the present invention thereto and stir-frying for tens of seconds to several minutes.

The processed food of one aspect of the present invention contains the composition of one aspect of the present invention and ingredients such as vegetables, spicy vegetables, mushrooms, fruits, nuts and seeds, meat, seafood, seaweed, eggs, processed meat product, and processed food as raw materials. The processed food of one aspect of the present invention has an excellent flavor, in which the retort smell derived from soy sauce is suppressed by being prepared with the composition of one aspect of the present invention.

The method of producing the processed food of one aspect of the present invention includes a step of mixing the composition of one aspect of the present invention with an ingredient to obtain the processed food. The method of producing the cooked food of one aspect of the present invention includes a step of cooking a mixture of the composition of one aspect of the present invention and an ingredient to obtain the cooked food. In the method of producing cooked food, it is preferable to preheat ingredients by stir-frying or the like before mixing them with the composition of one aspect of the present invention. It is preferable to consume cooked food obtained by the method of producing cooked food of one aspect of the present invention promptly after cooking or after leaving it at room temperature for several minutes in order to demonstrate seasoning action of the composition of one aspect of the present invention on the cooked food.

Specific aspects of the method of producing cooked food include, but are not limited to, the following methods using tofu, for example. In other words, tofu is cut into bite-size pieces. Subsequently, an appropriate amount of oil in a frying pan is heated, tofu is stir-fried over medium heat for several minutes until browned on both sides, and vegetables are further added thereto then stir-fried over medium heat for several minutes. Next, the composition of one aspect of the present invention is added and stir-fried for several tens of seconds to several minutes to obtain cooked food as Niku Tofu (simmered meat with tofu).

According to another side of the present invention, in view of the fact that phenethyl acetate suppresses the retort smell, provided are a composition for suppressing the retort smell derived from soy sauce, containing 0.5 ppb or more and less than 1,000 ppb phenethyl acetate as an active component; a method for suppressing the retort smell of a seasoning composition containing soy sauce, including a step of adding 0.5 ppb or more and less than 1,000 ppb phenethyl acetate to the seasoning composition containing soy sauce, and the like.

Specific examples of the container-packed processed food of one aspect of the present invention include, but are not limited to, cooked food packed in a container obtained by using the composition of one aspect of the present invention described above, as well as other packaged side dishes and boxed lunches.

[2. Aspect Mainly Containing Meat and Phenethyl Acetate]

When food and seasonings containing meat are subjected to retort sterilization, a meat heating smell is usually caused by retort sterilization. However, the meat heating smell due to retort sterilization is less likely to be perceived in

those containing phenethyl acetate along with meat. Thus, the composition of one aspect of the present invention can be used as a container-packed seasoning composition for suppressing a meat heating smell due to retort sterilization by containing phenethyl acetate along with meat. In addition, it is preferable that the composition of one aspect of the present invention be one having been subjected to putrefaction preventing treatment, such as sterilization treatment, in consideration of its preservation properties. It is preferable that the composition of one aspect of the present invention be a composition having been subjected to sterilization treatment under conditions usually employed in sterilizing food and seasonings, for example, a composition having been sterilized by heat at 100°C or lower, but it is preferable that the composition be a composition having been subjected to retort sterilization. Note that as described in Examples below, the effects of suppressing the meat heating smell by phenethyl acetate can be demonstrated even when heated at 85°C for 5 minutes (Fo value: 0.00126).

Meat is not particularly limited as long as it is edible meat, and examples thereof include meat from animals such as cattle, pig, chicken, sheep, goat, horse, reindeer, buffalo, yak, camel, donkey, mule, rabbit, duck, turkey, guinea fowl, goose, quail, and rock pigeon. However, meat from cattle, pig, or the like and poultry meat such as chicken, which are commonly used in Japan, are preferred, and beef, pork, and chicken meat easily generating a meat heating smell due to retort sterilization are more preferred. Meat preservation conditions are not particularly limited, and any raw meat, refrigerated meat, frozen meat, dried meat, or the like can be used. In addition, meat may also be processed by heating these products, such as stir-frying, baking, and simmering. The form of meat is not particularly limited, and any ground meat, thinly sliced meat, a chunk of meat, or the like can be used. The meat can be used alone or in combination of two or more of the above.

Phenethyl acetate is, as usually known, a compound consisting of the structure shown in the above formula (I) .

The composition of one aspect of the present invention contains meat, but the meat heating smell due to retort sterilization is suppressed by containing phenethyl acetate. Therefore, the phenethyl acetate content in the composition of one aspect of the present invention may be an amount capable of suppressing the meat heating smell due to retort sterilization. As described in Examples below, according to the examination made by the present inventors, the meat heating smell due to retort sterilization is suppressed when a seasoning liquid containing meat contains 1 ppb or more phenethyl acetate. Therefore, the lower limit of the phenethyl acetate content in the composition of one aspect of the present invention is 1 ppb or more based on the total amount of the composition.

If a seasoning composition containing meat contains 1 ppb or more phenethyl acetate, the meat heating smell due to retort sterilization is suppressed. However, since phenethyl acetate by itself has a rose aroma with an aroma threshold value of 3,000 ppb to 3,800 ppb, when the composition has a high phenethyl acetate content and specifically contains 2,000 ppb or more phenethyl acetate, it is not preferred because an undesired, foreign aroma perceived when eating the seasoning composition is imparted thereto. Therefore, the upper limit of the phenethyl acetate content in the composition of one aspect of the present invention is less than 1,000 ppb based on the total amount of the composition.

As described above, the phenethyl acetate content in the composition of one aspect of the present invention is 1.0 ppb or more and less than 1,000 ppb, but in order to suppress meat heating smell due to retort sterilization, preferably 2 ppb or more and less than 1,000 ppb, and more preferably 5 ppb or more and less than 1,000 ppb. Note that the term "1 ppb or more and less than 1,000 ppb phenethyl acetate" means, for example, 100 ng or more and less than 100,000 ng (= 100 μg) phenethyl acetate to 100 g of the seasoning composition.

In addition, as described in Examples below, the meat heating smell due to retort sterilization is suppressed when a seasoning liquid containing meat contains 5 ppb or more of phenethyl acetate to the meat. Therefore, the phenethyl acetate content in the composition of one aspect of the present invention is preferably 5 ppb or more and less than 5,000 ppb to meat, and in order to suppress the meat heating smell due to retort sterilization, more preferably 10 ppb or more and less than 5,000 ppb to meat, and further preferably 25 ppb or more and less than 5,000 ppb or less to meat.

The meat content is not particularly limited and can be set appropriately according to the desired flavor. When it is desired to impart a robust meat texture and flavor to a processed food obtained by preparing ingredients using the composition of one aspect of the present invention, the meat content is, for example, preferably 1.0% by mass or more, more preferably 10% by mass or more, and further preferably 15% by mass or more based on the total amount of the composition of one aspect of the present invention. The upper limit of the meat content is not particularly limited, but is, for example, about 95% by mass or less based on the total amount of the composition of one aspect of the present invention.

Even when the composition of one aspect of the present invention contains soy sauce along with meat, a meat heating smell due to retort sterilization can be suppressed by containing phenethyl acetate. Since soy sauce can be used for seasoning various dishes and food, it is preferable that the composition of one aspect of the present invention contains soy sauce.

In addition, as described in Examples below, the meat heating smell due to retort sterilization is suppressed when a seasoning liquid containing soy sauce and meat contains 10 ppb or more of phenethyl acetate to soy sauce. Therefore, the phenethyl acetate content in the composition of one aspect of the present invention is preferably 10 ppb or more and less than 20,000 ppb to soy sauce, and in order to suppress the meat heating smell due to retort sterilization,

more preferably 20 ppb or more and less than 20,000 ppb to soy sauce, and further preferably 50 ppb or more and 10,000 ppb or less to soy sauce.

The soy sauce content is not particularly limited and can be set appropriately according to the desired flavor. When it is desired to impart a robust soy sauce flavor to processed food obtained by preparing ingredients using the composition of one aspect of the present invention, the soy sauce content is, for example, preferably 0.1% by mass or more, more preferably 1.0% by mass or more, further preferably 5% by mass or more, and even more preferably 10% by mass or more based on the total amount of the composition of one aspect of the present invention. The upper limit of the soy sauce content is not particularly limited, but is, for example, about 90% by mass or less based on the total amount of the composition of one aspect of the present invention.

In the following, a composition containing meat, soy sauce, and phenethyl acetate, which is a suitable aspect of the composition of one aspect of the present invention is described by way of examples.

The composition of one aspect of the present invention can contain, in addition to meat, soy sauce, and phenethyl acetate, other components. Other components can be referred to the description above of other components in an aspect mainly containing the soy sauce and phenethyl acetate. However, meat is excluded from the ingredients.

The action of suppressing the meat heating smell due to retort sterilization of the composition of one aspect of the present invention refers to the action of completely or partially suppressing the meat heating smell perceived when a composition containing the same amount of soy sauce and meat but not phenethyl acetate is subjected to retort sterilization. The action of suppressing the meat heating smell due to retort sterilization of the composition of one aspect of the present invention can be checked by a method described in Examples below. Similarly, the action of suppressing the meat heating smell due to retort sterilization of the composition of one aspect of the present invention refers to the action of completely or partially suppressing the meat heating smell perceived when a composition containing the same amount of soy sauce and meat but not phenethyl acetate is subjected to heat sterilization. The action of suppressing the meat heating smell due to heat sterilization of the composition of one aspect of the present invention can be checked by a method described in Examples below.

The method of producing the composition of one aspect of the present invention is not particularly limited, and examples thereof include a method of producing a seasoning by mixing each component as usually known, and specifically include a method including mixing meat, soy sauce, phenethyl acetate, and other components, if necessary, by subjecting them to mixing means such as stirring treatment under room temperature or heated temperature. Meat and other components may be pretreated by subjecting them to treatment such as shredding, milling, swelling, and heating.

The processed food of one aspect of the present invention contains the composition of one aspect of the present invention and ingredients such as vegetables, spicy vegetables, mushrooms, fruits, nuts and seeds, seafood, seaweed, eggs, processed meat product, and processed food as raw materials. The processed food of one aspect of the present invention has an excellent flavor, in which the meat heating smell due to retort sterilization derived from meat and soy sauce is suppressed by being prepared with the composition of one aspect of the present invention.

According to another side of the present invention, in view of the fact that phenethyl acetate suppresses the meat heating smell due to retort sterilization, provided are a composition for suppressing the meat heating smell due to retort sterilization derived from soy sauce and meat, containing 1 ppb or more and less than 2,000 ppb phenethyl acetate as an active component; a method for suppressing the meat heating smell due to retort sterilization of a seasoning composition containing soy sauce and meat, including a step of adding 1 ppb or more and less than 2,000 ppb phenethyl acetate to the seasoning composition containing soy sauce and meat, and the like.

Other items of an aspect mainly containing meat and phenethyl acetate can be referred to the description of each item in an aspect mainly containing the soy sauce and phenethyl acetate.

[3. Aspect Mainly Containing Soybean Protein and Phenethyl Acetate]

When food and seasonings containing soybean protein are subjected to retort sterilization, a soybean stuffy smell is usually caused by retort sterilization. However, the soybean stuffy smell due to retort sterilization is less likely to be perceived in those containing phenethyl acetate along with soybean protein. Thus, the composition of one aspect of the present invention can be used as a composition for suppressing a soybean stuffy smell due to retort sterilization by containing phenethyl acetate along with soybean protein. In addition, it is preferable that the composition of one aspect of the present invention be one having been subjected to putrefaction preventing treatment, such as sterilization treatment, in consideration of its preservation properties. It is preferable that the composition of one aspect of the present invention be a composition having been subjected to sterilization treatment under conditions usually employed in sterilizing food and seasonings, for example, a composition having been sterilized by heat at 100°C or lower, but it is preferable that the composition be a composition having been subjected to retort sterilization. Note that as described in Examples below, the effects of suppressing the soybean stuffy smell by phenethyl acetate can be demonstrated even when heated at 85°C for 5 minutes (Fo value: 0.00126).

The soybean protein is not particularly limited as long as it is a protein derived from soybean, and examples thereof include those produced by subjecting defatted soybeans after soybean oil extraction from soybeans to treatments such as concentration treatment and refining treatment. Soy milk and its concentrate also contain components other

than protein but may be used as soybean protein without refining or the like.

The form of soybean protein is not particularly limited, and examples thereof include granular, powder, lump, flake, bar, dice, and liquid, but granular and powdered forms, which are commonly used in food and seasonings, are preferred. The size of soybean protein is not limited, and for example, is about 5 mm to about 20 mm in long diameter. As the soybean protein, a commercially available product may be used, or one produced by a known method may be used. Examples of products commercially available as soybean protein include "New Soyme F 2010", "New Soyme S10", "New Soyme S11", "New Soyme S20F", "New Soyme S21F", "New Soyme S22F", "New Soyme S31B", "New Soyme S50", "New Comitex A-301", "New Comitex A-302", "New Comitex A-318", and "New Comitex A-320" (each of which is manufactured by The Nisshin OilliO Group, Ltd.), and "NEW FUJINIK 58", "NEW FUJINIK 59", "NEW FUJINIK AR", "NEW FUJINIK 61N", and "NEW FUJINIK BSN" (each of which is manufactured by Fuji Oil Co., Ltd.). For example, granular soybean protein can be produced by structuring and granulating a soybean extraction liquid into a dried structural form. For example, powdered soybean protein can be produced by separating and sterilizing the soybean extraction liquid, and then spray-drying it into powdered form. The soybean protein can be used alone or in combination of two or more of the above. Note that granular and powdered soybean proteins are used as stabilizers for deep-fried foods, *ganmodoki* (deep-fried tofu), sausage, *kamaboko* (steamed fish-paste cake), and as meat substitutes in the preparation of hamburgers, meatball, *gyoza* (Chinese dumplings stuffed with minced pork and vegetables), and *shumai* (steamed dumplings with dough gathered at the top), and the like.

Phenethyl acetate is, as usually known, a compound consisting of the structure shown in the above formula (I) .

The composition of one aspect of the present invention contains soybean protein, but the soybean stuffy smell due to retort sterilization is suppressed by containing phenethyl acetate. Therefore, the phenethyl acetate content in the composition of one aspect of the present invention may be an amount capable of suppressing the soybean stuffy smell due to retort sterilization. As described in Examples below, according to the examination made by the present inventors, the soybean stuffy smell due to retort sterilization is suppressed when a seasoning liquid containing soybean protein contains 1 ppb or more phenethyl acetate. Therefore, the lower limit of the phenethyl acetate content in the composition of one aspect of the present invention is 1 ppb or more based on the total amount of the composition.

If a seasoning composition containing soybean protein contains 1 ppb or more phenethyl acetate, the soybean stuffy smell due to retort sterilization is suppressed. However, since phenethyl acetate by itself has a rose aroma with an aroma threshold value of 3,000 ppb to 3,800 ppb, when the composition has a high phenethyl acetate content and specifically contains 1,000 ppb or more phenethyl acetate, it is not preferred because an undesired, foreign smell perceived when eating the seasoning composition is imparted thereto. Therefore, the upper limit of the phenethyl acetate content in the composition of one aspect of the present invention is less than 1,000 ppb based on the total amount of the composition.

As described above, the phenethyl acetate content in the composition of one aspect of the present invention is 1.0 ppb or more and less than 1,000 ppb, but in order to suppress soybean stuffy smell due to retort sterilization, preferably 2 ppb or more and less than 1,000 ppb, and more preferably 5 ppb or more and 500 ppb or less. Note that the term "1 ppb or more and less than 1,000 ppb phenethyl acetate" means, for example, 100 ng or more and less than 100,000 ng (= 100 $\mu$g) phenethyl acetate to 100 g of the seasoning composition.

In addition, as described in Examples below, the soybean stuffy smell due to retort sterilization is suppressed when a seasoning liquid containing soybean protein contains 10 ppb or more of phenethyl acetate to the soybean protein. Therefore, the phenethyl acetate content in the composition of one aspect of the present invention is preferably 10 ppb or more and less than 10,000 ppb to soybean protein, and in order to suppress the soybean stuffy smell due to retort sterilization, more preferably 20 ppb or more and less than 10,000 ppb to soybean protein, and further preferably 50 ppb or more and 5,000 ppb or less to soybean protein.

The soybean protein content is not particularly limited and can be set appropriately according to the desired flavor. When it is desired to impart a robust meat-like texture to processed food obtained by preparing ingredients using the composition of one aspect of the present invention, the soybean protein content is, for example, preferably 1.0% by mass or more, more preferably 5% by mass or more, and further preferably 10% by mass or more based on the total amount of the composition of one aspect of the present invention. The upper limit of the soybean protein content is not particularly limited, but is, for example, about 95% by mass or less based on the total amount of the composition of one aspect of the present invention.

Even when the composition of one aspect of the present invention contains soy sauce along with soybean protein, a soybean stuffy smell due to retort sterilization can be suppressed by containing phenethyl acetate. Since soy sauce can be used for seasoning various dishes and food, it is preferable that the composition of one aspect of the present invention contains soy sauce.

In addition, as described in Examples below, the soybean stuffy smell due to retort sterilization is suppressed when a seasoning liquid containing soy sauce and soybean protein contains 10 ppb or more of phenethyl acetate to the soy sauce. Therefore, the phenethyl acetate content in the composition of one aspect of the present invention is preferably 10 ppb or more and less than 10,000 ppb to soy sauce, and in order to suppress the soybean stuffy smell due to retort

sterilization, more preferably 20 ppb or more and less than 10,000 ppb to soy sauce, and further preferably 50 ppb or more and 5,000 ppb or less to soy sauce.

The soy sauce content is not particularly limited and can be set appropriately according to the desired flavor. When it is desired to impart a robust soy sauce flavor to processed food obtained by preparing ingredients using the composition of one aspect of the present invention, the soy sauce content is, for example, preferably 0.1% by mass or more, more preferably 1.0% by mass or more, further preferably 5% by mass or more, and even more preferably 10% by mass or more based on the total amount of the composition of one aspect of the present invention. The upper limit of the soy sauce content is not particularly limited, but is, for example, about 90% by mass or less based on the total amount of the composition of one aspect of the present invention.

In the following, a composition containing soybean protein, soy sauce, and phenethyl acetate, which is a suitable aspect of the composition of one aspect of the present invention, is described by way of examples.

The composition of one aspect of the present invention can contain, in addition to soybean protein, soy sauce, and phenethyl acetate, other components. Other components can be referred to the description above of other components in an aspect mainly containing the soy sauce and phenethyl acetate. However, soybean protein is excluded from the ingredients.

The action of suppressing the soybean stuffy smell due to retort sterilization of the composition of one aspect of the present invention refers to the action of completely or partially suppressing the soybean stuffy smell perceived when a composition containing the same amount of soy sauce and soybean protein but not phenethyl acetate is subjected to retort sterilization. The action of suppressing the soybean stuffy smell due to retort sterilization of the composition of one aspect of the present invention can be checked by a method described in Examples below. The action of suppressing the soybean stuffy smell due to heat sterilization of the composition of one aspect of the present invention refers to the action of completely or partially suppressing the soybean stuffy smell perceived when a composition containing the same amount of soy sauce and soybean protein but not phenethyl acetate is subjected to heat sterilization. The action of suppressing the soybean stuffy smell due to heat sterilization of the composition of one aspect of the present invention can be checked by a method described in Examples below.

The method of producing the composition of one aspect of the present invention is not particularly limited, and examples thereof include a method of producing a seasoning by mixing each component as usually known, and specifically include a method including mixing soybean protein, soy sauce, phenethyl acetate, and other components, if necessary, by subjecting them to mixing means such as stirring treatment under room temperature or heated temperature. Soybean protein and other components may be pretreated by subjecting them to treatment such as shredding, milling, swelling, and heating.

Cooked food obtained by using the composition of one aspect of the present invention is not particularly limited, and examples thereof include Niku Tofu (simmered meat with tofu), Buta Kimuchi (stir-fried pork and Kimchi), Tori Daikon (simmered chicken and white radish), Niku-jaga (stewed meat and potato), Soboro Ankake (Japanese broth and minced meat sauce), Mizore-itame (stir-fried grated radish), Mizore-ni (simmered grated-white radish), omelets, stir-fried meat and vegetable, Nimono (simmered dish), and Goya Chanpuru (bitter melon stir fry), which are prepared using soybean protein instead of meat.

The processed food of one aspect of the present invention contains the composition of one aspect of the present invention and ingredients such as vegetables, spicy vegetables, mushrooms, fruits, nuts and seeds, meat, seafood, seaweed, eggs, processed meat product, and processed food as raw materials. The processed food of one aspect of the present invention has an excellent flavor, in which the soybean stuffy smell due to retort sterilization derived from soybean protein and soy sauce is suppressed by being prepared with the composition of one aspect of the present invention.

According to another side of the present invention, in view of the fact that phenethyl acetate suppresses the soybean stuffy smell due to retort sterilization, provided are a composition for suppressing the soybean stuffy smell due to retort sterilization derived from soy sauce and soybean protein, containing 1 ppb or more and less than 1,000 ppb phenethyl acetate as an active component; a method for suppressing the soybean stuffy smell due to retort sterilization of a seasoning composition containing soy sauce and soybean protein, including a step of adding 1 ppb or more and less than 1,000 ppb phenethyl acetate to the seasoning composition containing soy sauce and soybean protein, and the like.

Other items of an aspect mainly containing soybean protein and phenethyl acetate can be referred to the description of each item in an aspect mainly containing the soy sauce and phenethyl acetate.

[4. Aspect Mainly Containing Animal Meat and Phenethyl Acetate]

When food and seasonings containing meat are subjected to heat sterilization, they usually produce unpleasant smells combining a grass smell of grass-fed beef, an animal smell of pork, an oxidized smell, a bloody smell (iron smell), and a raw smell; and unpleasant smells of meat such as a broiler smell of chicken, resulting in reduced umami of meat.

However, the unpleasant smells of meat are less likely to be perceived in those containing phenethyl acetate along with meat, rather a fine meat aroma is perceived, and the umami of meat is increased, even if they are subjected to heat sterilization. The action of phenethyl acetate is increased when combined with alanine. Thus, the composition of one aspect of the present invention can be used as a container-packed composition for improving a meat flavor by containing phenethyl acetate or phenethyl acetate and alanine along with meat.

Meat is not particularly limited as long as it is edible meat, and examples thereof include meat from animals such as cattle, pig, chicken, sheep, goat, horse, reindeer, buffalo, yak, camel, donkey, mule, rabbit, duck, turkey, guinea fowl, goose, quail, and rock pigeon. However, meat from cattle, pig, or the like and poultry meat such as chicken, which are commonly used in Japan, are preferred, and beef, pork, and chicken meat easily generating unpleasant smells due to heat sterilization are more preferred. Meat preservation conditions are not particularly limited, and any raw meat, refrigerated meat, frozen meat, dried meat, or the like can be used. In addition, meat may also be processed by heating these products, such as stir-frying, baking, and simmering. The form of meat is not particularly limited, and any ground meat, thinly sliced meat, a chunk of meat, or the like can be used. The meat can be used alone or in combination of two or more of the above.

In general, meat from imported grass-fed cattle raised on grass is reported to have a grass smell and inferior meat flavor compared to meat from grain-fed Wagyu and domestic cattle. However, when the composition of one aspect of the present invention is used, the grass smell is less likely to be perceived in imported grass-fed beef, and the umami of the meat is further perceived, resulting in a flavor as if it were Wagyu beef. In addition, when the composition of one aspect of the present invention is used, the favorable aroma of Wagyu beef itself becomes more obvious, and the umami of meat is even better. Thus, when the meat is beef, the beef used may be any of Wagyu, domestic, or imported beef, but is preferably imported beef and more preferably imported grass-fed beef since they are easier to obtain due to its large quantity and low cost in the market.

Seafood is not particularly limited as long as it is seafood having edible parts as fish meat, examples thereof include saltwater fish such as sardine, bonito, yellowtail, Japanese amberjack, greater amberjack, yellowtail amberjack, sea bream, tuna, blowfish, flounder, horse mackerel, mackerel, grouper, longtooth grouper, salmon; freshwater fish such as ayu, char, eel, landlocked salmon, and Japanese smelt; mollusks such as scallop, turban shell, mirugai clam, ark shell, squid, and octopus; and crustaceans such as shrimp and crab, but seawater fish such as sardine, bonito, yellowtail, Japanese amberjack, greater amberjack, sea bream, and tuna easily generating raw smells are preferred for dried or edible raw product. The seafood may be an edible portion of fish meat, and any raw fish meat, refrigerated fish meat, frozen fish meat, dried fish meat, or the like can be used as fish meat. In addition, the seafood may also be processed by heating these products, such as stir-frying, baking, and simmering. The seafood can be used alone or in combination of two or more of the above.

Phenethyl acetate is, as usually known, a compound consisting of a structure shown in the above formula (I).

The phenethyl acetate content may be an amount capable of demonstrating an improving action on the animal meat flavor. As described in Examples below, according to the examination made by the present inventors, the animal meat flavor is improved when a seasoning liquid containing animal meat contains 1 ppb or more phenethyl acetate. Therefore, the lower limit of the phenethyl acetate content is 1 ppb based on the total amount of the composition.

On the other hand, phenethyl acetate has a rose-like aroma by itself, and its aroma threshold value is estimated at 3,000 ppb to 3,800 ppb. Therefore, when a composition has a high phenethyl acetate content and specifically contains more than 3,000 ppb phenethyl acetate, it is not preferred because an undesired, foreign, floral-like aroma is imparted to the composition when consumed. Hence, the upper limit of the phenethyl acetate content is about 2,000 ppb and specifically less than 1,500 ppb, which is an amount less than 3,000 ppb based on the total amount of the composition.

In consideration of the lower and upper limits of phenethyl acetate above, the phenethyl acetate content is 1.0 ppb or more and less than 1,500 ppb, and in order to demonstrate a better improving action on the animal meat flavor, preferably 10 ppb or more and less than 1,500 ppb, more preferably 20 ppb or more and less than 1,500 ppb, and further preferably 20 ppb to 1,000 ppb. Note that the term "1 ppb or more and less than 1,500 ppb phenethyl acetate" means, for example, 100 ng or more and less than 150,000 ng (= 150 $\mu$g) phenethyl acetate to 100 g of the composition.

According to the examination made by the present inventors, for example, heat sterilization under pressure at 121.1°C for 10 minutes (Fo value: 10) decomposes phenethyl acetate, and about 20% thereof decomposes. Therefore, it is preferable that the above range of phenethyl acetate content be the amount before heat sterilization. When the phenethyl acetate content is measured for composition after heat sterilization, even if a value below the above range is identified (for example, when the phenethyl acetate content is 0.8 ppb in the composition after the heat sterilization under pressure), the phenethyl acetate content may be considered to be within the above range by analogous application of the value before heat sterilization.

In addition, the animal meat flavor is improved when phenethyl acetate is contained at 5 ppb or more to animal meat. Therefore, the phenethyl acetate content is preferably 5 ppb or more and less than 7,500 ppb to animal meat, and in order to demonstrate a better improving action on the animal meat flavor, more preferably 50 ppb or more and less than 7,500 ppb to animal meat, further preferably 100 ppb or more and less than 7,500 ppb to animal meat, and

even more preferably 100 ppb to 5,000 ppb to animal meat.

Alanine is alanine which is an amino acid as usually known. Alanine may be D-alanine, L-alanine, or any of their racemate.

The alanine content may be an amount capable of demonstrating an improving action on the animal meat flavor. As described in Examples below, according to the examination made by the present inventors, the animal meat flavor is improved when a seasoning liquid containing animal meat contains 0.1 mg/g or more alanine. Therefore, the lower limit of the alanine content is 0.1 mg/g based on the total amount of the composition.

On the other hand, alanine has a sweet taste by itself. Therefore, the upper limit of the alanine content is an amount that does not impart an undesired sweet taste to the composition, and specifically an amount less than 65 mg/g based on the total amount of the composition.

In consideration of the lower and upper limits of alanine above, the alanine content is 0.1 mg/g or more and less than 65 mg/g, and in order to demonstrate a better improving action on the animal meat flavor, preferably 0.2 mg/g to 50 mg/g, more preferably 0.5 mg/g to 30 mg/g, further preferably 0.6 mg/g to 20 mg/g. Note that the term "0.1 mg/g or more and less than 65 mg/g alanine" means, for example, 10 mg or more and less than 6,500 mg (= 6.5 g) alanine to 100 g of the composition. However, the alanine content does not include the amount of alanine contained in animal meat.

Since there is a possibility that alanine may also be decomposed by heat sterilization, it is preferable that the above range of alanine content be the amount before heat sterilization. When the alanine content is measured for the composition after heat sterilization, even if a value below the above range is identified, the alanine content may be considered to be within the above range by analogous application of the value before heat sterilization.

In addition, the animal meat flavor is improved when alanine is contained at 0.5 mg/g or more to animal meat. Therefore, the alanine content is preferably 0.5 mg/g or more and less than 325 mg/g to animal meat, and in order to demonstrate a better improving action on the animal meat flavor, preferably 1.0 mg/g to 250 mg/g, more preferably 2.5 mg/g to 150 mg/g, and further preferably 3 mg/g to 100 mg/g to animal meat.

The animal meat content is not particularly limited and can be set appropriately according to the desired flavor. When it is desired to impart a robust animal meat texture and flavor to a processed food obtained by preparing ingredients using the composition of one aspect of the present invention, the animal meat content is, for example, preferably 1.0% by mass or more, more preferably 10% by mass or more, and further preferably 20% by mass or more based on the total amount of the composition. The upper limit of the animal meat content is not particularly limited, but is, for example, about 95% by mass or less based on the total amount of the composition of one aspect of the present invention.

Even when the composition of one aspect of the present invention contains soy sauce along with animal meat, an animal meat flavor can be improved by containing phenethyl acetate. Since soy sauce can be used for seasoning various dishes and food, it is preferable that the composition of one aspect of the present invention contains soy sauce.

Soy sauce is not particularly limited as long as it is described as shoyu or the like and is generally known, but koikuchi shoyu (regular soy sauce) and usukuchi shoyu (light-colored soy sauce) are preferred in order to impart a robust soy sauce flavor to ingredients. Note that soy sauce obtained by a brewing process usually contains alanine. For example, according to the Standard Tables of Food Composition in Japan 2015 (Seventh Revised Version), the amount of alanine in different types of soy sauce is indicated as 420 mg/100 g for koikuchi shoyu (regular soy sauce) and 270 mg/100 g for usukuchi shoyu (light-colored soy sauce). Examples of soy sauce obtained by a brewing process include soy sauce produced by obtaining a soy sauce koji by inoculating a seed koji starter including a koji mold into a mixture of a protein raw material such as soybeans denatured by heating and a starch raw material such as wheat pregelatinized by heating, followed by culturing to make koji, and subsequently obtaining a soy sauce moromi by putting the obtained soy sauce koji into a saline solution, followed by lactic acid fermentation and aging, and subsequently obtaining an aged moromi by subjecting the obtained soy sauce moromi to yeast fermentation and aging, and subsequently obtaining an unheated soy sauce by subjecting the obtained aged moromi to a pressing treatment or a filtration treatment, and subsequently heating the obtained unheated soy sauce or the like.

The form of soy sauce is not particularly limited and may be either liquid or solid such as powder and granules. The soy sauce can be used alone or in combination of two or more of the above. In order to have a flavor inherent in soy sauce, for example, the soy sauce preferably has a HEMF content of 20 ppm or more and more preferably has a HEMF content of 30 ppm or more. Note that soy sauce obtained by the brewing process usually contains a 20 ppm or more HEMF. For example, usukuchi shoyu (light-colored soy sauce) has a HEMF content of 20 ppm or more, and koikuchi shoyu (regular soy sauce) has a HEMF content of 30 ppm or more.

In addition, as described in Examples below, the animal meat flavor is improved when a seasoning liquid containing soy sauce and animal meat contains 10 ppb or more of phenethyl acetate to soy sauce. Therefore, the phenethyl acetate content is preferably 10 ppb or more and less than 15,000 ppb to soy sauce, and in order to demonstrate a better improving action on the animal meat flavor, more preferably 20 ppb or more and less than 15,000 ppb to soy sauce, further preferably 50 ppb or more and less than 15,000 ppb to soy sauce, and even more preferably 50 ppb to 10,000 ppb to soy sauce.

Furthermore, as described in Examples below, the animal meat flavor is improved when a seasoning liquid

containing phenethyl acetate, soy sauce, and animal meat contains 1 mg/g or more of alanine to soy sauce. Therefore, the alanine content is preferably 1 mg/g or more and less than 650 mg/g to soy sauce, and in order to demonstrate a better improving action on the animal meat flavor, more preferably 2 mg/g to 500 mg/g to soy sauce, further preferably 5 mg/g to 300 mg/g to soy sauce, even more preferably 6 mg/g to 200 mg/g to soy sauce.

As phenethyl acetate and alanine, phenethyl acetate itself and alanine itself may be used, or a phenethyl acetate-containing material that contains phenethyl acetate and an alanine-containing material that contains alanine may be used. When phenethyl acetate itself and alanine itself are used, a product commercially available as a flavoring agent and a food additive can be used.

The phenethyl acetate-containing material may contain alanine. Thus, the phenethyl acetate-containing material may be used as an alanine-containing material. In addition, soy sauce obtained by a usual brewing process does not contain phenethyl acetate but contains alanine. Therefore, soy sauce obtained by a usual brewing process may be used as an alanine-containing material.

When phenethyl acetate-containing soy sauce is used, soy sauce in the composition of one aspect of the present invention may be phenethyl acetate-containing soy sauce or a mixed soy sauce of usual soy sauce and phenethyl acetate-containing soy sauce.

The soy sauce content is not particularly limited and can be set appropriately according to the desired flavor. When it is desired to impart a robust soy sauce flavor to processed food obtained by preparing ingredients using the composition of one aspect of the present invention, the soy sauce content is, for example, preferably 0.1% by mass or more, more preferably 1.0% by mass or more, further preferably 5% by mass or more, and even more preferably 10% by mass or more based on the total amount of the composition. The upper limit of the soy sauce content is not particularly limited, but is, for example, about 90% by mass or less based on the total amount of the composition.

In the following, a composition containing animal meat, soy sauce, and phenethyl acetate, which is a suitable aspect of the composition of one aspect of the present invention, is described by way of examples.

The composition of one aspect of the present invention can contain, in addition to animal meat, soy sauce, and phenethyl acetate, other components. Other components can be referred to the description above of other components in an aspect mainly containing the soy sauce and phenethyl acetate. However, animal meat is excluded from the ingredients.

The improving action on the animal meat flavor of the composition of one aspect of the present invention may be, for example, action in which an improved animal meat flavor is perceived as compared to a composition containing the same amount of animal meat but not phenethyl acetate or alanine (control) when filled into an aluminum pouch and subjected to heat sterilization at 85°C or 90°C for 5 minutes, and is preferably action in which the improved animal meat flavor is perceived as compared to a composition containing the same amount of animal meat and soy sauce but not phenethyl acetate.

The improving action on the animal meat flavor can be checked by a method described in Examples below. For example, in this action, when the animal meat is grass-fed beef, sensory evaluation is carried out on evaluation items "Wagyu beef aroma", "umami of meat", and "grass smell", and at least one evaluation result, preferably two evaluation results, and more preferably all three evaluation results selected from the group consisting of the following groups are obtained: "Wagyu beef aroma" is strongly perceived; "umami of meat" is strongly perceived; and "grass smell" is weakly perceived, compared to a control.

In addition, it is preferable that the composition of one aspect of the present invention be one having been subjected to sterilization treatment such as heat sterilization in consideration of its preservation properties, and it is more preferable that the composition has been subjected to heat sterilization under conditions usually employed in sterilizing food and seasonings. The heat sterilization may be performed at a temperature, pressure, and time that allow sterilization for long-term preservation. Although it is not particularly limited, examples thereof include heat sterilization performed under normal pressure or under pressure, preferably under normal pressure at 130°C or lower for 1 minute to 30 minutes. Specific examples thereof include heat sterilization performed at 60°C to 95°C and preferably 80°C to 90°C for about 1 to 20 minutes and preferably for about 5 minutes (hereinafter also referred to as the non-retort sterilization); and heat sterilization performed at 100°C to 130°C and preferably about 121.1°C for 4 minutes to 20 minutes and preferably for about 10 minutes (hereinafter also referred to as the retort sterilization). Note that for sterilization treatment of the composition of one aspect of the present invention, any of the following methods can be employed: mixing animal meat, soy sauce, phenethyl acetate, and other components and then subjecting them to sterilization treatment; mixing animal meat, soy sauce, and other components, then subjecting them to sterilization treatment, and mixing this with phenethyl acetate having been subjected to sterilization treatment in advance; and mixing animal meat, soy sauce, phenethyl acetate, and other components having been independently subjected to sterilization treatment in advance; or the like.

Since the composition of one aspect of the present invention can suppress the deterioration of animal meat flavor due to heat sterilization and thus suppress the deterioration of animal meat flavor due to cooking, the processed food of one aspect of the present invention may be cooked food. In the following, processed food obtained by using the composition of one aspect of the present invention is described by way of examples of cooked food, but processed food

is not limited to cooked food.

The method of cooking by using the composition of one aspect of the present invention is not particularly limited, but since the deterioration of an animal meat flavor due to cooking may be pronounced in stir-fry cooking, which is heated at a higher temperature, it is preferable that the composition of one aspect of the present invention be used in stir-fry cooking.

The processed food of one aspect of the present invention contains the composition of one aspect of the present invention and ingredients such as vegetables, spicy vegetables, mushrooms, fruits, nuts and seeds, seaweed, eggs, processed meat product, and processed food as raw materials. The processed food of one aspect of the present invention has an excellent flavor, in which the animal meat flavor derived from animal meat and soy sauce is improved by being prepared with the composition of one aspect of the present invention.

According to another side of the present invention, in view of the improving action on the animal meat flavor that phenethyl acetate has, provided are a flavor improving composition for animal meat containing phenethyl acetate as an active component; and a method for improving an animal meat flavor including a step of mixing animal meat with phenethyl acetate so that the mixture has a phenethyl acetate content of 1 ppb or more and less than 1,500 ppb, to improve the animal meat flavor.

According to another side of the present invention, in view of the improving action on the animal meat flavor that phenethyl acetate and alanine have, provided are a flavor improving composition for animal meat containing phenethyl acetate and alanine as active components; and a method for improving an animal meat flavor including a step of mixing animal meat with phenethyl acetate and alanine so that the mixture has a phenethyl acetate content of 1 ppb or more and less than 1,500 ppb and an alanine content of 0.1 mg/g or more and less than 65 mg/g, to improve the animal meat flavor.

According to a flavor improving composition for animal meat and a method for improving an animal meat flavor, it is possible to improve animal meat flavors, such as raw smells and umami, for edible raw animal meat such as beef sashimi (sliced raw beef), horse meat sashimi (sliced raw horse meat), chicken sashimi (sliced raw chicken), fish sashimi (sliced raw fish), and sushi, which are not subjected to heat sterilization.

Other items of an aspect mainly containing animal meat and phenethyl acetate can be referred to the description of each item in an aspect mainly containing the soy sauce and phenethyl acetate.

Hereinafter, the present invention is described in more detail by Examples, but the present invention is not limited to these Examples, and the present invention can take various aspects as long as the object of the present invention can be achieved.

## Example 1

### Example 1 Evaluation of Suppression of Retort Smell by Phenethyl Acetate (1)

#### [1-1. Preparation of Liquid Seasoning]

In a 100 ml volumetric flask, 1 g of phenethyl acetate with a purity of 98% (Sigma-Aldrich) was placed and diluted with 95% ethanol to prepare a phenethyl acetate stock solution (1 g/100 ml). Subsequently, a phenethyl acetate solution to be added to each test seasoning was unified to 100 μl, and the phenethyl acetate stock solution was diluted with water so that the phenethyl acetate content to soy sauce was at a predetermined concentration to prepare each phenethyl acetate solution.

Each test seasoning liquid was prepared by mixing soy sauce with phenethyl acetate solution in the blending amount shown in the following Table 1A. Note that the soy sauce used was "Kikkoman Tokusen Marudaizu Shoyu" (HEMF: 30 ppm or more; Kikkoman Corporation), in which phenethyl acetate was not detected.

The thus prepared test seasoning liquid was filled in an amount of 100 g into an aluminum pouch. This was subjected to retort sterilization (at 121.1°C for 10 minutes (Fo value: 10)).

[Table 1A]

| | Test seasoning liquid 1 | Test seasoning liquid 2 | Test seasoning liquid 3 | Test seasoning liquid 4 | Test seasoning liquid 5 |
|---|---|---|---|---|---|
| Soy sauce | 100 g | 100 g | 100 g | 100 g | 100 g |
| Phenethyl acetate solution | 0 μl | 100 μl | 100 μl | 100 μl | 100 μl |
| Total | 100 g | 100 g | 100 g | 100 g | 100 g |
| Phenethyl acetate concentration (to soy sauce) | 0 ppb | 2 ppb | 5 ppb | 10 ppb | 20 ppb |

| | Test seasoning liquid 6 | Test seasoning liquid 7 | Test seasoning liquid 8 | Test seasoning liquid 9 |
|---|---|---|---|---|
| Soy sauce | 100 g | 100 g | 100 g | 100 g |
| Phenethyl acetate solution | 100 μl | 100 μl | 100 μl | 100 μl |
| Total | 100 g | 100 g | 100 g | 100 g |
| Phenethyl acetate concentration (to soy sauce) | 50 ppb | 100 ppb | 500 ppb | 1000 ppb |

[1-2 Sensory Evaluation Method]

Panelists (3 persons from A to C) with an excellent ability to sniff out a retort smell were asked to take a spoonful of test seasoning liquids 1 to 9 having been subjected to retort sterilization at ambient temperature and evaluate the intensity of the retort smell (an unpleasant smell such as a heated smell and an oxidized smell, remarkably caused when soy sauce sealed in a retort pouch was subjected to the heat sterilization treatment under pressure), which comes up from the inside of the mouth to the nose when consumed, at five levels, as follows. At that time, as evaluation criteria, the retort smell of the test seasoning liquid 1 having been subjected to retort sterilization was rated as 1, the retort smell of the test seasoning liquid 1 after heat treatment by reaching a temperature of 85°C was rated as 5. Note that the panelists (training period: 10 to 20 years) were trained to discuss and evaluate the retort smell before carrying out the sensory test. Specifically, characteristics of the retort smell were discussed and reconciled among the panelists to ensure that each panelist had a common understanding thereof. In addition, in order to ensure the validity of the sensory test, the panelists were trained for evaluation using several test seasoning liquids, and the reproducibility of the evaluation by each panelist was checked. After these procedures, the panelists were used to evaluate the retort smell of each test seasoning liquid.

1: very strongly perceived
2: perceived
3: slightly perceived
4: almost not perceived
5: not perceived

[1-3 Results of Sensory Evaluation]

Sensory evaluation was carried out on test seasoning liquids 1 to 9 containing phenethyl acetate after retort sterilization. Results are shown in Table 2A.

[Table 2A]

| | Test seasoning liquid 1 | Test seasoning liquid 2 | Test seasoning liquid 3 | Test seasoning liquid 4 | Test seasoning liquid 5 |
|---|---|---|---|---|---|
| Phenethyl acetate concentration (to soy sauce) | 0 ppb | 2 ppb | 5 ppb | 10 ppb | 20 ppb |
| Panelist A | 1 | 2 | 3 | 4 | 4 |

| | | | | | |
|---|---|---|---|---|---|
| Panelist B | 1 | 2 | 3 | 3 | 4 |
| Panelist C | 1 | 3 | 3 | 3 | 4 |
| Average | 1.0 | 2.3 | 3.0 | 3.3 | 4.0 |

| | Test seasoning liquid 6 | Test seasoning liquid 7 | Test seasoning liquid 8 | Test seasoning liquid 9 |
|---|---|---|---|---|
| Phenethyl acetate concentration (to soy sauce) | 50 ppb | 100 ppb | 500 ppb | 1000 ppb |
| Panelist A | 5 | 5 | 5 | 5 |
| Panelist B | 5 | 5 | 5 | 5 |
| Panelist C | 5 | 5 | 5 | 5 |
| Average | 5.0 | 5.0 | 5.0 | 5.0 |

As shown in Table 2A, the retort smell was strongly perceived in the test seasoning liquid 1 without phenethyl acetate. However, it was found that the retort smell could be suppressed in a concentration-dependent manner by containing phenethyl acetate. According to the results described in Table 2A, it was found that the retort smell could be suppressed by containing 5 ppb or more of phenethyl acetate, further suppressed by containing 20 ppb or more of phenethyl acetate, and remarkably suppressed by containing 50 ppb or more of phenethyl acetate.

However, phenethyl acetate has a rose aroma by itself. When the test seasoning liquid 9 containing 1,000 ppb phenethyl acetate was used, the retort smell could be suppressed, but a slightly foreign flavor was perceived. Therefore, it was found that a phenethyl acetate content of less than 1,000 ppb was preferred.

From the above results, it was found that the concentration of phenethyl acetate in the retort liquid seasonings containing soy sauce was preferably in the range of 5 ppb or more and less than 1,000 ppb in order to suppress the retort smell and not to impart a foreign flavor derived from the phenethyl acetate aroma to the liquid seasonings.

## Example 2 Evaluation of Suppression of Retort Smell by Phenethyl Acetate (2)

[2-1. Preparation of Liquid Seasoning]

In the same manner as in Example 1, each test seasoning liquid was prepared by mixing soy sauce, sugar, kelp extract, and phenethyl acetate solution in the blending amount shown in the following Table 3A and adjusting with water to make 100 g in total, and then subjected to retort sterilization (at 121.1°C for 10 minutes (Fo value: 10)). Note that the kelp extract used was "Kobukon Hidaka P" (Kikkoman Corporation).

[Table 3A]

| | Test seasoning liquid 10 | Test seasoning liquid 11 | Test seasoning liquid 12 |
|---|---|---|---|
| Soy sauce | 10.0 g | 10.0 g | 10.0 g |
| Sugar | 5.0 g | 5.0 g | 5.0 g |
| Kelp extract | 0.1 g | 0.1 g | 0.1 g |
| Water | Residue | Residue | Residue |
| Phenethyl acetate solution | 0 μl | 100 μl | 100 μl |
| Total | 100 g | 100 g | 100 g |
| Phenethyl acetate concentration (to test seasoning liquid) | 0 ppb | 2 ppb | 100 ppb |
| Phenethyl acetate concentration (to soy sauce) | 0 ppb | 20 ppb | 1000 ppb |

[2-2 Results of Sensory Evaluation]

In the same manner as in Example 1, sensory evaluation was carried out on each of the test seasoning liquids 10 to 12 after retort sterilization. Results are shown in Table 4A.

[Table 4A]

| | Test seasoning liquid 10 | Test seasoning liquid 11 | Test seasoning liquid 12 |
|---|---|---|---|
| Phenethyl acetate concentration (to test seasoning liquid) | 0 ppb | 2 ppb | 100 ppb |
| Phenethyl acetate concentration (to soy sauce) | 0 ppb | 20 ppb | 1000 ppb |
| Panelist A | 1 | 5 | 5 |
| Panelist B | 1 | 5 | 5 |
| Panelist C | 1 | 5 | 5 |
| Average | 1.0 | 5.0 | 5.0 |

As shown in Table 4A, it was found that the retort smell could be suppressed by containing phenethyl acetate, even when other seasoning components such as sugar, kelp extract, and water were contained in addition to soy sauce.

It was also found that the phenethyl acetate content in the seasoning liquids could be reduced according to the soy sauce content. Based on the results of Example 1, it was found that the phenethyl acetate content in the total seasoning liquid should be 0.5 ppb or more.

Example 3 Cooked Test with Test Seasoning Liquid

[3-1. Preparation of Liquid Seasoning]

In the same manner as in Example 1, each test seasoning liquid was prepared by mixing ground beef, sugar, water, soy sauce, and phenethyl acetate solution in the blending amount shown in the following Table 5A. However, in the test seasoning 13, all components were mixed, filled into an aluminum pouch, and subjected to retort sterilization (at 121.1°C, for 10 minutes (Fo value: 10)). In test seasoning liquids 14 to 17, ingredients of dish consisting of ground beef, sugar, and water; and soy sauce and phenethyl acetate solution were separately filled into two aluminum pouches. The aluminum pouch filled with soy sauce and phenethyl acetate solution of the test seasoning liquid 17 was subjected to non-retort sterilization (at 85°C for 5 minutes (Fo value: 0.00126)) while the other aluminum pouch of test seasoning liquids 14 to 16 was subjected to retort sterilization.

[Table 5A]

| | | Test seasoning liquid 13 | Test seasoning liquid 14 | Test seasoning liquid 15 | Test seasoning liquid 16 | Test seasoning liquid 17 |
|---|---|---|---|---|---|---|
| Ingredient of side dish | Ground beef | 20.0 g | 20.0 g | 20.0 g | 20.0 g | 20.0 g |
| | Sugar | 5.0 g | 5.0 g | 5.0 g | 5.0 g | 5.0 g |
| | Water | Residue | Residue | Residue | Residue | Residue |
| Soy sauce | Soy sauce | 10.0 g | 10.0 g | 10.0 g | 10.0 g | 10.0 g |
| | Phenethyl acetate solution | 0 μl | 100 μl | 100 μl | 0 μl | 0 μl |
| | Total | 100 g | 100 g | 100 g | 100 g | 100 g |
| Packaging/ sterilizing method | Ingredient of side dish | - | Retort | Retort | Retort | Retort |
| | Soy sauce | - | Retort | Retort | Retort | Non-retort |
| | One package | Retort | - | - | - | - |

(continued)

| | | Test seasoning liquid 13 | Test seasoning liquid 14 | Test seasoning liquid 15 | Test seasoning liquid 16 | Test seasoning liquid 17 |
|---|---|---|---|---|---|---|
| | Phenethyl acetate concentration (to test seasoning liquid) | 0 ppb | 2 ppb | 100 ppb | 0 ppb | 0 ppb |
| | Phenethyl acetate concentration (to ground | 0 ppb | 10 ppb | 500 ppb | 0 ppb | 0 ppb |
| beef) | | | | | | |
| Phenethyl acetate concentration (to soy sauce) | 0 ppb | 20 ppb | 1000 ppb | 0 ppb | | 0 ppb |

[3-2. Cooking with Liquid Seasoning]

Niku Tofu (simmered meat with tofu) was prepared using test seasoning liquids 13 to 17. Specifically, tofu was drained and cut into bite-sized pieces. Subsequently, a frying pan with 1 teaspoon of vegetable oil was heated, and tofu was roasted on both sides over medium heat for 3 to 4 minutes. The test seasoning liquids were added to this frying pan and stir-fried together over medium heat for 1 minute to obtain the Niku Tofu (simmered meat with tofu).

[3-3 Sensory Evaluation Method]

The intensity of the retort smell when Niku Tofu (simmered meat with tofu) was consumed in the same manner as in 1-2 above was evaluated at five levels with respect to the obtained Niku Tofu (simmered meat with tofu). At that time, as evaluation criteria, the retort smell of the obtained Niku Tofu (simmered meat with tofu) using the test seasoning liquid 17 was rated as 5, and the retort smell of the obtained Niku Tofu (simmered meat with tofu) using the test seasoning liquid 16 was rated as 1. Note that in evaluating the retort smell of the Niku Tofu (simmered meat with tofu), the characteristics and intensity were reconciled in advance among the panelists in the same manner as in Example 1, and the reproducibility of the evaluation was checked before the evaluation was carried out.

[3-4 Results of Sensory Evaluation]

Sensory evaluation of cooked Niku Tofu (simmered meat with tofu) was carried out using the test seasoning liquids 13 to 17. Results are shown in Table 6A.

[Table 6A]

| | Test seasoning liquid 13 | Test seasoning liquid 14 | Test seasoning liquid 15 | Test seasoning liquid 16 | Test seasoning liquid 17 |
|---|---|---|---|---|---|
| Phenethyl acetate concentration (to test seasoning liquid) | 0 ppb | 2 ppb | 100 ppb | 0 ppb | 0 ppb |
| Phenethyl acetate concentration (to ground beef) | 0 ppb | 10 ppb | 500 ppb | 0 ppb | 0 ppb |
| Phenethyl acetate concentration (to soy sauce) | 0 ppb | 20 ppb | 1000 ppb | 0 ppb | 0 ppb |
| Panelist A | 2 | 5 | 5 | 1 | 5 |
| Panelist B | 2 | 5 | 5 | 1 | 5 |
| Panelist C | 1 | 5 | 5 | 1 | 5 |

(continued)

| | Test seasoning liquid 13 | Test seasoning liquid 14 | Test seasoning liquid 15 | Test seasoning liquid 16 | Test seasoning liquid 17 |
|---|---|---|---|---|---|
| Average | 1.7 | 5.0 | 5.0 | 1.0 | 5.0 |

As shown in Table 6A, when the test seasoning liquids 13 and 16 packed with aluminum pouch and containing soy sauce but not phenethyl acetate were subjected to retort sterilization, the resulting Niku Tofu (simmered meat with tofu) was inferior in quality as Niku Tofu (simmered meat with tofu) due to the retort smell. In contrast, in the Niku Tofu (simmered meat with tofu) obtained using the test seasoning liquids 14 and 15, in which aluminum pouches containing phenethyl acetate along with soy sauce were subjected to retort sterilization, no retort smell, no bitter taste, and the aroma inherent in the meat were perceived, and therefore it was delicious, combined with a clean soy sauce taste.

Thus, it was found that the cooked product obtained by using the liquid seasoning with the suppressed retort smell did not have a retort smell and had an excellent fragrance as prepared food, resulting in good quality.

Example 4 Evaluation of Suppression of Retort Smell by Phenethyl Acetate (3)

[4-1. Preparation of Liquid Seasoning]

In the same manner as in Example 1, each test seasoning liquid was prepared by mixing soy sauce and phenethyl acetate solution in the blending amount shown in the following Table 7A. The thus obtained test seasoning liquids were sterilized under six heat sterilization conditions with temperature, time, and Fo values as shown in the following Table 8A.

[Table 7A]

| | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
|---|---|---|---|---|---|---|---|
| Soy sauce | 100 g | 100 g | 100 g | 100 g | 100 g | 100 g | 100 g |
| Phenethyl acetate solution | 0 μl | 100 μl | 100 μl | 100 μl | 100 μl | 100 μl | 100 μl |
| Total | 100 g | 100 g | 100 g | 100 g | 100 g | 101g | 102 g |
| Phenethyl acetate concentration (to Soy sauce) | 0 ppb | 1 ppb | 20 ppb | 30 ppb | 50 ppb | 500 ppb | 1000 ppb |

[4-2 Results of Sensory Evaluation]

In the same manner as in Example 1, sensory evaluation was carried out on each of the test seasoning liquids 18 to 24 after heat sterilization. Results are shown in Table 8A.

[Table 8A]

| (1) 121.1°C for 10 minutes, Fo value: 10 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
|---|---|---|---|---|---|---|---|
| Phenethyl acetate concentration (to soy sauce) | 0 ppb | 1 ppb | 20 ppb | 30 ppb | 50 ppb | 500 ppb | 1000 ppb |
| Panelist A | 1 | 2 | 4 | 5 | 5 | 5 | 5 |
| Panelist B | 1 | 2 | 4 | 5 | 5 | 5 | 5 |
| Panelist C | 1 | 2 | 4 | 5 | 5 | 5 | 5 |

(continued)

| (1) 121.1°C for 10 minutes, Fo value: 10 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
|---|---|---|---|---|---|---|---|
| Average | 1.0 | 2.0 | 4.0 | 5.0 | 5.0 | 5.0 | 5.0 |
| (2) 85°C, for 5 minutes, Fo value: 0.00126 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
| Phenethyl acetate concentration (to soy sauce) | 0 ppb | 1 ppb | 20 ppb | 30 ppb | 50 ppb | 500 ppb | 1000 ppb |
| Panelist A | 4 | 5 | 5 | 5 | 5 | 5 | 5 |
| Panelist B | 4 | 5 | 5 | 5 | 5 | 5 | 5 |
| Panelist C | 4 | 5 | 5 | 5 | 5 | 5 | 5 |
| Average | 4.0 | 5.0 | 5.0 | 5.0 | 5.0 | 5.0 | 5.0 |
| (3) 90°C, for 13 minutes, Fo value: 0.01 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
| Phenethyl acetate concentration (to soy sauce) | 0 ppb | 1 ppb | 20 ppb | 30 ppb | 50 ppb | 500 ppb | 1000 ppb |
| Panelist A | 3 | 4 | 5 | 5 | 5 | 5 | 5 |
| Panelist B | 4 | 4 | 5 | 5 | 5 | 5 | 5 |
| Panelist C | 4 | 4 | 5 | 5 | 5 | 5 | 5 |
| Average | 3.7 | 4.0 | 5.0 | 5.0 | 5.0 | 5.0 | 5.0 |
| (4) 110°C, for 6.3 minutes, Fo value: 0.5 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
| Phenethyl acetate concentration (to soy sauce) | 0 ppb | 1 ppb | 20 ppb | 30 ppb | 50 ppb | 500 ppb | 1000 ppb |
| Panelist A | 2 | 3 | 4 | 5 | 5 | 5 | 5 |
| Panelist B | 3 | 4 | 4 | 5 | 5 | 5 | 5 |
| Panelist C | 3 | 4 | 5 | 5 | 5 | 5 | 5 |
| Average | 2.7 | 3.7 | 4.3 | 5.0 | 5.0 | 5.0 | 5.0 |
| (5) 121.1°C, for 4 minutes, Fo value: μl | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
| Phenethyl acetate concentration (to soy sauce) | 0 ppb | 1 ppb | 20 ppb | 30 ppb | 50 ppb | 500 ppb | 1000 ppb |
| Panelist A | 2 | 3 | 4 | 5 | 5 | 5 | 5 |
| Panelist B | 2 | 3 | 4 | 5 | 5 | 5 | 5 |
| Panelist C | 2 | 3 | 5 | 5 | 5 | 5 | 5 |
| Average | 2.0 | 3.0 | 4.3 | 5.0 | 5.0 | 5.0 | 5.0 |

(continued)

| (6) 121.1°C, for 30 minutes, Fo value: 30 | Test seasoning liquid 18 | Test seasoning liquid 19 | Test seasoning liquid 20 | Test seasoning liquid 21 | Test seasoning liquid 22 | Test seasoning liquid 23 | Test seasoning liquid 24 |
|---|---|---|---|---|---|---|---|
| Phenethyl acetate concentration (to soy sauce) | 0 ppb | 1 ppb | 20 ppb | 30 ppb | 50 ppb | 500 ppb | 1000 ppb |
| Panelist A | 1 | 2 | 2 | 3 | 3 | 4 | 4 |
| Panelist B | 1 | 2 | 2 | 3 | 4 | 4 | 4 |
| Panelist C | 1 | 1 | 3 | 3 | 4 | 4 | 4 |
| Average | 1.0 | 1.7 | 2.3 | 3.0 | 3.7 | 4.0 | 4.0 |

As shown in Table 8A, it was found that the retort smell could be suppressed by containing phenethyl acetate under heat sterilization conditions (1) and (4) to (6), the retort sterilization conditions. In addition, it was found that the heat deterioration smell could be suppressed by containing phenethyl acetate under heat sterilization conditions (2) and (3), the non-retort sterilization conditions. As a result, it was found that the action of suppressing heat deterioration smell due to soy sauce by phenethyl acetate was observed in soy sauce having been subjected to heat sterilization conditions with a Fo value of 0.00126 or more.

However, under the heat sterilization conditions with a Fo value of 30, a burnt soy sauce smell was slightly perceived. In addition, a foreign smell was slightly perceived in a test seasoning liquid 24 having a phenethyl acetate content of 1,000 ppb, giving the impression of a strong sweetness.

Example 2

Example 1 Evaluation of Suppression of Meat Heating Smell by Phenethyl Acetate (1)

[1-1. Preparation of Liquid Seasoning]

In a 100 ml volumetric flask, 1 g of phenethyl acetate with a purity of 98% (Sigma-Aldrich) was placed and diluted with 95% ethanol to prepare a phenethyl acetate stock solution (1 g/100 ml). Subsequently, a phenethyl acetate solution to be added to each test seasoning was unified to 100 μl, and the phenethyl acetate stock solution was diluted with water so that the phenethyl acetate content to each test seasoning was at a predetermined concentration to prepare each phenethyl acetate solution.

Each test seasoning liquid was prepared by mixing ground beef, soy sauce, sugar, and phenethyl acetate solution in the blending amount shown in the following Table 1B and then adjusting with water to make 100 g in total. Note that the soy sauce used was "Kikkoman Tokusen Marudaizu Shoyu" (HEMF: 30 ppm or more; Kikkoman Corporation), in which phenethyl acetate was not detected.

The prepared test seasoning liquid was filled in an amount of 100 g into an aluminum pouch. Two of each were prepared, and one was subjected to retort sterilization (at 121.1°C for 10 minutes (Fo value: 10)) while the other was subjected to non-retort sterilization (at 85°C for 5 minutes (Fo value: 0.00126).

[Table 1B]

| | Test seasoning liquid 1 | Test seasoning liquid 2 | Test seasoning liquid 3 |
|---|---|---|---|
| Ground beef | 20.0 g | 20.0 g | 20.0 g |
| Soy sauce | 10.0 g | 10.0 g | 10.0 g |
| Sugar | 10.0 g | 10.0 g | 10.0 g |
| Water | Residue | Residue | Residue |
| Phenethyl acetate solution | 0 μl | 100 μl | 100 μl |
| Total | 100 g | 100 g | 100 g |
| Phenethyl acetate concentration (to test seasoning liquid) | 0 ppb | 10 ppb | 100 ppb |

(continued)

| | Test seasoning liquid 1 | Test seasoning liquid 2 | Test seasoning liquid 3 |
|---|---|---|---|
| Phenethyl acetate concentration (to ground beef) | 0 ppb | 50 ppb | 500 ppb |
| Phenethyl acetate concentration (to soy sauce) | 0 ppb | 100 ppb | 1000 ppb |

[1-2 Sensory Evaluation Method]

Panelists (3 persons from A to C) with an excellent ability to sniff out the meat heating smell were asked to take a spoonful of test seasoning liquids 1 to 3 having been subjected to retort sterilization or non-retort sterilization at ambient temperature and evaluate the intensity of the meat heating smell (deterioration smell caused when meat was heated), which comes up from the inside of the mouth to the nose when consumed, at five levels, as follows. At that time, as evaluation criteria, the meat heating smell of the test seasoning liquid 1 having been subjected to retort sterilization was rated as 1, the meat heating smell of the test seasoning liquid 1 after sterilization by reaching a temperature of 85°C was rated as 5. Note that the panelists (training period: 10 to 20 years) were trained to discuss and evaluate the meat heating smell before carrying out the sensory test. Specifically, characteristics of the meat heating smell were discussed and reconciled among the panelists to ensure that each panelist had a common understanding thereof. In addition, in order to ensure the validity of the sensory test, the panelists were trained for evaluation using several test seasoning liquids, and the reproducibility of the evaluation by each panelist was checked. After these procedures, the panelists were used to evaluate the meat heating smell of each test seasoning liquid.

1: very strongly perceived
2: perceived
3: slightly perceived
4: almost not perceived
5: not perceived

[1-3 Results of Sensory Evaluation]

Sensory evaluation was carried out on test seasoning liquids 1 to 3 containing phenethyl acetate after retort sterilization or non-retort sterilization. Results are shown in Table 2B.

[Table 2B]

| | | Test seasoning liquid 1 | Test seasoning liquid 2 | Test seasoning liquid 3 |
|---|---|---|---|---|
| Meat heating smell after retort sterilization | Panelist A | 1 | 5 | 5 |
| | Panelist B | 1 | 5 | 5 |
| | Panelist C | 1 | 5 | 5 |
| | Average | 1 | 5 | 5 |
| Meat heating smell after non-retort sterilization | Panelist A | 3 | 5 | 5 |
| | Panelist B | 3 | 5 | 5 |
| | Panelist C | 3 | 5 | 5 |
| | Average | 3 | 5 | 5 |

As shown in Table 2B, the meat heating smell, which was slightly perceived in non-retort sterilization, was very strongly perceived due to retort sterilization in the test seasoning liquid 1 without phenethyl acetate. However, the meat

heating smell was suppressed by containing phenethyl acetate.

From the above results, it was found that the meat heating smell, which would be generated by retort sterilization, could be suppressed by adding phenethyl acetate to seasoning liquid containing meat.

Example 2 Evaluation of Suppression of Meat Heating Smell by Phenethyl Acetate (2)

[2-1. Preparation of Liquid Seasoning]

In the same manner as in Example 1, each test seasoning liquid was prepared by mixing ground beef, soy sauce, sugar, kelp extract, water, and phenethyl acetate solution in the blending amount shown in the following Table 3B, and then subjected to retort sterilization (at 121.1°C for 10 minutes (Fo value: 10)). Note that the kelp extract used was, "Kobukon Hidaka P" (Kikkoman Corporation).

[Table 3B]

| | Test seasoning liquid 4 | Test seasoning liquid 5 | Test seasoning liquid 6 | Test seasoning liquid 7 | Test seasoning liquid 8 | Test seasoning liquid 9 |
|---|---|---|---|---|---|---|
| Ground beef | 20.0 g | 20.0 g | 20.0 g | 20.0 g | 20.0 g | 20.0 g |
| Soy sauce | 10.0 g | 10.0 g | 10.0 g | 10.0 g | 10.0 g | 10.0 g |
| Sugar | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g |
| Water | Residue | Residue | Residue | Residue | Residue | Residue |
| Phenethyl acetate solution | 0 μl | 100 μl | 100 μl | 100 μl | 100 μl | 100 μl |
| Total | 100 g | 100 g | 100 g | 100 g | 100 g | 100 g |
| Phenethyl acetate concentration (to test seasoning liquid) | 0 ppb | 0.5 ppb | 1 ppb | 2 ppb | 5 ppb | 10 ppb |
| Phenethyl acetate concentration (to ground beef) | 0 ppb | 2.5 ppb | 5 ppb | 10 ppb | 25 ppb | 50 ppb |
| Phenethyl acetate concentration (to soy sauce) | 0 ppb | 5 ppb | 10 ppb | 20 ppb | 50 ppb | 100 ppb |

| | Test seasoning liquid 10 | Test seasoning liquid 11 | Test seasoning liquid 12 | Test seasoning liquid 13 | Test seasoning liquid 14 | Test seasoning liquid 15 |
|---|---|---|---|---|---|---|
| Ground beef | 20.0 g | 20.0 g | 20.0 g | 20.0 g | 20.0 g | 20.0 g |
| Soy sauce | 10.0 g | 10.0 g | 10.0 g | 10.0 g | 10.0 g | 10.0 g |
| Sugar | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g |
| Water | Residue | Residue | Residue | Residue | Residue | Residue |
| Phenethyl acetate solution | 100 μl | 100 μl | 100 μl | 100 μl | 100 μl | 100 μl |
| Total | 100 g | 100 g | 100 g | 100 g | 100 g | 100 g |
| Phenethyl acetate concentration (to test seasoning liquid) | 20 ppb | 50 ppb | 100 ppb | 500 ppb | 1000 ppb | 2000 ppb |
| Phenethyl acetate concentration (to ground beef) | 100 ppb | 250 ppb | 500 ppb | 2500 ppb | 5000 ppb | 10000 ppb |

| | | | | | | |
|---|---|---|---|---|---|---|
| Phenethyl acetate concentration (to soy sauce) | 200 ppb | 500 ppb | 1000 ppb | 5000 ppb | 10000 ppb | 20000 ppb |

[2-2 Results of Sensory Evaluation]

In the same manner as in Example 1, sensory evaluation was carried out on each of the test seasoning liquids 4 to 15 with altered blending amounts of phenethyl acetate after retort sterilization. Results are shown in Table 4B.

[Table 4B]

| | Test seasoning liquid 4 | Test seasoning liquid 5 | Test seasoning liquid 6 | Test seasoning liquid 7 | Test seasoning liquid 8 | Test seasoning liquid 9 |
|---|---|---|---|---|---|---|
| Phenethyl acetate concentration (to test seasoning liquid) | 0 ppb | 0.5 ppb | 1 ppb | 2 ppb | 5 ppb | 10 ppb |
| Phenethyl acetate concentration (to ground beef) | 0 ppb | 2.5 ppb | 5 ppb | 10 ppb | 25 ppb | 50 ppb |
| Phenethyl acetate concentration (to soy sauce) | 0 ppb | 5 ppb | 10 ppb | 20 ppb | 50 ppb | 100 ppb |
| Panelist A | 1 | 2 | 3 | 4 | 4 | 5 |
| Panelist B | 1 | 2 | 3 | 4 | 5 | 5 |
| Panelist C | 1 | 2 | 3 | 4 | 5 | 5 |
| Average | 1.0 | 2.0 | 3.0 | 4.0 | 4.7 | 5.0 |

| | Test seasoning liquid 10 | Test seasoning liquid 11 | Test seasoning liquid 12 | Test seasoning liquid 13 | Test seasoning liquid 14 | Test seasoning liquid 15 |
|---|---|---|---|---|---|---|
| Phenethyl acetate concentration (to test seasoning liquid) | 20 ppb | 50 ppb | 100 ppb | 500 ppb | 1000 ppb | 2000 ppb |
| Phenethyl acetate concentration (to ground beef) | 100 ppb | 250 ppb | 500 ppb | 2500 ppb | 5000 ppb | 10000 ppb |
| phenethyl acetate concentration (to soy sauce) | 200 ppb | 500 ppb | 1000 ppb | 5000 ppb | 10000 ppb | 20000 ppb |
| Panelist A | 5 | 5 | 5 | 5 | 5 | 5 |
| Panelist B | 5 | 5 | 5 | 5 | 5 | 5 |
| Panelist C | 5 | 5 | 5 | 5 | 5 | 5 |
| Average | 5.0 | 5.0 | 5.0 | 5.0 | 5.0 | 5.0 |

As shown in Table 4B, it was found that the meat heating smell caused by retort sterilization could be suppressed in a concentration-dependent manner by containing phenethyl acetate. As shown in Table 4B, it was found that the meat heating smell due to retort sterilization could be suppressed by containing 1 ppb or more of phenethyl acetate and remarkably suppressed by further containing 5 ppb or more of phenethyl acetate.

However, phenethyl acetate has a rose aroma by itself. When the test seasoning liquid 15 containing 2,000 ppb phenethyl acetate was used, the meat heating smell due to retort sterilization could be suppressed, but a slightly foreign flavor was perceived. Therefore, it was found that a phenethyl acetate content of less than 2,000 ppb was preferred.

From the above results, it was found that the concentration of phenethyl acetate in retort liquid seasonings containing meat was preferably in the range of 1 ppb or more and less than 2,000 ppb in order to suppress the meat heating smell due to retort sterilization and not to impart a foreign flavor derived from the phenethyl acetate aroma to the liquid seasonings.

Example 3 Cooked Test with Test Seasoning Liquid

[3-1. Preparation of Liquid Seasoning]

In the same manner as in Example 1, each test seasoning liquid was prepared by mixing ground beef, sugar, water, soy sauce, and phenethyl acetate solution in the blending amount shown in the following Table 5B, and then subjected to retort sterilization. However, for test seasoning liquids 19 and 20, soy sauce was not mixed with other ingredients but filled alone in an amount of 10.0 g into aluminum pouches. For the aluminum pouches filled with soy sauce, the test seasoning liquid 19 was subjected to retort sterilization (at 121.1°C for 10 minutes (Fo value: 10)), and the test seasoning liquid 20 was subjected to non-retort sterilization (at 85°C for 5 minutes (Fo value: 0.00126)).

[Table 5B]

| | Test seasoning liquid 16 | Test seasoning liquid 17 | Test seasoning liquid 18 | Test seasoning liquid 19 | Test seasoning liquid 20 |
|---|---|---|---|---|---|
| Ground beef | 20.0 g | 20.0 g | 20.0 g | 20.0 g | 20.0 g |
| Soy sauce | 10.0 g | 10.0 g | 10.0 g | * | * |
| Sugar | 5.0 g | 5.0 g | 5.0 g | 5.0 g | 5.0 g |
| Water | Residue | Residue | Residue | Residue | Residue |
| Phenethyl acetate solution | 0 μl | 100 μl | 100 μl | 0 μl | 0 μl |
| Total | 100 g | 100 g | 100 g | 100 g | 100 g |
| Phenethyl acetate concentration (to test seasoning liquid) | 0 ppb | 2 ppb | 100 ppb | 0 ppb | 0 ppb |
| Phenethyl acetate concentration (to ground beef) | 0 ppb | 10 ppb | 500 ppb | 0 ppb | 0 ppb |
| Phenethyl acetate concentration (to soy sauce) | 0 ppb | 20 ppb | 1000 ppb | 0 ppb | 0 ppb |

* In test seasoning liquids 19 and 20, soy sauce was filled only in an amount of 10 g into another aluminum pouch. In the test seasoning liquid 19, soy sauce was subjected to retort sterilization (at 121.1°C, for 10 minutes, Fo value: 10). In the test seasoning liquid 20, soy sauce was subjected to non-retort sterilization (at 85°C, for 5 minutes, Fo value: 0.00126).

[3-2. Cooking with Liquid Seasoning]

Niku Tofu (simmered meat with tofu) was prepared using test seasoning liquids 16 to 20. Specifically, tofu was drained and cut into bite-sized pieces. Subsequently, a frying pan with 1 teaspoon of vegetable oil was heated, and tofu was roasted on both sides over medium heat for 3 to 4 minutes. The test seasoning liquids were added to this frying pan and stir-fried together over medium heat for 1 minute to obtain the Niku Tofu (simmered meat with tofu).

[3-3 Sensory Evaluation Method]

The intensity of a meat heating smell when Niku Tofu (simmered meat with tofu) was consumed in the same manner as in 1-2 above was evaluated at five levels with respect to the obtained Niku Tofu (simmered meat with tofu). At that time, as evaluation criteria, the meat heating smell of the obtained Niku Tofu (simmered meat with tofu) using the test seasoning liquid 20 was rated as 5, and the meat heating smell of the obtained Niku Tofu (simmered meat with tofu) using the test seasoning liquid 19 was rated as 1.

[3-4 Results of Sensory Evaluation]

Sensory evaluation of the meat heating smell of cooked Niku Tofu (simmered meat with tofu) was carried out using test seasoning liquids 16 to 20. Results are shown in Table 6B.

[Table 6B]

| | Test seasoning liquid 16 | Test seasoning liquid 17 | Test seasoning liquid 18 | Test seasoning liquid 19 | Test seasoning liquid 20 |
|---|---|---|---|---|---|
| Phenethyl acetate concentration (to test seasoning liquid) | 0 ppb | 2 ppb | 100 ppb | 0 ppb | 0 ppb |
| Phenethyl acetate concentration (to ground beef) | 0 ppb | 10 ppb | 500 ppb | 0 ppb | 0 ppb |
| Phenethyl acetate concentration (to soy sauce) | 0 ppb | 20 ppb | 1000 ppb | 0 ppb | 0 ppb |
| Panelist A | 2 | 5 | 5 | 1 | 5 |
| Panelist B | 2 | 5 | 5 | 1 | 5 |
| Panelist C | 1 | 5 | 5 | 1 | 5 |
| Average | 1.7 | 5.0 | 5.0 | 1.0 | 5.0 |

As shown in Table 6B, Niku Tofu (simmered meat with tofu) obtained using the test seasoning liquid 16, which contained soy sauce and meat and were subjected to retort sterilization was inferior in quality as Niku Tofu (simmered meat with tofu) due to the meat heating deterioration smell. In contrast, for the Niku Tofu (simmered meat with tofu) obtained using test seasoning liquids 17 and 18 containing phenethyl acetate, no meat heating smell, the aroma inherent in the meat, and no bitter taste were perceived, and it was delicious, combined with a clean soy sauce taste.

Thus, it was found that the cooked product obtained by using the liquid seasoning with the suppressed meat heating smell did not have the meat heating smell and has an excellent fragrance as prepared food, resulting in good quality.

Example 4 Evaluation of Suppression of Meat Heating smell by Phenethyl Acetate (3)

In the same manner as in Example 1, each test seasoning liquid was prepared by mixing ground beef, soy sauce, sugar, kelp extract, water, and phenethyl acetate solution in the blending amount shown in the following Table 7B, and then subjected to retort sterilization (at 121.1°C for 10 minutes (Fo value: 10)).

[Table 7B]

| | Test seasoning liquid 21 | Test seasoning liquid 22 | Test seasoning liquid 23 | Test seasoning liquid 24 | Test seasoning liquid 25 |
|---|---|---|---|---|---|
| Ground beef | 20.0 g | 20.0 g | 20.0 g | 10.0 g | 40.0 g |
| Soy sauce | 0.0 g | 5.0 g | 20.0 g | 10.0 g | 10.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| Phenethyl acetate solution | 100 μl | 100 μl | 100 μl | 100 μl | 100 μl |
| Total | 100 g | 100 g | 100 g | 100 g | 100 g |
| Phenethyl acetate concentration (to test seasoning liquid) | 1 ppb | 1 ppb | 1 ppb | 1 ppb | 1 ppb |
| Phenethyl acetate concentration (to ground beef) | 5 ppb | 5 ppb | 5 ppb | 10 ppb | 2.5 ppb |

(continued)

| | Test seasoning liquid 21 | Test seasoning liquid 22 | Test seasoning liquid 23 | Test seasoning liquid 24 | Test seasoning liquid 25 |
|---|---|---|---|---|---|
| Phenethyl acetate concentration (to soy sauce) | 0 ppb | 20 ppb | 5 ppb | 10 ppb | 10 ppb |

In the same manner as in Example 1, sensory evaluation was carried out on each of the test seasoning liquids 21 to 25 with altered blending amounts of ground beef or soy sauce after retort sterilization. However, it was evaluated by contrasting it with the meat heating smell of the test seasoning liquid 6. As a result, panelists A to C all evaluated the meat heating smell of the test seasoning liquids 21 to 25 as equivalent to that of the test seasoning liquid 6.

Example 5 Evaluation of Suppression of Meat Heating Smell by Phenethyl Acetate (4)

[5-1. Preparation of Liquid Seasoning]

In the same manner as in Example 1, each test seasoning liquid was prepared by mixing ground pork (ground size: 5 mm), soy sauce, sugar, kelp extract, water, and phenethyl acetate solution in the blending amount shown in the following Table 8B. The thus obtained test seasoning liquids were subjected to retort sterilization under two heat sterilization conditions with temperature, time, and Fo values as shown in the following Table 9B.

[Table 8B]

| | Test seasoning liquid 26 | Test seasoning liquid 27 | Test seasoning liquid 28 | Test seasoning liquid 29 | Test seasoning liquid 30 |
|---|---|---|---|---|---|
| Ground pork | 20.0 g | 20.0 g | 20.0 g | 20.0 g | 20.0 g |
| Soy sauce | 10.0 g | 10.0 g | 10.0 g | 10.0 g | 10.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| Phenethyl acetate solution | 0 μl | 100 μl | 100 μl | 100 μl | 100 μl |
| Total | 100.0 g | 100.0 g | 100.0 g | 100.0 g | 100.0 g |
| Phenethyl acetate concentration (to test seasoning liquid) | 0 ppb | 1 ppb | 20 ppb | 30 ppb | 1000 ppb |
| Phenethyl acetate concentration (to ground pork) | 0 ppb | 5 ppb | 100 ppb | 150 ppb | 5000 ppb |
| Phenethyl acetate concentration (to soy sauce) | 0 ppb | 10 ppb | 200 ppb | 300 ppb | 10000 ppb |

[5-2 Results of Sensory Evaluation]

In the same manner as in Example 1, sensory evaluation was carried out on each of the test seasoning liquids 26 to 30 with altered blending amounts of phenethyl acetate after retort sterilization. Results are shown in Table 9B.

[Table 9B]

| Heating condition (1) | | Test seasoning liquid 26 | Test seasoning liquid 27 | Test seasoning liquid 28 | Test seasoning liquid 29 | Test seasoning liquid 30 |
|---|---|---|---|---|---|---|
| Phenethyl acetate concentration (to test seasoning liquid) | | 0 | 1 ppb | 20 ppb | 30 ppb | 1000 ppb |
| Phenethyl acetate concentration (to ground pork) | | 0 | 5 ppb | 100 ppb | 150 ppb | 5000 ppb |
| Phenethyl acetate concentration (to soy sauce) | | 0 | 10 ppb | 200 ppb | 300 ppb | 10000 ppb |
| 121.1°C, for 10 minutes, Fo value: 10 | Panelist A | 1 | 3 | 5 | 5 | 5 |
| | Panelist B | 1 | 3 | 5 | 5 | 5 |
| | Panelist C | 1 | 4 | 5 | 5 | 5 |
| | Average | 1.0 | 3.3 | 5.0 | 5.0 | 5.0 |
| Heating condition (2) | | Test seasoning liquid 26 | Test seasoning liquid 27 | Test seasoning liquid 28 | Test seasoning liquid 29 | Test seasoning liquid 30 |
| phenethyl acetate concentration (to test seasoning liquid) | | 0 | 1 ppb | 20 ppb | 30 ppb | 1000 ppb |
| Phenethyl acetate concentration (to ground pork) | | 0 | 5 ppb | 100 ppb | 150 ppb | 5000 ppb |
| Phenethyl acetate concentration (to soy sauce) | | 0 | 10 ppb | 200 ppb | 300 ppb | 10000 ppb |
| 121.1°C, for 4 minutes, Fo value: 4 | Panelist A | 2 | 4 | 5 | 5 | 5 |
| | Panelist B | 2 | 4 | 5 | 5 | 5 |
| | Panelist C | 2 | 5 | 5 | 5 | 5 |
| | Average | 2.0 | 4.3 | 5.0 | 5.0 | 5.0 |

As shown in Table 9B, it was found that the meat heating smell caused by retort sterilization could be suppressed in a concentration-dependent manner by containing phenethyl acetate. According to the results described in Table 9B, it was found that the meat heating smell due to retort sterilization could be suppressed by containing 1 ppb or more of phenethyl acetate and remarkably suppressed by further containing 20 ppb or more of phenethyl acetate.

Example 6 Evaluation of Suppression of Meat Heating Smell by Phenethyl Acetate (5)

[6-1. Preparation of Liquid Seasoning]

In the same manner as in Example 1, each test seasoning liquid was prepared by mixing ground chicken (ground size: 9 mm), soy sauce, sugar, kelp extract, water, and phenethyl acetate solution in the blending amount shown in the following Table 10B. The thus obtained test seasoning liquids were subjected to retort sterilization under two heat sterilization conditions with temperature, time, and Fo values as shown in the following Table 10B.

[Table 10B]

| | Test seasoning liquid 31 | Test seasoning liquid 32 | Test seasoning liquid 33 | Test seasoning liquid 34 | Test seasoning liquid 35 |
|---|---|---|---|---|---|
| Ground chicken | 20.0 g | 20.0 g | 20.0 g | 20.0 g | 20.0 g |
| Soy sauce | 10.0 g | 10.0 g | 10.0 g | 10.0 g | 10.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| Phenethyl acetate solution | 0 μl | 100 μl | 100 μl | 100 μl | 100 μl |
| Total | 100.0 g | 100.0 g | 100.0 g | 100.0 g | 100.0 g |
| Phenethyl acetate concentration (to test seasoning liquid) | 0 ppb | 1 ppb | 20 ppb | 30 ppb | 1000 ppb |
| Phenethyl acetate concentration (to ground chicken) | 0 ppb | 5 ppb | 100 ppb | 150 ppb | 5000 ppb |
| Phenethyl acetate concentration (to soy sauce) | 0 ppb | 10 ppb | 200 ppb | 300 ppb | 10000 ppb |

[6-2 Results of Sensory Evaluation]

In the same manner as in Example 1, sensory evaluation was carried out on each of the test seasoning liquids 31 to 35 with altered blending amounts of phenethyl acetate after retort sterilization. Results are shown in Table 11B.

[Table 11B]

| Heating condition (1) | | Test seasoning liquid 31 | Test seasoning liquid 32 | Test seasoning liquid 33 | Test seasoning liquid 34 | Test seasoning liquid 35 |
|---|---|---|---|---|---|---|
| Phenethyl acetate concentration (to test seasoning liquid) | | 0 | 1 ppb | 20 ppb | 30 ppb | 1000 ppb |
| Phenethyl acetate concentration (to ground chicken) | | 0 | 5 ppb | 100 ppb | 150 ppb | 5000 ppb |
| Phenethyl acetate concentration (to soy sauce) | | 0 | 10 ppb | 200 ppb | 300 ppb | 10000 ppb |
| 121.1°C, for 10 minutes, Fo value: 10 | Panelist A | 1 | 3 | 5 | 5 | 5 |
| | Panelist B | 1 | 3 | 5 | 5 | 5 |
| | Panelist C | 1 | 3 | 5 | 5 | 5 |
| | Average | 1.0 | 3.0 | 5.0 | 5.0 | 5.0 |

(continued)

| Heating condition (2) | | Test seasoning liquid 31 | Test seasoning liquid 32 | Test seasoning liquid 33 | Test seasoning liquid 34 | Test seasoning liquid 35 |
|---|---|---|---|---|---|---|
| Phenethyl acetate concentration (to test seasoning liquid) | | 0 | 1 ppb | 20 ppb | 30 ppb | 1000 ppb |
| Phenethyl acetate concentration (to ground chicken) | | 0 | 5 ppb | 100 ppb | 150 ppb | 5000 ppb |
| Phenethyl acetate concentration (to soy sauce) | | 0 | 10 ppb | 200 ppb | 300 ppb | 10000 ppb |
| 121.1°C, for 4 minutes, Fo value: 4 | Panelist A | 2 | 4 | 5 | 5 | 5 |
| | Panelist B | 2 | 4 | 5 | 5 | 5 |
| | Panelist C | 2 | 4 | 5 | 5 | 5 |
| | Average | 2.0 | 4.0 | 5.0 | 5.0 | 5.0 |

As shown in Table 11B, it was found that the meat heating smell caused by retort sterilization could be suppressed in a concentration-dependent manner by containing phenethyl acetate, without depending on the retort sterilization conditions. According to the results described in Table 11B, it was found that the meat heating smell due to retort sterilization could be suppressed by containing 1 ppb or more of phenethyl acetate and remarkably suppressed by further containing 20 ppb or more of phenethyl acetate.

Example 7 Evaluation of Suppression of Meat Heating Smell by Phenethyl Acetate in the Absence of Soy Sauce (1)

[7-1. Preparation of Liquid Seasoning]

In the same manner as in Example 1, test seasoning liquids 101 to 103 were prepared by replacing soy sauce with water in the blends shown in Table 1B, corresponding to test seasoning liquids 1 to 3, respectively. In other words, each test seasoning liquid was prepared by mixing ground beef, sugar, and phenethyl acetate solution, excepting soy sauce, in the blending amount shown in Table 1B and then adjusting with water to make 100 g in total.

Each of the prepared test seasoning liquids was filled in an amount of 100 g into an aluminum pouch. This was subjected to non-retort sterilization (at 85°C for 5 minutes (Fo value: 0.00126)).

Two liquid seasoning solutions for evaluation criteria were prepared with the same blend as the test seasoning liquid 101, and one was subjected to retort sterilization (at 121.1°C for 10 minutes (Fo value: 10)) while the other was sterilized by reaching a temperature of 85°C.

[7-2 Results of Sensory Evaluation]

In the same manner as in Example 1, sensory evaluation was carried out on each of the test seasoning liquids 101 to 103 with altered blending amounts of phenethyl acetate, which were also subjected to non-retort sterilization. Note that as evaluation criteria, the meat heating smell of the test seasoning liquid 101 having been subjected to retort sterilization was set to 1, the meat heating smell of the test seasoning liquid 101 after sterilization by reaching a temperature of 85°C was set to 5. Results are shown in Table 12B.

[Table 12B]

| | Test seasoning liquid 101 | Test seasoning liquid 102 | Test seasoning liquid 103 |
|---|---|---|---|
| Phenethyl acetate concentration (to test seasoning liquid) | 0 ppb | 10 ppb | 100 ppb |

(continued)

| | Test seasoning liquid 101 | Test seasoning liquid 102 | Test seasoning liquid 103 |
|---|---|---|---|
| Phenethyl acetate concentration (to ground beef) | 0 ppb | 50 ppb | 500 ppb |
| Phenethyl acetate concentration (to soy sauce) | - | - | - |
| Panelist A | 3 | 5 | 5 |
| Panelist B | 3 | 5 | 5 |
| Panelist C | 3 | 5 | 5 |
| Average | 3.0 | 5.0 | 5.0 |

As shown in Table 12B, it was found that the meat heating smell caused by non-retort sterilization could be suppressed by containing phenethyl acetate in the system without soy sauce blended.

Example 8 Evaluation of Suppression of Meat Heating Smell by Phenethyl Acetate in the Absence of Soy Sauce (2)

[8-1. Preparation of Liquid Seasoning]

In the same manner as in Examples 1 and 2, test seasoning liquids 111 to 116 were prepared by replacing soy sauce with water in the blends shown in Table 3B, corresponding to test seasoning liquids 4, 6 to 8, 13, and 14, respectively. In other words, each test seasoning liquid was prepared by mixing ground beef, sugar, kelp extract, and phenethyl acetate solution, excepting soy sauce, in the blending amount shown in Table 3B and then adjusting with water to make 100 g in total.

Each of the prepared test seasoning liquids was filled in an amount of 100 g into an aluminum pouch. This was subjected to retort sterilization (at 121.1°C, for 10 minutes (Fo value: 10)).

Two liquid seasoning solutions for evaluation criteria were prepared with the same blend as the test seasoning liquid 101, and one was subjected to retort sterilization (at 121.1°C for 10 minutes (Fo value: 10)) while the other was sterilized by reaching a temperature of 85°C.

[8-2 Results of Sensory Evaluation]

In the same manner as in Example 7, sensory evaluation was carried out on each of the test seasoning liquids 111 to 116 with altered blending amounts of phenethyl acetate, which were also subjected to retort sterilization. Results are shown in Table 13B.

[Table 13B]

| | Test seasoning liquid 111 | Test seasoning liquid 112 | Test seasoning liquid 113 | Test seasoning liquid 114 | Test seasoning liquid 115 | Test seasoning liquid 116 |
|---|---|---|---|---|---|---|
| Phenethyl acetate concentration (to test seasoning liquid) | 0 ppb | 1 ppb | 2 ppb | 5 ppb | 500 ppb | 1000 ppb |
| Phenethyl acetate concentration (to ground beef) | 0 ppb | 5 ppb | 10 ppb | 25 ppb | 2500 ppb | 5000 ppb |
| Phenethyl acetate concentration (to soy sauce) | - | - | - | - | - | - |
| Panelist A | 1 | 3 | 4 | 4 | 5 | 5 |
| Panelist B | 1 | 3 | 4 | 5 | 5 | 5 |
| Panelist C | 1 | 3 | 4 | 5 | 5 | 5 |

(continued)

| | Test seasoning liquid 111 | Test seasoning liquid 112 | Test seasoning liquid 113 | Test seasoning liquid 114 | Test seasoning liquid 115 | Test seasoning liquid 116 |
|---|---|---|---|---|---|---|
| Average | 1.0 | 3.0 | 4.0 | 4.7 | 5.0 | 5.0 |

As shown in Table 13B, it was found that the meat heating smell caused by retort sterilization could be suppressed in a concentration-dependent manner by containing phenethyl acetate in the system without soy sauce blended. Note that when the test seasoning liquid 116 containing 1,000 ppb phenethyl acetate was used, a subtle, foreign flavor slightly dependent on phenethyl acetate was perceived.

Example 3

Example 1 Evaluation of Suppression of Soybean Stuffy Smell by Phenethyl Acetate (1)

[1-1. Preparation of Liquid Seasoning]

In a 100 ml volumetric flask, 1 g of phenethyl acetate with a purity of 98% (Sigma-Aldrich) was placed and diluted with 95% ethanol to prepare a phenethyl acetate stock solution (1 g/100 ml). Subsequently, a phenethyl acetate solution to be added to each test seasoning was unified to 100 μl, and the phenethyl acetate stock solution was diluted with water so that the phenethyl acetate content to each test seasoning was at a predetermined concentration to prepare each phenethyl acetate solution.

Each test seasoning liquid was prepared by mixing granular soybean protein, soy sauce, sugar, and phenethyl acetate solution in the blending amount shown in the following Table 1C and then adjusting with water to make 100 g in total. Note that the granular soybean protein used was "New Soyme F 2010" (manufactured by The Nisshin OilliO Group, Ltd.), and the soy sauce used was "Kikkoman Tokusen MaruDaizu Shoyu" (HEMF: 30 ppm or more; Kikkoman Corporation), in which phenethyl acetate was not detected.

The prepared test seasoning liquid was filled in an amount of 100 g into an aluminum pouch. Two of each were prepared, and one was subjected to retort sterilization (at 121.1°C for 10 minutes (Fo value: 10)) while the other was subjected to non-retort sterilization (at 85°C for 5 minutes (Fo value: 0.00126).

[Table 1C]

| | Test seasoning liquid 1 | Test seasoning liquid 2 | Test seasoning liquid 3 |
|---|---|---|---|
| Soybean protein | 10.0 g | 10.0 g | 10.0 g |
| Soy sauce | 10.0 g | 10.0 g | 10.0 g |
| Sugar | 5.0 g | 5.0 g | 5.0 g |
| Water | Residue | Residue | Residue |
| Phenethyl acetate solution | 0 μl | 100 μl | 100 μl |
| Total | 100 g | 100 g | 100 g |
| Phenethyl acetate concentration (to test seasoning liquid) | 0 ppb | 10 ppb | 100 ppb |
| Phenethyl acetate concentration (to soybean protein) | 0 ppb | 100 ppb | 1000 ppb |
| Phenethyl acetate concentration (to soy sauce) | 0 ppb | 100 ppb | 1000 ppb |

[1-2 Sensory Evaluation Method]

Panelists (3 persons from A to C) with an excellent ability to sniff out the soybean stuffy smell were asked to take a spoonful of test seasoning liquids 1 to 3 at ambient temperature and evaluate the intensity of the soybean stuffy smell (deterioration smell caused when soybean protein was heated), which comes up from the inside of the mouth to the nose when consumed, at five levels, as follows. At that time, as evaluation criteria, the soybean stuffy smell of the test seasoning liquid 1 having been subjected to retort sterilization was rated as 1, and the soybean stuffy smell of the

test seasoning liquid 1 after sterilization by reaching a temperature of 85°C was rated as 5. Note that the panelists (training period: 10 to 20 years) were trained to discuss and evaluate the meat heating smell before carrying out the sensory test. Specifically, characteristics of the meat heating smell were discussed and reconciled among the panelists to ensure that each panelist had a common understanding thereof. In addition, in order to ensure the validity of the sensory test, the panelists were trained for evaluation using several test seasoning liquids, and the reproducibility of the evaluation by each panelist was checked. After these procedures, the panelists were used to evaluate the meat heating smell of each test seasoning liquid.

1: very strongly perceived
2: perceived
3: slightly perceived
4: almost not perceived
5: not perceived

[1-3 Results of Sensory Evaluation]

Sensory evaluation of test seasoning liquids 1 to 3 containing phenethyl acetate was carried out after retort sterilization or non-retort sterilization. Results are shown in Table 2C.

[Table 2C]

| | | Test seasoning liquid 1 | Test seasoning liquid 2 | Test seasoning liquid 3 |
|---|---|---|---|---|
| Soybean stuffy smell after retort sterilization | Panelist A | 1 | 5 | 5 |
| | Panelist B | 1 | 5 | 5 |
| | Panelist C | 1 | 5 | 5 |
| | Average | 1 | 5 | 5 |
| Soybean stuffy smell after non-retort sterilization | Panelist A | 3 | 5 | 5 |
| | Panelist B | 3 | 5 | 5 |
| | Panelist C | 3 | 5 | 5 |
| | Average | 3 | 5 | 5 |

As shown in Table 2C, the soybean stuffy smell, which was perceived in non-retort sterilization, was very strongly perceived due to retort sterilization in the test seasoning liquid 1 without phenethyl acetate. However, the soybean stuffy smell was suppressed by containing phenethyl acetate.

From the above results, it was found that the soybean stuffy smell, which would be generated by retort-sterilization, could be suppressed by adding phenethyl acetate to s seasoning liquid containing soybean protein.

Example 2 Evaluation of Suppression of Soybean Stuffy Smell by Phenethyl Acetate (2)

[2-1. Preparation of Liquid Seasoning]

In the same manner as in Example 1, each test seasoning liquid was prepared by mixing granular soybean protein, soy sauce, sugar, kelp extract, water, and phenethyl acetate solution in the blending amount shown in the following Table 3C and then subjected to retort sterilization (at 121.1°C for 10 minutes (Fo value: 10)). Note that the kelp extract used was "Kobukon Hidaka P" (Kikkoman Corporation).

[Table 3C]

| | Test seasoning liquid 4 | Test seasoning liquid 5 | Test seasoning liquid 6 | Test seasoning liquid 7 | Test seasoning liquid 8 | Test seasoning liquid 9 |
|---|---|---|---|---|---|---|
| Soybean protein | 10.0 g | 10.0 g | 10.0 g | 10.0 g | 10.0 g | 10.0 g |
| Soy sauce | 10.0 g | 10.0 g | 10.0 g | 10.0 g | 10.0 g | 10.0 g |
| Sugar | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g |
| Water | Residue | Residue | Residue | Residue | Residue | Residue |
| Phenethyl acetate solution | 0 μl | 100 μl | 100 μl | 100 μl | 100 μl | 100 μl |
| Total | 100 g | 100 g | 100 g | 100 g | 100 g | 100 g |
| Phenethyl acetate concentration (to test seasoning liquid) | 0 ppb | 0.5 ppb | 1 ppb | 2 ppb | 5 ppb | 10 ppb |
| Phenethyl acetate concentration (to soybean protein) | 0 ppb | 5 ppb | 10 ppb | 20 ppb | 50 ppb | 100 ppb |
| Phenethyl acetate concentration (to soy sauce) | 0 ppb | 5 ppb | 10 ppb | 20 ppb | 50 ppb | 100 ppb |

| | Test seasoning liquid 10 | Test seasoning liquid 11 | Test seasoning liquid 12 | Test seasoning liquid 13 | Test seasoning liquid 14 |
|---|---|---|---|---|---|
| Soybean protein | 10.0 g | 10.0 g | 10.0 g | 10.0 g | 10.0 g |
| Soy sauce | 10.0 g | 10.0 g | 10.0 g | 10.0 g | 10.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| phenethyl acetate solution | 100 μl | 100 μl | 100 μl | 100 μl | 100 μl |
| Total | 100 g | 100 g | 100 g | 100 g | 100 g |
| Phenethyl acetate concentration (to test seasoning liquid) | 20 ppb | 50 ppb | 100 ppb | 500 ppb | 1000 ppb |
| Phenethyl acetate concentration (to soybean protein) | 200 ppb | 500 ppb | 1000 ppb | 5000 ppb | 10000 ppb |
| Phenethyl acetate concentration (to soy sauce) | 200 ppb | 500 ppb | 1000 ppb | 5000 ppb | 10000 ppb |

[2-2 Results of Sensory Evaluation]

In the same manner as in Example 1, sensory evaluation was carried out on each of test seasoning liquids 4 to 14 with altered blending amounts of phenethyl acetate after retort sterilization. Results are shown in Table 4C.

[Table 4C]

| | Test seasoning liquid 4 | Test seasoning liquid 5 | Test seasoning liquid 6 | Test seasoning liquid 7 | Test seasoning liquid 8 | Test seasoning liquid 9 |
|---|---|---|---|---|---|---|
| Phenethyl acetate concentration (to test seasoning liquid) | 0 ppb | 0.5 ppb | 1 ppb | 2 ppb | 5 ppb | 10 ppb |
| Phenethyl acetate concentration (to soybean protein) | 0 ppb | 5 ppb | 10 ppb | 20 ppb | 50 ppb | 100 ppb |
| Phenethyl acetate concentration (to soy sauce) | 0 ppb | 5 ppb | 10 ppb | 20 ppb | 50 ppb | 100 ppb |
| Panelist A | 1 | 2 | 3 | 4 | 5 | 5 |
| Panelist B | 1 | 2 | 3 | 4 | 5 | 5 |
| Panelist C | 1 | 3 | 3 | 5 | 5 | 5 |
| Average | 1.0 | 2.3 | 3.0 | 4.3 | 5.0 | 5.0 |

| | Test seasoning liquid 10 | Test seasoning liquid 11 | Test seasoning liquid 12 | Test seasoning liquid 13 | Test seasoning liquid 14 |
|---|---|---|---|---|---|
| Phenethyl acetate concentration (to test seasoning liquid) | 20 ppb | 50 ppb | 100 ppb | 500 ppb | 1000 ppb |
| Phenethyl acetate concentration (to soybean protein) | 200 ppb | 500 ppb | 1000 ppb | 5000 ppb | 10000 ppb |
| Phenethyl acetate concentration (to soy sauce) | 200 ppb | 500 ppb | 1000 ppb | 5000 ppb | 10000 ppb |
| Panelist A | 5 | 5 | 5 | 5 | 5 |
| Panelist B | 5 | 5 | 5 | 5 | 5 |
| Panelist C | 5 | 5 | 5 | 5 | 5 |
| Average | 5.0 | 5.0 | 5.0 | 5.0 | 5.0 |

As shown in Table 4C, it was found that soybean stuffy smell caused by retort sterilization could be suppressed in a concentration-dependent manner by containing phenethyl acetate. According to the results described in Table 4C, it was found that the soybean stuffy smell due to retort sterilization could be suppressed by containing 1 ppb or more of phenethyl acetate and remarkably suppressed by further containing 5 ppb or more of phenethyl acetate. Note that when a test of the test seasoning liquid 6 was carried out by replacing the soybean protein from New Soyme F 2010 with NEW FUJINIK 59 (manufactured by Fuji Oil Co., Ltd.), the same effect of suppressing the soybean stuffy smell was observed.

However, phenethyl acetate has a rose aroma by itself. When the test seasoning liquid 14 containing 1,000 ppb phenethyl acetate was used, the soybean stuffy smell due to retort sterilization could be suppressed, but a slightly foreign flavor was perceived. Therefore, it was found that a phenethyl acetate content of less than 1,000 ppb was preferred.

From the above results, it was found that the concentration of phenethyl acetate in retort liquid seasonings containing soybean protein was preferably in the range of 1 ppb or more and less than 1,000 ppb in order to suppress the soybean stuffy smell due to retort sterilization and not to impart a foreign flavor derived from the phenethyl acetate aroma to the liquid seasonings.

Example 3 Cooked Test with Test Seasoning Liquid

[3-1. Preparation of Liquid Seasoning]

In the same manner as in Example 1, each test seasoning liquid was prepared by mixing soybean protein, sugar, water, soy sauce, and phenethyl acetate solution in the blending amount shown in the following Table 5C, and then subjected to retort sterilization. However, for test seasoning liquids 18 and 19, soy sauce was not mixed with other ingredients but filled alone in an amount of 10.0 g into aluminum pouches. For the aluminum pouches filled with soy sauce, the test seasoning liquid 18 was subjected to retort sterilization (at 121.1°C for 10 minutes (Fo value: 10)), and

the test seasoning liquid 19 was subjected to non-retort sterilization (at 85°C for 5 minutes (Fo value: 0.00126)).

[Table 5C]

| | Test seasoning liquid 15 | Test seasoning liquid 16 | Test seasoning liquid 17 | Test seasoning liquid 18 | Test seasoning liquid 19 |
|---|---|---|---|---|---|
| Soybean protein | 10.0 g | 10.0 g | 10.0 g | 10.0 g | 10.0 g |
| Soy sauce | 10.0 g | 10.0 g | 10.0 g | * | * |
| Sugar | 5.0 g | 5.0 g | 5.0 g | 5.0 g | 5.0 g |
| Water | Residue | Residue | Residue | Residue | Residue |
| Phenethyl acetate solution | 0 μl | 100 μl | 100 μl | 0 μl | 0 μl |
| Total | 100 g | 100 g | 100 g | 100 g | 100 g |
| Phenethyl acetate concentration (to test seasoning liquid) | 0 ppb | 2 ppb | 100 ppb | 0 ppb | 0 ppb |
| Phenethyl acetate concentration (to soybean protein) | 0 ppb | 20 ppb | 1000 ppb | 0 ppb | 0 ppb |
| Phenethyl acetate concentration (to soy sauce) | 0 ppb | 20 ppb | 1000 ppb | 0 ppb | 0 ppb |

* In test seasoning liquids 18 and 19, soy sauce was filled only in an amount of 10.0 g into another aluminum pouch. In the test seasoning liquid 18, soy sauce was subjected to retort sterilization (at 121.1°C, for 10 minutes, Fo value: 10). In the test seasoning liquid 19, soy sauce was subjected to non-retort sterilization (at 85°C, for 5 minutes, Fo value: 0.00126).

[3-2. Cooking with Liquid Seasoning]

Niku Tofu (simmered meat with tofu) with soybean protein instead of ground beef was prepared using test seasoning liquids 15 to 19. Specifically, tofu was drained and cut into bite-sized pieces. Subsequently, a frying pan with 1 teaspoon of vegetable oil was heated, and tofu was roasted on both sides over medium heat for 3 to 4 minutes. The test seasoning liquids were added to this frying pan and stir-fried together over medium heat for 1 minute to obtain the Niku Tofu (simmered meat with tofu).

[3-3 Sensory Evaluation Method]

The intensity of a soybean stuffy smell when Niku Tofu (simmered meat with tofu) was consumed in the same manner as in 1-2 above was evaluated at five levels with respect to the obtained Niku Tofu (simmered meat with tofu). At that time, as evaluation criteria, the soybean stuffy smell of the obtained Niku Tofu (simmered meat with tofu) using the test seasoning liquid 19 was rated as 5, the soybean stuffy smell of the obtained Niku Tofu (simmered meat with tofu) using the test seasoning liquid 18 was rated as 1.

[3-4 Results of Sensory Evaluation]

Sensory evaluation of cooked Niku Tofu (simmered meat with tofu) was carried out using each of test seasoning liquids 15 to 19. Results are shown in Table 6C.

[Table 6C]

| | Test seasoning liquid 15 | Test seasoning liquid 16 | Test seasoning liquid 17 | Test seasoning liquid 18 | Test seasoning liquid 19 |
|---|---|---|---|---|---|
| Phenethyl acetate concentration (to test seasoning liquid) | 0 ppb | 2 ppb | 100 ppb | 0 ppb | 0 ppb |

(continued)

| | Test seasoning liquid 15 | Test seasoning liquid 16 | Test seasoning liquid 17 | Test seasoning liquid 18 | Test seasoning liquid 19 |
|---|---|---|---|---|---|
| Phenethyl acetate concentration (to soybean protein) | 0 ppb | 10 ppb | 500 ppb | 0 ppb | 0 ppb |
| Phenethyl acetate concentration (to soy sauce) | 0 ppb | 20 ppb | 1000 ppb | 0 ppb | 0 ppb |
| Panelist A | 2 | 5 | 5 | 1 | 5 |
| Panelist B | 2 | 5 | 5 | 1 | 5 |
| Panelist C | 1 | 5 | 5 | 1 | 5 |
| Average | 1.7 | 5.0 | 5.0 | 1.0 | 5.0 |

As shown in Table 6C, Niku Tofu (simmered meat with tofu) obtained using the test seasoning liquid 15, which contained soybean protein and was subjected to retort sterilization, was inferior in quality as Niku Tofu (simmered meat with tofu) due to the soybean stuffy smell. In contrast, for the Niku Tofu (simmered meat with tofu) obtained using test seasoning liquids 16 and 17 containing phenethyl acetate, no soybean stuffy smell was perceived, and it was delicious, combined with a clean soy sauce taste.

Thus, it was found that the cooked product obtained by using the container-packed seasoning composition with the suppressed soybean stuffy smell had a good flavor.

Example 4 Evaluation of Suppression of Soybean Stuffy Smell by Phenethyl Acetate (3)

In the same manner as in Example 1, each test seasoning liquid was prepared by mixing granular soybean protein, soy sauce, sugar, kelp extract, water, and phenethyl acetate solution in the blending amount shown in the following Table 7C and then subjected to retort sterilization (at 121.1°C for 10 minutes (Fo value: 10)).

[Table 7C]

| | Test seasoning liquid 20 | Test seasoning liquid 21 | Test seasoning liquid 22 | Test seasoning liquid 23 | Test seasoning liquid 24 |
|---|---|---|---|---|---|
| Soybean protein | 10.0 g | 10.0 g | 10.0 g | 5.0 g | 20.0 g |
| Soy sauce | 0.0 g | 5.0 g | 20.0 g | 10.0 g | 10.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| Phenethyl acetate solution | 100 μl | 100 μl | 100 μl | 100 μl | 100 μl |
| Total | 100 g | 100 g | 100 g | 100 g | 100 g |
| Phenethyl acetate concentration (to test seasoning liquid) | 1 ppb | 1 ppb | 1 ppb | 1 ppb | 1 ppb |
| Phenethyl acetate concentration (to soybean protein) | 10 ppb | 10 ppb | 10 ppb | 20 ppb | 5 ppb |
| Phenethyl acetate concentration (to soy sauce) | 0 ppb | 20 ppb | 5 ppb | 10 ppb | 10 ppb |

In the same manner as in Example 1, sensory evaluation was carried out on each of the test seasoning liquids 20 to 24 with altered blending amounts of granular soybean protein or soy sauce after retort sterilization. However, it was evaluated by contrasting it with the soybean stuffy smell of the test seasoning liquid 6. As a result, panelists A to C

all evaluated the soybean stuffy smell of the test seasoning liquids 20 to 24 as equivalent to that of the test seasoning liquid 6.

Example 5 Evaluation of Suppression of Soybean Stuffy Smell by Phenethyl Acetate in the Absence of Soy Sauce (1)

[5-1. Preparation of Liquid Seasoning]

In the same manner as in Example 1, test seasoning liquids 201 to 203 were prepared by replacing soy sauce with water in the blends shown in Table 1C, corresponding to test seasoning liquids 1 to 3, respectively. In other words, each test seasoning liquid was prepared by mixing soybean protein, sugar, and phenethyl acetate solution, excepting soy sauce, in the blending amount shown in Table 1C and then adjusting with water to make 100 g in total. Note that the granular soybean protein used was "Vegitex SHF" (manufactured by Fuji Oil Co., Ltd.).

Each of the prepared test seasoning liquids was filled in an amount of 100 g into an aluminum pouch. This was subjected to non-retort sterilization (at 85°C for 5 minutes (Fo value: 0.00126)).

Two liquid seasoning solutions for evaluation criteria were prepared with the same blend as the test seasoning liquid 201, and one was subjected to retort sterilization (at 121.1°C for 10 minutes (Fo value: 10)) while the other was sterilized by reaching a temperature of 85°C.

[5-2 Results of Sensory Evaluation]

In the same manner as in Example 1, sensory evaluation was carried out on each of the test seasoning liquids 201 to 203 with altered blending amounts of phenethyl acetate, which were also subjected to non-retort sterilization. Note that as evaluation criteria, the soybean stuffy smell of the test seasoning liquid 201 having been subjected to retort sterilization was rated as 1, and the soybean stuffy smell of the test seasoning liquid 201 after sterilization by reaching a temperature of 85°C was rated as 5. Results are shown in Table 8C.

[Table 8C]

| | Test seasoning liquid 201 | Test seasoning liquid 202 | Test seasoning liquid 203 |
|---|---|---|---|
| Phenethyl acetate concentration (to test seasoning liquid) | 0 ppb | 10 ppb | 100 ppb |
| Phenethyl acetate concentration (to soybean protein) | 0 ppb | 100 ppb | 1000 ppb |
| Phenethyl acetate concentration (to soy sauce) | - | - | - |
| Panelist A | 3 | 5 | 5 |
| Panelist B | 3 | 5 | 5 |
| Panelist C | 3 | 5 | 5 |
| Average | 3.0 | 5.0 | 5.0 |

As shown in Table 8C, it was found that the soybean stuffy smell caused by non-retort sterilization could be suppressed by containing phenethyl acetate in the system without soy sauce blended.

Example 6 Evaluation of Suppression of Meat Heating smell by Phenethyl Acetate in the Absence of Soy Sauce (2)

[6-1. Preparation of Liquid Seasoning]

In the same manner as in Examples 1 and 2, test seasoning liquids 211 to 216 were prepared by replacing soy sauce with water in the blends shown in Table 3C, corresponding to test seasoning liquids 4, 6 to 8, 13, and 14, respectively. In other words, each test seasoning liquid was prepared by mixing granular soybean protein, sugar, kelp extract, and phenethyl acetate solution, excepting soy sauce, in the blending amount shown in Table 3C and then adjusting with water to make 100 g in total.

Each of the prepared test seasoning liquids was filled in an amount of 100 g into an aluminum pouch. This was subjected to retort sterilization (121.1°C for 10 minutes (Fo value 10)).

Two liquid seasoning solutions for evaluation criteria were prepared with the same blend as the test seasoning

liquid 211, and one was subjected to retort sterilization (at 121.1°C for 10 minutes (Fo value: 10)) while the other was sterilized by reaching a temperature of 85°C.

[6-2 Results of Sensory Evaluation]

In the same manner as in Example 5, sensory evaluation was carried out on each of the test seasoning liquids 211 to 216 with altered blending amounts of phenethyl acetate, which were also subjected to retort sterilization. Results are shown in Table 9C.

[Table 9C]

| | Test seasoning liquid 211 | Test seasoning liquid 212 | Test seasoning liquid 213 | Test seasoning liquid 214 | Test seasoning liquid 215 | Test seasoning liquid 216 |
|---|---|---|---|---|---|---|
| Phenethyl acetate concentration (to test seasoning liquid) | 0 ppb | 1 ppb | 2 ppb | 5 ppb | 500 ppb | 1000 ppb |
| Phenethyl acetate concentration (to soybean protein) | 0 ppb | 10 ppb | 20 ppb | 50 ppb | 5000 ppb | 10000 ppb |
| Phenethyl acetate concentration (to soy sauce) | - | - | - | - | - | - |
| Panelist A | 1 | 3 | 3 | 4 | 5 | 5 |
| Panelist B | 1 | 3 | 4 | 5 | 5 | 5 |
| Panelist C | 1 | 3 | 4 | 5 | 5 | 5 |
| Average | 1.0 | 3.0 | 3.7 | 4.7 | 5.0 | 5.0 |

As shown in Table 9C, it was found that the soybean stuffy smell caused by retort sterilization could be suppressed in a concentration-dependent manner by containing phenethyl acetate in the system without soy sauce blended.

Example 4

Example 1 Evaluation of Suppression of Heat Deterioration Smell Based on Food Material by Phenethyl Acetate

[1-1. Preparation of Liquid Seasoning]

In the same manner as in Example 1, a 100 ppm phenethyl acetate solution was prepared (0.001 mg/10 μl). The amount of phenethyl acetate solution added to each test seasoning was 20 μl.

Each test seasoning liquid was prepared by mixing an ingredient with phenethyl acetate solution in the blending amount shown in the following Table 1D. Note that the dried bonito used was "Katsuo Kezuribusi Hasai (Large)" (Maruhachi Muramatsu, Inc.), the sweet sake used was "Manjo Hon Mirin" (Kikkoman Corporation), and the miso used was "Pro Aka Miso" (Marukome co., ltd.). Carrots were shredded into 15 mm cubes, ginger used into 2 mm cubes, and red tuna into 20 mm × 20 mm × 5 mm cubes.

The prepared test seasoning liquid was filled in an amount of 100 g into an aluminum pouch. This was subjected to retort sterilization (at 121.1°C, for 10 minutes (Fo value: 10)).

[Table 1D]

| | Test seasoning liquid 1 | Test seasoning liquid 2 | Test seasoning liquid 3 | Test seasoning liquid 4 | Test seasoning liquid 5 | Test seasoning liquid 6 | Test seasoning liquid 7 |
|---|---|---|---|---|---|---|---|
| Carrot | 20.0 g | - | - | - | - | - | - |
| Ginger | - | 20.0 g | - | - | - | - | - |
| Dried bonito | - | - | 10.0 g | - | - | - | - |
| Red tuna | - | - | - | 20.0 g | - | - | - |
| Dried young sardines | - | - | - | - | 20.0 g | - | - |
| Sweet sake | - | - | - | - | - | 15.0 g | - |
| Miso | - | - | - | - | - | - | 20.0 g |
| Soy sauce | 10.0 g | 10.0 g | 10.0 g | 10.0 g | 10.0 g | 10.0 g | - |

| | | | | | | | |
|---|---|---|---|---|---|---|---|
| Sugar | 5.0 g | 5.0 g | 5.0 g | 5.0 g | 5.0 g | - | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| Phenethyl acetate solution | 0 mg | 0 mg | 0 mg | 0 mg | 0 mg | 0 mg | 0 mg |
| Total | 100 g | 100 g | 100 g | 100 g | 100 g | 100 g | 100 g |
| Phenethyl acetate concentration (to test seasoning liquid) | - | - | - | - | - | - | - |
| Phenethyl acetate concentration (to soy sauce) | - | - | - | - | - | - | - |

| | Test seasoning liquid 8 | Test seasoning liquid 9 | Test seasoning liquid 10 | Test seasoning liquid 11 | Test seasoning liquid 12 | Test seasoning liquid 13 | Test seasoning liquid 14 |
|---|---|---|---|---|---|---|---|
| Carrot | 20.0 g | - | - | - | - | - | - |
| Ginger | - | 20.0 g | - | - | - | - | - |
| Dried bonito | - | - | 10.0 g | - | - | - | - |
| Red tuna | - | - | - | 20.0 g | - | - | - |
| Dried young sardines | - | - | - | - | 20.0 g | - | - |
| Sweet sake | - | - | - | - | - | 15.0 g | - |
| Miso | - | - | - | - | - | - | 20.0 g |
| Soy sauce | 10.0 g | 10.0 g | 10.0 g | 10.0 g | 10.0 g | 10.0 g | - |
| Sugar | 5.0 g | 5.0 g | 5.0 g | 5.0 g | 5.0 g | - | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| phenethyl acetate solution | 20 µl | 20 µl | 20 µl | 20 µl | 20 µl | 20 µl | 20 µl |
| Total | 100 g | 100 g | 100 g | 100 g | 100 g | 100 g | 100 g |
| Phenethyl acetate concentration (to test seasoning liquid) | 20 ppb | 20 ppb | 20 ppb | 20 ppb | 20 ppb | 20 ppb | 20 ppb |
| Phenethyl acetate concentration (to soy sauce) | 200 ppb | 200 ppb | 200 ppb | 200 ppb | 200 ppb | 200 ppb | - |

[1-2 Sensory Evaluation Method]

Panelists (3 persons from A to C) with an excellent ability to sniff out the heat deterioration smell were asked to take a spoonful of the test seasoning liquids 1 to 7 and 8 to 14 having been subjected to retort sterilization, at ambient temperature and evaluate them by sniffing out the heat deterioration smell which comes up from the inside of the mouth to the nose when consumed. At that time, the heat deterioration smells caused by the test seasoning liquids 1 to 7 were evaluated based on whether or not they were each suppressed by the test seasoning liquids 8 to 14 (Yes/No). Note that the panelists (training period: 10 to 20 years) were trained to discuss and evaluate the heat deterioration smell before carrying out the sensory test. Specifically, characteristics of the heat deterioration smell were discussed and reconciled among the panelists to ensure that each panelist had a common understanding thereof. In addition, in order to ensure the validity of the sensory test, the panelists were trained for evaluation using several test seasoning liquids, and the reproducibility of the evaluation by each panelist was checked. After these procedures, the panelists were used to evaluate the heat deterioration smell of each test seasoning liquid.

[1-3 Results of Sensory Evaluation]

Results of sensory evaluation of test seasoning liquids 8 to 14 containing phenethyl acetate after retort sterilization are shown in Table 2D.

[Table 2D]

| Test seasoning liquid No. | Ingredient classification | Ingredient | PA content to composition (ppb) | PA content to soy sauce (ppb) | Result of sensory evaluation |
|---|---|---|---|---|---|
| Test seasoning liquid 8 | Root vegetables | Carrot | 20 | 200 | Yes |
| Test seasoning liquid 9 | Aromatic vegetable | Ginger | 20 | 200 | Yes |
| Test seasoning liquid 10 | Fish | Dried bonito | 20 | 200 | Yes |
| Test seasoning liquid 11 | Processed marine products | Red tuna | 20 | 200 | Yes |
| Test seasoning liquid 12 | | Dried young sardines | 20 | 200 | Yes |
| Test seasoning liquid 13 | Seasoning | Sweet sake | 20 | 200 | Yes |
| Test seasoning liquid 14 | | Miso | 20 | - | Yes |

A very strong heat deterioration smell was generally perceived in the test seasoning liquids 1 to 7 without phenethyl acetate. However, as shown in Table 2D, the test seasoning liquids 8 to 14 containing phenethyl acetate were suppressed in heat deterioration smell having been perceived in the test seasoning liquids 1 to 7 .

Specifically, a strong earthy smell was perceived in the test seasoning liquid 1 after retort sterilization. In contrast, in the test seasoning liquid 8, no such heat deterioration smell was perceived, and a sweet flavor of fresh carrots was perceived.

In the test seasoning liquid 2, a steamed smell and a tangy spicy taste with bitterness were strongly perceived after retort sterilization. In contrast, in the test seasoning liquid 9, no such heat deterioration smell was perceived, and a refreshing flavor of fresh ginger was perceived.

In the test seasoning liquid 3, a raw fishy odor, a caramel-like burnt sweet smell, and a bitter taste were strongly perceived after retort sterilization. In contrast, in the test seasoning liquid 10, no such heat deterioration smell was perceived, and a fresh dried-bonito flavor was perceived.

In the test seasoning liquid 4, a raw fishy odor, a steamed smell, and an oxidized oil smell were strongly perceived after retort sterilization. In contrast, in the test seasoning liquid 11, no such heat deterioration smell was perceived, and a flavor of boiled fish immediately after preparation was perceived.

In the test seasoning liquid 5, a raw fishy odor, viscera-derived acridity, and a bitter taste were strongly perceived after retort sterilization. In contrast, in the test seasoning liquid 12, no such heat deterioration smell was perceived, and a flavor of fresh dried-young sardines was perceived.

In the test seasoning liquid 6, a caramel-like burnt sweet smell, a bitter taste, and a steamed smell were strongly perceived after retort sterilization. In contrast, in the test seasoning liquid 13, no such heat deterioration smell was perceived, and a sweet flavor of fresh sweet sake was perceived.

In the test seasoning liquid 7, a caramel-like burnt sweet smell and a steamed soybean smell were strongly perceived after retort sterilization. In contrast, in the test seasoning liquid 14, no such heat deterioration smell was

perceived, and a fresh miso flavor was perceived.

According to the results described in Table 2D, it was found that the heat deterioration smell based on ingredients was suppressed by containing phenethyl acetate.

Example 5

Example 1 Evaluation of Improving Action of Phenethyl Acetate on Beef Flavor

[1-1. Preparation of Liquid Seasoning]

In a 100 ml volumetric flask, 1 g of phenethyl acetate with a purity of 98% (Sigma-Aldrich) was placed and diluted with 95% ethanol to prepare a phenethyl acetate stock solution (1 g/100 ml). Subsequently, a phenethyl acetate solution to be added to each test seasoning was unified to 100 μl, and the phenethyl acetate stock solution was diluted with water so that the phenethyl acetate content to each test seasoning was at a predetermined concentration to prepare each phenethyl acetate solution. A nonalactone stock solution and a nonalactone solution were prepared in the same way, except that δ-nonalactone with a purity of 98% (Tokyo Chemical Industry Co., Ltd.) was used instead of phenethyl alcohol.

Each test seasoning liquid was prepared by mixing ground beef, soy sauce (tokumaru), table salt, sugar, kelp extract, phenethyl acetate solution, and nonalactone solution in the blending amount shown in the following Table 1E and then adjusting with water to make 100 g in total. Note that the soy sauce (tokumaru) used was "Kikkoman Tokusen Marudaizu Shoyu" (HEMF: 30 ppm or more; table salt: 13.68% by mass; alanine: 6.68 mg/g; and glutamic acid: 8.77 mg/g; Kikkoman Corporation), in which phenethyl acetate was not detected. The kelp extra used was "Kobukon Hidaka P" (table salt: 7.2% by mass; alanine: 0.06 mg/g; and glutamic acid: 0.24 mg/g; Kikkoman Corporation). The imported grass-fed beef used was a round of Australian beef (85% lean, 5 mm minced, and grass-fed). Wagyu used was a shoulder of Japanese Black beef from Kagoshima (85% lean, 5 mm minced, and grain-fed).

The prepared test seasoning liquid was filled in an amount of 100 g into an aluminum pouch. This was subjected to non-retort sterilization (at 90°C for 15 minutes).

[Table 1E]

| | Control | Test seasoning liquid 1-1 | Test seasoning liquid 1-2 | Test seasoning liquid 1-3 | Test seasoning liquid 1-4 | Test seasoning liquid 1-5 | Test seasoning liquid 1-6 |
|---|---|---|---|---|---|---|---|
| Imported grass-fed beef | 20.0 g | 20.0 g | 20.0 g | 20.0 g | 20.0 g | 20.0 g | 20.0 g |
| Wagyu | 0.0 g | 0.0 g | 0.0 g | 0.0 g | 0.0 g | 0.0 g | 0.0 g |
| Soy sauce (tokumaru) | 0.0 g | 10.0 g | 10.0 g | 10.0 g | 10.0 g | 10.0 g | 10.0 g |
| Table salt | 0.69 g | 0.0 g | 0.0 g | 0.0 g | 0.0 g | 0.0 g | 0.0 g |
| Sugar | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| Nonalactone solution | 0 μl | 0 μl | 100 μl | 0 μl | 0 μl | 0 μl | 0 μl |

| | | | | | | | |
|---|---|---|---|---|---|---|---|
| Phenethyl acetate solution | 0 μl | 0 μl | 0 μl | 100 μl | 100 μl | 100 μl | 100 μl |
| Total | 100.0 g | 100.0 g | 100.0 g | 100.0 g | 100.0 g | 100.0 g | 100.0 g |
| Nonalactone concentration (to test seasoning liquid) | 0 ppm | 0 ppm | 10 ppm | 0 ppm | 0 ppm | 0 ppm | 0 ppm |
| Phenethyl acetate concentration (to test seasoning liquid) | 0 ppb | 0 ppb | 0 ppb | 1 ppb | 10 ppb | 20 ppb | 100 ppb |
| Phenethyl acetate concentration (to soy sauce) | 0 ppb | 0 ppb | 0 ppb | 10 ppb | 100 ppb | 200 ppb | 1000 ppb |

| | Test seasoning liquid 1-7 | Test seasoning liquid 1-8 | Test seasoning liquid 1-9 | Test seasoning liquid 1-10 | Test seasoning liquid 1-11 | Test seasoning liquid 1-12 | Test seasoning liquid 1-13 |
|---|---|---|---|---|---|---|---|
| Imported grass-fed beef | 20.0 g | 20.0 g | 20.0 g | 0.0 g | 0.0 g | 0.0 g | 0.0 g |
| Wagyu | 0.0 g | 0.0 g | 0.0 g | 20.0 g | 20.0 g | 20.0 g | 20.0 g |
| Soy sauce (tokumaru) | 10.0 g | 10.0 g | 10.0 g | 10.0 g | 10.0 g | 10.0 g | 10.0 g |
| Table salt | 0.0 g | 0.0 g | 0.0 g | 0.0 g | 0.0 g | 0.0 g | 0.0 g |
| Sugar | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| Nonalactone solution | 0 μl | 0 μl | 0 μl | 0 μl | 100 μl | 0 μl | 0 μl |
| Phenethyl acetate solution | 100 μl | 100 μl | 100 μl | 0 μl | 0 μl | 100 μl | 100 μl |
| Total | 100.0 g | 100.0 g | 100.0 g | 100.0 g | 100.0 g | 100.0 g | 100.0 g |
| Nonalactone concentration (to test seasoning liquid) | 0 ppm | 0 ppm | 0 ppm | 0 ppm | 10 ppm | 0 ppm | 0 ppm |
| Phenethyl acetate concentration (to test seasoning liquid) | 500 ppb | 1000 ppb | 1500 ppb | 0 ppb | 0 ppb | 10 ppb | 100 ppb |
| Phenethyl acetate concentration (to soy sauce) | 5000 ppb | 10000 ppb | 15000 ppb | 0 ppb | 0 ppb | 100 ppb | 1000 ppb |

[1-2 Sensory Evaluation Method]

Panelists (3 persons from A to C) with an excellent ability to evaluate meat flavors were asked to take a spoonful of test seasoning liquids having been subjected to sterilization at ambient temperature and evaluate the intensity of each flavor of the meat which comes up from the inside of the mouth to the nose when consumed, at seven levels, as follows. The panelists (training period: 10 to 20 years) were trained to discuss and evaluate the meat flavor before carrying out the sensory test. Characteristics of the meat flavor were discussed and reconciled among the panelists to ensure that each panelist had a common understanding thereof. In addition, in order to ensure the validity of the sensory test, the panelists were trained for evaluation using several test seasoning liquids, and the reproducibility of the evaluation by each panelist was checked. After these procedures, the panelists were used to evaluate the meat flavor of each test seasoning liquid.

The Wagyu beef aroma was defined as a sweet aroma specific to Wagyu beef, which is perceived in the mouth. The umami of meat was defined as umami inherent in the meat provided by a fatty aroma of the meat. The grass smell was defined as an unpleasant smell specific to grass-fed beef, which is perceived in the mouth.

<Wagyu Beef Aroma>

1: extremely weakly perceived
2: very weakly perceived
3: slightly weakly perceived
4: perceived
5: slightly strongly perceived
6: very strongly perceived
7: extremely strongly perceived

**[0283]** * As the evaluation criteria, the control (test section in which table salt equivalent to the salt concentration of soy sauce was added instead of the soy sauce) was set to "1", the test seasoning liquid 1-2 containing imported grass-fed beef and 10 ppm nonalactone was set to " 4", and the test seasoning liquid 1-10 containing Wagyu was set to "6".

<Umami of Meat>

1: extremely weakly perceived
2: very weakly perceived
3: slightly weakly perceived
4: perceived
5: slightly strongly perceived
6: very strongly perceived
7: extremely strongly perceived

**[0285]** * As the evaluation criteria, the control was set to "1", and the test seasoning liquid 1-10 containing Wagyu was set to "6".

<Grass Smell>

1: extremely strongly perceived
2: very strongly perceived
3: slightly strongly perceived
4: perceived
5: slightly weakly perceived
6: very weakly perceived
7: not perceived

**[0287]** * As the evaluation criteria, the control was set to " 1", the test seasoning liquid 1-2 containing imported grass-fed beef and 10 ppm nonalactone was set to " 4", and the test seasoning liquid 1-10 containing Wagyu was set to "6".

[1-3 Results of Sensory Evaluation]

Results of sensory evaluations carried out for each test seasoning are shown in Table 2E1 to Table 2E3.

[Table 2E1]

| | | Control | Test seasoning liquid 1-1 | Test seasoning liquid 1-2 | Test seasoning liquid 1-3 | Test seasoning liquid 1-4 | Test seasoning liquid 1-5 | Test seasoning liquid 1-6 |
|---|---|---|---|---|---|---|---|---|
| Nonalactone concentration (to test seasoning liquid) | | 0 ppm | 0 ppm | 10 ppm | 0 ppm | 0 ppm | 0 ppm | 0 ppm |
| Phenethyl acetate concentration (to test seasoning liquid) | | 0 ppb | 0 ppb | 0 ppb | 1 ppb | 10 ppb | 20 ppb | 100 ppb |
| Phenethyl acetate concentration (to soy sauce) | | 0 ppb | 0 ppb | 0 ppb | 10 ppb | 100 ppb | 200 ppb | 1000 ppb |
| Wagyu aroma | Panelist A | 1 | 1 | 4 | 4 | 5 | 7 | 7 |
| | Panelist B | 1 | 1 | 4 | 4 | 5 | 7 | 7 |
| | Panelist C | 1 | 1 | 4 | 4 | 5 | 7 | 7 |
| | Average | 1.0 | 1.0 | 4.0 | 4.0 | 5.0 | 7.0 | 7.0 |

| | | Test seasoning liquid 1-7 | Test seasoning liquid 1-8 | Test seasoning liquid 1-9 | Test seasoning liquid 1-10 | Test seasoning liquid 1-11 | Test seasoning liquid 1-12 | Test seasoning liquid 1-13 |
|---|---|---|---|---|---|---|---|---|
| Nonalactone concentration (to test seasoning liquid) | | 0 ppm | 0 ppm | 0 ppm | 0 ppm | 10 ppm | 0 ppm | 0 ppm |
| Phenethyl acetate concentration (to test seasoning liquid) | | 500 ppb | 1000 ppb | 1500 ppb | 0 ppb | 0 ppb | 10 ppb | 100 ppb |
| Phenethyl acetate concentration (to soy sauce) | | 5000 ppb | 10000 ppb | 15000 ppb | 0 ppb | 0 ppb | 100 ppb | 1000 ppb |
| Wagyu aroma | Panelist A | 7 | 7 | 7 | 6 | 7 | 7 | 7 |
| | Panelist B | 7 | 7 | 7 | 6 | 7 | 7 | 7 |
| | Panelist C | 7 | 7 | 7 | 6 | 7 | 7 | 7 |
| | Average | 7.0 | 7.0 | 7.0 | 6.0 | 7.0 | 7.0 | 7.0 |

[Table 2E2]

| | | Control | Test seasoning liquid 1-1 | Test seasoning liquid 1-2 | Test seasoning liquid 1-3 | Test seasoning liquid 1-4 | Test seasoning liquid 1-5 | Test seasoning liquid 1-6 |
|---|---|---|---|---|---|---|---|---|
| Nonalactone concentration (to test seasoning liquid) | | 0 ppm | 0 ppm | 10 ppm | 0 ppm | 0 ppm | 0 ppm | 0 ppm |
| Phenethyl acetate concentration (to test seasoning liquid) | | 0 ppb | 0 ppb | 0 ppb | 1 ppb | 10 ppb | 20 ppb | 100 ppb |
| Phenethyl acetate concentration (to soy sauce) | | 0 ppb | 0 ppb | 0 ppb | 10 ppb | 100 ppb | 200 ppb | 1000 ppb |
| Umami of meat | Panelist A | 1 | 4 | 4 | 6 | 7 | 7 | 7 |
| | Panelist B | 1 | 4 | 4 | 6 | 6 | 7 | 7 |
| | Panelist C | 1 | 4 | 4 | 6 | 6 | 7 | 7 |
| | Average | 1.0 | 4.0 | 4.0 | 6.0 | 6.3 | 7.0 | 7.0 |

| | | Test seasoning liquid 1-7 | Test seasoning liquid 1-8 | Test seasoning liquid 1-9 | Test seasoning liquid 1-10 | Test seasoning liquid 1-11 | Test seasoning liquid 1-12 | Test seasoning liquid 1-13 |
|---|---|---|---|---|---|---|---|---|
| Nonalactone concentration (to test seasoning liquid) | | 0 ppm | 0 ppm | 0 ppm | 0 ppm | 10 ppm | 0 ppm | 0 ppm |
| Phenethyl acetate concentration (to test seasoning liquid) | | 500 ppb | 1000 ppb | 1500 ppb | 0 ppb | 0 ppb | 10 ppb | 100 ppb |
| Phenethyl acetate concentration (to soy sauce) | | 5000 ppb | 10000 ppb | 15000 ppb | 0 ppb | 0 ppb | 100 ppb | 1000 ppb |
| Umami of meat | Panelist A | 7 | 7 | 7 | 6 | 6 | 7 | 7 |
| | Panelist B | 7 | 7 | 7 | 6 | 6 | 7 | 7 |
| | Panelist C | 7 | 7 | 7 | 6 | 6 | 7 | 7 |
| | Average | 7.0 | 7.0 | 7.0 | 6.0 | 6.0 | 7.0 | 7.0 |

[Table 2E3]

| | Control | Test seasoning | Test seasoning | Test seasoning | Test seasoning | Test seasoning | Test seasoning |
|---|---|---|---|---|---|---|---|

| | | | liquid 1-1 | liquid 1-2 | liquid 1-3 | liquid 1-4 | liquid 1-5 | liquid 1-6 |
|---|---|---|---|---|---|---|---|---|
| Nonalactone concentration (to test seasoning liquid) | | 0 ppm | 0 ppm | 10 ppm | 0 ppm | 0 ppm | 0 ppm | 0 ppm |
| Phenethyl acetate concentration (to test seasoning liquid) | | 0 ppb | 0 ppb | 0 ppb | 1 ppb | 10 ppb | 20 ppb | 100 ppb |
| Phenethyl acetate concentration (to soy sauce) | | 0 ppb | 0 ppb | 0 ppb | 10 ppb | 100 ppb | 200 ppb | 1000 ppb |
| Grass smell | Panelist A | 1 | 3 | 4 | 5 | 7 | 7 | 7 |
| | Panelist B | 1 | 3 | 4 | 6 | 6 | 7 | 7 |
| | Panelist C | 1 | 3 | 4 | 5 | 6 | 7 | 7 |
| | Average | 1.0 | 3.0 | 4.0 | 5.3 | 6.3 | 7.0 | 7.0 |

| | | Test seasoning liquid 1-7 | Test seasoning liquid 1-8 | Test seasoning liquid 1-9 | Test seasoning liquid 1-10 | Test seasoning liquid 1-11 | Test seasoning liquid 1-12 | Test seasoning liquid 1-13 |
|---|---|---|---|---|---|---|---|---|
| Nonalactone concentration (to test seasoning liquid) | | 0 ppm | 0 ppm | 0 ppm | 0 ppm | 10 ppm | 0 ppm | 0 ppm |
| Phenethyl acetate concentration (to test seasoning liquid) | | 500 ppb | 1000 ppb | 1500 ppb | 0 ppb | 0 ppb | 10 ppb | 100 ppb |
| Phenethyl acetate concentration (to soy sauce) | | 5000 ppb | 10000 ppb | 15000 ppb | 0 ppb | 0 ppb | 100 ppb | 1000 ppb |
| Grass smell | Panelist A | 7 | 7 | 7 | 6 | 7 | 7 | 7 |
| | Panelist B | 7 | 7 | 7 | 6 | 7 | 7 | 7 |
| | Panelist C | 7 | 7 | 7 | 6 | 7 | 7 | 7 |
| | Average | 7.0 | 7.0 | 7.0 | 6.0 | 7.0 | 7.0 | 7.0 |

From a comparison between the control and the test seasoning liquid 1-1 containing soy sauce, the umami and grass smell of meat were improved by containing soy sauce, but the Wagyu beef aroma was not imparted. In addition, the meat smell due to a grass smell was perceived in both the control and test seasoning liquid 1-1.

From a comparison between the test seasoning liquids 1-1 and 1-2, when nonalactone was added to the test seasonings liquids containing imported grass-fed beef, the Wagyu beef aroma was improved. However, there was only a slight improvement in the grass smell and no improvement in the umami of the meat. In addition, in the test seasoning liquid 1-2 to which nonalactone was added, the sweet aroma of Wagyu was perceived, but the coconut-like sweet smell was slightly foreign, and this smell did not contribute to the umami of the meat.

In contrast, from a comparison between the test seasoning liquids 1-1 and 1-3, when phenethyl acetate was added to the test seasoning liquids containing imported grass-fed beef, surprisingly, improvements were observed not only in Wagyu beef aroma but also in grass smell and umami of the meat. Furthermore, this improving action was enhanced in a concentration-dependent manner for the phenethyl acetate added.

In addition, when nonalactone was added to the test seasoning liquid containing Wagyu, improvement was observed for Wagyu beef aroma and grass smell, but no clear improvement was observed for the umami of the meat. Especially, the sweet, coconut-like smell was perceived as slightly foreign. In contrast, when phenethyl acetate was added to the test seasoning liquids containing Wagyu, surprisingly, the Wagyu flavor was further increased.

From the above results, the following findings were obtained.

The Wagyu beef aroma, the umami of meat, and the grass smell were improved by the addition of phenethyl acetate, regardless of the type of meat.

The improving action on the meat flavor was increased with the addition of phenethyl acetate in an amount of 1 ppb or more and with increasing amounts of phenethyl acetate, such as 10 ppb and 20 ppb.

The δ-nonalactone had an effect of imparting the Wagyu beef aroma and suppressing the glass smell, but no effect of imparting the umami of the meat was observed.

Example 2 Evaluation of Improving Action of Phenethyl Acetate on Pork Flavor

[2-1. Preparation of Liquid Seasoning]

In the same manner as in Example 1, each test seasoning liquid was prepared by mixing ground pork, soy sauce (tokumaru), soy sauce (usukuchi), table salt, sugar, kelp extract, phenethyl acetate solution, alanine solution, and water in the blending amount shown in the following Table 3E, and then subjected to non-retort sterilization (at 90°C for 5 minutes). The ground pork used was (5 mm minced) shoulder meat of Canadian pork (male and female: castrated, female; and breed: LWD). Note that the soy sauce (usukuchi) used was "Kikkoman Usukuchi Shoyu" (HEMF: 20 ppm or more; table salt: 15.68% by mass; alanine: 2.39 mg/g; and glutamic acid: 7.54 mg/g; Kikkoman Corporation), in which phenethyl acetate was not detected. For an alanine solution, 40 g of alanine with a purity of 99.7% (Musashino Chemical Laboratory, Ltd.) was placed in a 400 ml volumetric flask and filled up with water to prepare an alanine stock solution (100 mg/g). The alanine solution was prepared (10 mg/g) by filling up 13 g of this alanine stock solution with water.

[Table 3E]

| | Control | Test seasoning liquid 2-1 | Test seasoning liquid 2-2 | Test seasoning liquid 2-3 | Test seasoning liquid 2-4 | Test seasoning liquid 2-5 | Test seasoning liquid 2-6 | Test seasoning liquid 2-7 |
|---|---|---|---|---|---|---|---|---|
| Ground pork | 20.0 g | 20.0 g | 20.0 g | 20.0 g | 20.0 g | 20.0 g | 20.0 g | 20.0 g |
| Soy sauce (usukuchi) | 0.0 g | 0.0 g | 0.0 g | 0.0 g | 0.0 g | 10.0 g | 10.0 g | 10.0 g |
| Soy sauce (tokumaru) | 0.0 g | 10.0 g | 10.0 g | 10.0 g | 10.0 g | 0.0 g | 0.0 g | 0.0 g |
| Table salt | 0.69 g | 0.0 g | 0.0 g | 0.0 g | 0.0 g | 0.0 g | 0.0 g | 0.0 g |
| Sugar | 5.0 g | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g | 0.1 g |
| Water | Residue | Residue | Residue | Residue | Residue | Residue | Residue | Residue |
| Alanine solution | 0.0 g | 0.0 g | 0.0 g | 0.0 g | 0.0 g | 0.0 g | 4.3 g | 4.3 g |
| Phenethyl acetate solution | 0 μl | 0 μl | 100 μl | 100 μl | 100 | 0 μl | 0 μl | 100 μl |
| Total | 100.0 g | 100.0 g | 100.0 g | 100.0 g | 100.0 g | 100.0 g | 100.0 g | 100.0 g |
| Phenethyl acetate concentration (to test seasoning liquid) | 0 ppb | 0 ppb | 1 ppb | 20 ppb | 500 ppb | 0 ppb | 0 ppb | 20 ppb |
| Phenethyl acetate concentration (to soy sauce) | 0 ppb | 0 ppb | 10 ppb | 200 ppb | 5000 ppb | 0 ppb | 0 ppb | 200 ppb |
| Alanine concentration (to test seasoning liquid) | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | 0.00 mg/g 0.00 mg/g | 6.68 mg/g 6.68 mg/g | 6.68 mg/g 6.68 mg/g | 6.68 mg/g 6.68 mg/g | 6.68 mg/g 6.68 mg/g | 2.39 mg/g 2.39 mg/g | 6.68 mg/g 6.68 mg/g | 6.68 mg/g 6.68 mg/g |

[2-2 Sensory Evaluation Method]

In the same manner as in Example 1, sensory evaluation was carried out on each of the test seasoning liquids having been subjected to sterilization. A pork unpleasant smell was defined as an unpleasant smell combining an animal smell of pork, an oxidized smell, bloody smell (iron smell), and raw smell. The pork unpleasant smell and umami of meat were each evaluated by the following criteria.

<Pork Unpleasant Smell>

1: extremely strongly perceived
2: very strongly perceived
3: strongly perceived
4: perceived
5: slightly perceived
6: almost not perceived
7: not perceived

**[0300]** * As the evaluation criteria, the control was set to "1", and the test seasoning liquid 2-3 containing 20 ppb phenethyl acetate was set to "7".

<Umami of Meat>

1: extremely weakly perceived
2: very weakly perceived
3: weakly perceived
4: perceived
5: slightly strongly perceived
6: very strongly perceived
7: extremely strongly perceived

**[0302]** * As the evaluation criteria, the control was set to "1", and the test seasoning liquid 2-3 containing 20 ppb phenethyl acetate was set to "7".

[2-3 Results of Sensory Evaluation]

In the same manner as in Example 1, sensory evaluation was carried out on each test seasoning liquid after non-retort sterilization. Results are shown in Table 4E1 and Table 4E2.

[Table 4E1]

| | | Control | Test seasoning liquid 2-1 | Test seasoning liquid 2-2 | Test seasoning liquid 2-3 | Test seasoning liquid 2-4 | Test seasoning liquid 2-5 | Test seasoning liquid 2-6 | Test seasoning liquid 2-7 |
|---|---|---|---|---|---|---|---|---|---|
| Phenethyl acetate concentration (to test seasoning liquid) | | 0 ppb | 0 ppb | 1 ppb | 20 ppb | 500 ppb | 0 ppb | 0 ppb | 20 ppb |
| Phenethyl acetate concentration (to soy sauce) | | 0 ppb | 0 ppb | 10 ppb | 200 ppb | 5000 ppb | 0 ppb | 0 ppb | 200 ppb |
| Alanine concentration (to test seasoning liquid) | | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | | 0.00 mg/g | 6.68 mg/g | 6.68 mg/g | 6.68 mg/g | 6.68 mg/g | 2.39 mg/g | 6.68 mg/g | 6.68 mg/g |
| Unpleasant smell of pork | PanelistA | 1 | 3 | 5 | 7 | 7 | 2 | 3 | 7 |
| | Panelist B | 1 | 3 | 6 | 7 | 7 | 2 | 3 | 7 |
| | Panelist C | 1 | 3 | 5 | 7 | 7 | 2 | 3 | 7 |
| | Average | 1.0 | 3.0 | 5.3 | 7.0 | 7.0 | 2.0 | 3.0 | 7.0 |

[Table 4E2]

| | Control | Test seasoning liquid 2-1 | Test seasoning liquid 2-2 | Test seasoning liquid 2-3 | Test seasoning liquid 2-4 | Test seasoning liquid 2-5 | Test seasoning liquid 2-6 | Test seasoning liquid 2-7 | |
|---|---|---|---|---|---|---|---|---|---|
| Phenethyl acetate concentration (to test seasoning liquid) | 0 ppb | 0 ppb | 1 ppb | 20 ppb | 500 ppb | 0 ppb | 0 ppb | 20 ppb | |
| Phenethyl acetate concentration (to soy sauce) | | 0 ppb | 0 ppb | 10 ppb | 200 ppb | 5000 ppb | 0 ppb | 0 ppb | 200 ppb |
| Alanine concentration (to test seasoning liquid) | | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | | 0.00 mg/g | 6.68 mg/g | 6.68 mg/g | 6.68 mg/g | 6.68 mg/g | 2.39 mg/g | 6.68 mg/g | 6.68 mg/g |
| Umami of meat | PanelistA | 1 | 4 | 6 | 7 | 7 | 2 | 4 | 7 |
| | Panelist B | 1 | 4 | 6 | 7 | 7 | 3 | 4 | 7 |
| | Panelist C | 1 | 4 | 6 | 7 | 7 | 3 | 4 | 7 |
| | Average | 1.0 | 4.0 | 6.0 | 7.0 | 7.0 | 2.7 | 4.0 | 7.0 |

As shown in Table 4E1 and Table 4E2, the pork flavor was improved in a concentration-dependent manner by containing phenethyl acetate. Especially, by containing 1 ppb or more of phenethyl acetate, the pork unpleasant smell was suppressed, the umami of pork was increased. Furthermore, the pork flavor was remarkably improved by containing 20 ppb or more of phenethyl acetate.

From a comparison between the test seasoning liquid 2-1 containing soy sauce and the test seasoning liquid 2-6 containing the comparable amount of alanine to that contained in the soy sauce, which are test seasoning liquids without phenethyl acetate, it was found that the improving action of soy sauce on the pork flavor, is likely to be dependent on alanine. Furthermore, as the amount of alanine was reduced, the improving action on the pork flavor decreased. From these results, it was found that alanine, as well as phenethyl acetate, also had an improving action on the pork flavor.

From the results using test seasoning liquids 2-2 to 2-4 containing soy sauce and phenethyl acetate, and a test seasoning liquid 2-7 containing alanine and phenethyl acetate, it was found that a combination of alanine and phenethyl acetate provided a remarkably superior improving action on the pork flavor.

From the above results, the addition of phenethyl acetate and/or alanine suppressed the pork's unpleasant smell in a concentration-dependent manner and further increased the umami of the meat.

Example 3 Evaluation of Improving Action of Phenethyl Acetate on Chicken Flavor

[3-1. Preparation of Liquid Seasoning]

In the same manner as in Example 2, each test seasoning liquid was prepared by mixing ground chicken, soy sauce (tokumaru), soy sauce (usukuchi), table salt, sugar, kelp extract, phenethyl acetate solution, alanine solution, and water in the blending amount shown in the following Table 5E, and then subjected to non-retort sterilization (at 90°C for 5 minutes). The ground chicken used was (9 mm minced) breast meat of domestic chicken (broiler; breed: (father) White Cornish × (mother) White Plymouth Rock).

[Table 5E]

| | Control | Test seasoning liquid 3-1 | Test seasoning liquid 3-2 | Test seasoning liquid 3-3 | Test seasoning liquid 3-4 | Test seasoning liquid 3-5 | Test seasoning liquid 3-6 | Test seasoning liquid 3-7 |
|---|---|---|---|---|---|---|---|---|
| Ground chicken | 20.0 g | 20.0 g | 20.0 g | 20.0 g | 20.0 g | 20.0 g | 20.0 g | 20.0 g |
| Soy sauce (usukuchi) | 0.0 g | 0.0 g | 0.0 g | 0.0 g | 0.0 g | 10.0 g | 10.0 g | 10.0 g |
| Soy sauce (tokumaru) | 0.0 g | 10.0 g | 10.0 g | 10.0 g | 10.0 g | 0.0 g | 0.0 g | 0.0 g |
| Table salt | 0.69 g | 0.0 g | 0.0 g | 0.0 g | 0.0 g | 0.0 g | 0.0 g | 0.0 g |
| Sugar | 5.0 g | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g | 0.1 g |
| Water | Residue | Residue | Residue | Residue | Residue | Residue | Residue | Residue |
| Alanine solution | 0.0 g | 0.0 g | 0.0 g | 0.0 g | 0.0 g | 0.0 g | 4.3 g | 4.3 g |
| Phenethyl acetate solution | 0 μl | 0 μl | 100 μl | 100 | 100 | 0 μl | 0 μl | 100 μl |
| Total | 100.0 g | 100.0 g | 100.0 g | 100.0 g | 100.0 g | 100.0 g | 100.0 g | 100.0 g |
| Phenethyl acetate concentration (to test seasoning liquid) | 0 ppb | 0 ppb | 1 ppb | 20 ppb | 500 ppb | 0 ppb | 0 ppb | 20 ppb |
| Phenethyl acetate concentration (to soy sauce) | 0 ppb | 0 ppb | 10 ppb | 200 ppb | 5000 ppb | 0 ppb | 0 ppb | 200 ppb |
| Alanine concentration (to test seasoning liquid) | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | 0.00 mg/g | 6.68 mg/g | 6.68 mg/g | 6.68 mg/g | 6.68 mg/g | 2.39 mg/g | 6.68 mg/g | 6.68 mg/g |

[3-2 Sensory Evaluation Method]

In the same manner as in Example 1, sensory evaluation was carried out on each of the test seasoning liquids having been subjected to sterilization. The broiler smell was defined as an unpleasant smell combining a smell specific to young chicken and an animal smell specific to chicken. The broiler smell and umami of meat were evaluated by the following criteria.

<Broiler Smell>

1: extremely strongly perceived

2: very strongly perceived

3: strongly perceived

4: perceived

5: slightly perceived

6: almost not perceived

7: not perceived

**[0311]** * As the evaluation criteria, the control was set to "1", and the test seasoning liquid 3-3 containing 20 ppb phenethyl acetate was set to "7".

<Umami of Meat>

1: extremely weakly perceived

2: very weakly perceived

3: weakly perceived

4: perceived

5: slightly strongly perceived

6: very strongly perceived

7: extremely strongly perceived

**[0313]** * As the evaluation criteria, the control was set to "1", and the test seasoning liquid 3-3 containing 20 ppb phenethyl acetate was set to "7".

[3-3 Results of Sensory Evaluation]

In the same manner as in Example 1, sensory evaluation was carried out on each test seasoning liquid after non-retort sterilization. Results are shown in Table 6E1 and Table 6E2.

[Table 6E1]

| | | Control | Test seasoning liquid 3-1 | Test seasoning liquid 3-2 | Test seasoning liquid 3-3 | Test seasoning liquid 3-4 | Test seasoning liquid 3-5 | Test seasoning liquid 3-6 | Test seasoning liquid 3-7 |
|---|---|---|---|---|---|---|---|---|---|
| Phenethyl acetate concentration (to test seasoning liquid) | | 0 ppb | 0 ppb | 1 ppb | 20 ppb | 500 ppb | 0 ppb | 0 ppb | 20 ppb |
| Phenethyl acetate concentration (to soy sauce) | | 0 ppb | 0 ppb | 10 ppb | 200 ppb | 5000 ppb | 0 ppb | 0 ppb | 200 ppb |
| Alanine concentration (to test seasoning liquid) | | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | | 0.00 mg/g | 6.68 mg/g | 6.68 mg/g | 6.68 mg/g | 6.68 mg/g | 2.39 mg/g | 6.68 mg/g | 6.68 mg/g |
| Broiler smell | Panelist A | 1 | 3 | 5 | 7 | 7 | 2 | 3 | 7 |
| | Panelist B | 1 | 2 | 6 | 7 | 7 | 2 | 3 | 7 |
| | Panelist C | 1 | 3 | 5 | 7 | 7 | 2 | 3 | 7 |
| | Average | 1.0 | 2.7 | 5.3 | 7.0 | 7.0 | 2.0 | 3.0 | 7.0 |

[Table 6E2]

| | | Control | Test seasoning liquid 3-1 | Test seasoning liquid 3-2 | Test seasoning liquid 3-3 | Test seasoning liquid 3-4 | Test seasoning liquid 3-5 | Test seasoning liquid 3-6 | Test seasoning liquid 3-7 |
|---|---|---|---|---|---|---|---|---|---|
| Phenethyl acetate concentration (to test seasoning liquid) | | 0 ppb | 0 ppb | 1 ppb | 20 ppb | 500 ppb | 0 ppb | 0 ppb | 20 ppb |
| Phenethyl acetate concentration (to soy sauce) | | 0 ppb | 0 ppb | 10 ppb | 200 ppb | 5000 ppb | 0 ppb | 0 ppb | 200 ppb |
| Alanine concentration (to test seasoning liquid) | | 0.00 mg/g | 0.67 mg/g | 0.67 mg/g | 0.67 mg/g | 0.67 mg/g | 0.24 mg/g | 0.67 mg/g | 0.67 mg/g |
| Alanine concentration (to soy sauce) | | 0.00 mg/g | 6.68 mg/g | 6.68 mg/g | 6.68 mg/g | 6.68 mg/g | 2.39 mg/g | 6.68 mg/g | 6.68 mg/g |
| Umami of meat | PanelistA | 1 | 4 | 6 | 7 | 7 | 2 | 4 | 7 |
| | Panelist B | 1 | 4 | 6 | 7 | 7 | 3 | 4 | 7 |
| | Panelist C | 1 | 4 | 6 | 7 | 7 | 3 | 4 | 7 |
| | Average | 1.0 | 4.0 | 6.0 | 7.0 | 7.0 | 2.7 | 4.0 | 7.0 |

As shown in Table 6E1 and Table 6E2, the chicken flavor was improved in a concentration-dependent manner by containing phenethyl acetate. Especially, by containing 1 ppb or more of phenethyl acetate, the broiler smell of chicken was suppressed, the umami of chicken was increased, and an aftertaste thereof was also felt. Surprisingly, the chicken flavor was remarkably improved by containing 20 ppb or more of phenethyl acetate.

In the same manner as in Example 2, it was also found that alanine has an improving action on the chicken flavor and that a combination of alanine and phenethyl acetate provided a remarkably superior improving action on the chicken flavor.

From these results, the addition of phenethyl acetate and/or alanine suppressed the broiler smell of chicken in a concentration-dependent manner and further increased the umami of the meat.

Example 4 Evaluation of Improving Action of Combination of Phenethyl Acetate and Alanine on Beef Flavor (1)

[4-1. Preparation of Liquid Seasoning]

In the same manner as in Examples 1 and 2, each test seasoning liquid was prepared by mixing ground beef, table salt, sugar, kelp extract, phenethyl acetate solution, alanine solution, nonalactone solution, and water in the blending amount shown in the following Table 7E, and then subjected to non-retort sterilization (at 90°C for 5 minutes).

[Table 7E]

| | Control | Test seasoning liquid 4-1 | Test seasoning liquid 4-2 | Test seasoning liquid 4-3 | Test seasoning liquid 4-4 | Test seasoning liquid 4-5 | Test seasoning liquid 4-6 |
|---|---|---|---|---|---|---|---|
| Imported grass-fed beef | 20.0 g | 20.0 g | 20.0 g | 20.0 g | 20.0 g | 20.0 g | 20.0 g |
| Table salt | 0.69 g | 0.69 g | 0.69 g | 0.69 g | 0.69 g | 0.69 g | 0.69 g |
| Sugar | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| Alanine solution | 0.0 g | 0.0 g | 6.7 g | 0.0 g | 6.7 g | 0.0 g | 6.7 g |
| Nonalactone solution | 0 μl | 0 μl | 0 μl | 100 μl | 0 μl | 100 μl | 100 μl |
| Phenethyl acetate solution | 0 μl | 100 μl | 0 μl | 0 μl | 100 μl | 100 μl | 0 μl |
| Total | 100.0 g | 100.0 g | 100.0 g | 100.0 g | 100.0 g | 100.0 g | 100.0 g |
| Phenethyl acetate concentration (to test seasoning liquid) | 0 ppb | 10 ppb | 0 ppb | 0 ppb | 10 ppb | 10 ppb | 0 ppb |
| Alanine concentration (to test seasoning liquid) | 0.00 mg/g | 0.00 mg/g | 0.67 mg/g | 0.00 mg/g | 0.67 mg/g | 0.00 mg/g | 0.67 mg/g |
| Nonalactone concentration (to test seasoning liquid) | 0.0 ppm | 0.0 ppm | 0.0 ppm | 10.0 ppm | 0.0 ppm | 10.0 ppm | 10.0 ppm |

[4-2 Results of Sensory Evaluation]

In the same manner as in Example 1, sensory evaluation was carried out on each test seasoning liquid after non-retort sterilization. Note that as the evaluation criteria, the control was set to "1". Results are shown in Table 8E1 to Table 8E3.

[Table 8E1]

| | | Control | Test seasoning liquid 4-1 | Test seasoning liquid 4-2 | Test seasoning liquid 4-3 | Test seasoning liquid 4-4 | Test seasoning liquid 4-5 | Test seasoning liquid 4-6 |
|---|---|---|---|---|---|---|---|---|
| Phenethyl acetate concentration (to test seasoning liquid) | | 0 ppb | 10 ppb | 0 ppb | 0 ppb | 10 ppb | 10 ppb | 0 ppb |
| Alanine concentration (to test seasoning liquid) | | 0.00 mg/g | 0.00 mg/g | 0.67 mg/g | 0.00 mg/g | 0.67 mg/g | 0.00 mg/g | 0.67 mg/g |
| Nonalactone concentration (to test seasoning liquid) | | 0.0 ppm | 0.0 ppm | 0.0 ppm | 10.0 ppm | 0.0 ppm | 10.0 ppm | 10.0 ppm |
| Wagyu aroma | PanelistA | 1 | 5 | 1 | 4 | 5 | 5 | 4 |
| | Panelist B | 1 | 5 | 1 | 4 | 5 | 5 | 4 |
| | Panelist C | 1 | 5 | 1 | 4 | 5 | 5 | 4 |
| | Average | 1.0 | 5.0 | 1.0 | 4.0 | 5.0 | 5.0 | 4.0 |

[Table 8E2]

| | | Control | Test seasoning liquid 4-1 | Test seasoning liquid 4-2 | Test seasoning liquid 4-3 | Test seasoning liquid 4-4 | Test seasoning liquid 4-5 | Test seasoning liquid 4-6 |
|---|---|---|---|---|---|---|---|---|
| Phenethyl acetate concentration (to test seasoning liquid) | | 0 ppb | 10 ppb | 0 ppb | 0 ppb | 10 ppb | 10 ppb | 0 ppb |
| Alanine concentration (to test seasoning liquid) | | 0.00 mg/g | 0.00 mg/g | 0.67 mg/g | 0.00 mg/g | 0.67 mg/g | 0.00 mg/g | 0.67 mg/g |
| Nonalactone concentration (to test seasoning liquid) | | 0.0 ppm | 0.0 ppm | 0.0 ppm | 10.0 ppm | 0.0 ppm | 10.0 ppm | 10.0 ppm |
| Umami of meat | PanelistA | 1 | 5 | 4 | 2 | 7 | 5 | 4 |
| | Panelist B | 1 | 5 | 4 | 2 | 6 | 5 | 4 |
| | Panelist C | 1 | 5 | 4 | 2 | 6 | 5 | 4 |
| | Average | 1.0 | 5.0 | 4.0 | 2.0 | 6.3 | 5.0 | 4.0 |

[Table 8E3]

| | | Control | Test seasoning liquid 4-1 | Test seasoning liquid 4-2 | Test seasoning liquid 4-3 | Test seasoning liquid 4-4 | Test seasoning liquid 4-5 | Test seasoning liquid 4-6 |
|---|---|---|---|---|---|---|---|---|
| Phenethyl acetate concentration (to test seasoning liquid) | | 0 ppb | 10 ppb | 0 ppb | 0 ppb | 10 ppb | 10 ppb | 0 ppb |
| Alanine concentration (to test seasoning liquid) | | 0.00 mg/g | 0.00 mg/g | 0.67 mg/g | 0.00 mg/g | 0.67 mg/g | 0.00 mg/g | 0.67 mg/g |
| Nonalactone concentration (to test seasoning liquid) | | 0.0 ppm | 0.0 ppm | 0.0 ppm | 10.0 ppm | 0.0 ppm | 10.0 ppm | 10.0 ppm |
| Grass smell | PanelistA | 1 | 5 | 3 | 4 | 7 | 5 | 4 |
| | Panelist B | 1 | 5 | 3 | 4 | 6 | 5 | 5 |
| | Panelist C | 1 | 5 | 3 | 4 | 6 | 5 | 4 |
| | Average | 1.0 | 5.0 | 3.0 | 4.0 | 6.3 | 5.0 | 4.3 |

In a test seasoning liquid 4-3 containing neither phenethyl acetate nor alanine, but nonalactone alone, the Wagyu beef aroma and grass smell were improved, but it had little effect of improving the umami of the meat.

From comparisons of test seasoning liquids 4-1, 4-2, 4-5, and 4-6, it was found that when phenethyl acetate or alanine was contained along with nonalactone, the umami and the grass smell of the meat were improved, but these were equivalent to those containing phenethyl acetate or alanine alone.

In contrast, from comparisons of test seasoning liquids 4-1, 4-2, and 4-4, those containing phenethyl acetate and alanine remarkably improved the umami and grass smell of the meat compared to those containing phenethyl acetate or alanine alone.

To summarize these results, nonalactone had an improving action on a beef flavor, but its action was not increased when combined with phenethyl acetate or alanine, whereas the combination of phenethyl acetate and alanine increased the action compared to each alone. Thus, it was found that the improving action of the combination of phenethyl acetate and alanine on the beef flavor was synergistic rather than additive.

Example 5 Evaluation of Improving Action of Combination of Phenethyl Acetate and Alanine on Beef Flavor (2)

[5-1. Preparation of Liquid Seasoning]

In the same manner as in Examples 1 and 2, each test seasoning liquid was prepared by mixing ground beef, soy sauce (usukuchi), soy sauce (tokumaru), table salt, sugar, kelp extract, phenethyl acetate solution, alanine solution, alanine stock solution, and water in the blending amount shown in the following Table 9E, and then subjected to non-retort sterilization (at 90°C for 5 minutes).

[Table 9E]

| | Control | Test seasoning liquid 5-1 | Test seasoning liquid 5.2 | Test seasoning liquid 5-3 | Test seasoning liquid 5-4 | Test seasoning liquid 5-5 | Test seasoning liquid 5-6 |
|---|---|---|---|---|---|---|---|
| Imported grass-fed beef | 20.0 g | 20.0 g | 20.0 g | 20.0 g | 20.0 g | 20.0 g | 20.0 g |
| Soy sauce (usukuchi) | 0.0 g | 0.0 g | 0.0 g | 0.0 g | 0.0 g | 0.0 g | 0.0 g |
| Soy sauce (tokumaru) | 0.0 g | 0.0 g | 0.0 g | 0.0 g | 0.0 g | 0.0 g | 0.0 g |
| Table salt | 0.69 g | 0.69 g | 0.69 g | 0.69 g | 0.69 g | 0.69 g | 0.69 g |
| Sugar | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |
| Alanine solution (10 mg/g) | 0.0 g | 0.0 g | 0.0 g | 0.0 g | 0.0 g | 0.0 g | 0.0 g |
| Alanine stock solution (100 mg/g) | 0.0 g | 0.0 g | 0.0 g | 0.0 g | 0.0 g | 0.0 g | 0.0 g |
| Phenethyl acetate solution | 0 μl | 100 μl | 100 μl | 100 μl | 100 μl | 100 μl | 100 μl |
| Total | 100.0 g | 100.0 g | 100.0 g | 100.0 g | 100.0 g | 100.0 g | 100.0 g |
| Alanine concentration (to test seasoning liquid) | 0.00 mg/g | 0.00 mg/g | 0.00 mg/g | 0.00 mg/g | 0.00 mg/g | 0.00 mg/g | 0.00 mg/g |
| Phenethyl acetate concentration (to test seasoning liquid) | 0 ppb | 1 ppb | 10 ppb | 20 ppb | 100 ppb | 500 ppb | 1000 ppb |

| | Test seasoning liquid 5-7 | Test seasoning liquid 5-8 | Test seasoning liquid 5-9 | Test seasoning liquid 5-10 | Test seasoning liquid 5-11 | Test seasoning liquid 5-12 | Test seasoning liquid 5-13 |
|---|---|---|---|---|---|---|---|
| Imported grass-fed beef | 20.0 g | 20.0 g | 20.0 g | 20.0 g | 20.0 g | 20.0 g | 20.0 g |
| Soy sauce (usukuchi) | 0.0 g | 0.0 g | 0.0 g | 0.0 g | 0.0 g | 0.0 g | 0.0 g |
| Soy sauce (tokumaru) | 0.0 g | 0.0 g | 0.0 g | 0.0 g | 0.0 g | 0.0 g | 0.0 g |
| Table salt | 0.69 g | 0.69 g | 0.69 g | 0.69 g | 0.69 g | 0.69 g | 0.69 g |
| Sugar | 5.0 g | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g | 0.1 g |
| Water | Residue | Residue | Residue | Residue | Residue | Residue | Residue |

| | | | | | | | |
|---|---|---|---|---|---|---|---|
| Alanine solution (10 mg/g) | 0.0 g | 2.4 g | 6.7 g | 0.0 g | 0.0 g | 0.0 g | 2.4 g |
| Alanine stock solution (100 mg/g) | 0.0 g | 0.0 g | 0.0 g | 15.0 g | 20.0 g | 65.0 g | 0.0 g |
| Phenethyl acetate solution | 100 µl | 0 µl | 0 µl | 0 µl | 0 µl | 0 µl | 100 µl |
| Total | 100.0 g | 100.0 g | 100.0 g | 100.0 g | 100.0 g | 100.0 g | 100.0 g |
| Alanine concentration (to test seasoning liquid) | 0.00 mg/g | 0.24 mg/g | 0.67 mg/g | 15.00 mg/g | 20.00 mg/g | 65.00 mg/g | 0.24 mg/g |
| Phenethyl acetate concentration (to test seasoning liquid) | 1500 ppb | 0 ppb | 0 ppb | 0 ppb | 0 ppb | 0 ppb | 1 ppb |

| | Test seasoning liquid 5-14 | Test seasoning liquid 5-15 | Test seasoning liquid 5-16 | Test seasoning liquid 5-17 | Test seasoning liquid 5-18 |
|---|---|---|---|---|---|
| Imported grass-fed beef | 20.0 g | 20.0 g | 20.0 g | 20.0 g | 20.0 g |
| Soy sauce (usukuchi) | 0.0 g | 0.0 g | 0.0 g | 10.0 g | 0.0 g |
| Soy sauce (tokumaru) | 0.0 g | 0.0 g | 0.0 g | 0.0 g | 10.0 g |
| Table salt | 0.69 g | 0.69 g | 0.69 g | 0.0 g | 0.0 g |
| Sugar | 5.0 g | 5.0 g | 5.0 g | 5.0 g | 5.0 g |
| Kelp extract | 0.1 g | 0.1 g | 0.1 g | 0.1 g | 0.1 g |
| Water | Residue | Residue | Residue | Residue | Residue |
| Alanine solution (10 mg/g) | 6.7 g | 0.0 g | 0.0 g | 4.3 g | 0.0 g |
| Alanine stock solution (100 mg/g) | 0.0 g | 20.0 g | 65.0 g | 0.0 g | 0.0 g |
| Phenethyl acetate solution | 100 µl | 100 µl | 100 µl | 100 µl | 100 µl |
| Total | 100.0 g | 100.0 g | 100.0 g | 100.0 g | 100.0 g |
| Alanine concentration (to test seasoning liquid) | 0.67 mg/g | 20.00 mg/g | 65.00 mg/g | 0.67 mg/g | 0.67 mg/g |
| Phenethyl acetate concentration (to test seasoning liquid) | 1 ppb | 1 ppb | 1 ppb | 1 ppb | 1 ppb |

[5-2 Results of Sensory Evaluation]

In the same manner as in Example 1, sensory evaluation was carried out on each test seasoning liquid after non-retort sterilization. Note that as the evaluation criteria, the control was set to "1". Results are shown in Table 10E1 to Table 10E3.

[Table 10E1]

| | | Control | Test seasoning liquid 5-1 | Test seasoning liquid 5-2 | Test seasoning liquid 5-3 | Test seasoning liquid 5-4 | Test seasoning liquid 5-5 | Test seasoning liquid 5-6 |
|---|---|---|---|---|---|---|---|---|
| Alanine concentration (to test seasoning liquid) | | 0.00 mg/g | 0.00 mg/g | 0.00 mg/g | 0.00 mg/g | 0.00 mg/g | 0.00 mg/g | 0.00 mg/g |
| Phenethyl acetate concentration (to test seasoning liquid) | | 0 ppb | 1 ppb | 10 ppb | 20 ppb | 100 ppb | 500 ppb | 1000 ppb |
| Wagyu aroma | Panelist A | 1 | 4 | 5 | 6 | 7 | 7 | 7 |
| | Panelist B | 1 | 4 | 5 | 6 | 7 | 7 | 7 |
| | Panelist C | 1 | 4 | 5 | 6 | 7 | 7 | 7 |
| | Average | 1.0 | 4.0 | 5.0 | 6.0 | 7.0 | 7.0 | 7.0 |

| | | Test seasoning liquid 5-7 | Test seasoning liquid 5-8 | Test seasoning liquid 5-9 | Test seasoning liquid 5-10 | Test seasoning liquid 5-11 | Test seasoning liquid 5-12 | Test seasoning liquid 5-13 |
|---|---|---|---|---|---|---|---|---|
| Alanine concentration (to test seasoning liquid) | | 0.00 mg/g | 0.24 mg/g | 0.67 mg/g | 15.00 mg/g | 20.00 mg/g | 65.00 mg/g | 0.24 mg/g |
| Phenethyl acetate concentration (to test seasoning liquid) | | 1500 ppb | 0 ppb | 0 ppb | 0 ppb | 0 ppb | 0 ppb | 1 ppb |
| Wagyu aroma | Panelist A | 7 | 1 | 1 | 1 | 1 | 1 | 4 |
| | Panelist B | 7 | 1 | 1 | 1 | 1 | 1 | 4 |
| | Panelist C | 7 | 1 | 1 | 1 | 1 | 1 | 4 |
| | Average | 7.0 | 1.0 | 1.0 | 1.0 | 1.0 | 1.0 | 4.0 |

| | | Test seasoning liquid 5-14 | Test seasoning liquid 5-15 | Test seasoning liquid 5-16 | Test seasoning liquid 5-17 | Test seasoning liquid 5-18 |
|---|---|---|---|---|---|---|
| Alanine concentration (to test seasoning liquid) | | 0.67 mg/g | 20.00 mg/g | 65.00 mg/g | 0.67 mg/g | 0.67 mg/g |
| Phenethyl acetate concentration (to test seasoning liquid) | | 1 ppb | 1 ppb | 1 ppb | 1 ppb | 1 ppb |
| Wagyu aroma | Panelist A | 4 | 4 | 4 | 4 | 4 |
| | Panelist B | 4 | 4 | 4 | 4 | 4 |
| | Panelist C | 4 | 4 | 4 | 4 | 4 |
| | Average | 4.0 | 4.0 | 4.0 | 4.0 | 4.0 |

[Table 10E2]

| | | Control | Test seasoning liquid 5-1 | Test seasoning liquid 5-2 | Test seasoning liquid 5-3 | Test seasoning liquid 5-4 | Test seasoning liquid 5-5 | Test seasoning liquid 5-6 |
|---|---|---|---|---|---|---|---|---|

| | | | | | | | | |
|---|---|---|---|---|---|---|---|---|
| Alanine concentration (to test seasoning liquid) | | 0.00 mg/g | 0.00 mg/g | 0.00 mg/g | 0.00 mg/g | 0.00 mg/g | 0.00 mg/g | 0.00 mg/g |
| Phenethyl acetate concentration (to test seasoning liquid) | | 0 ppb | 1 ppb | 10 ppb | 20 ppb | 100 ppb | 500 ppb | 1000 ppb |
| Umami of meat | Panelist A | 1 | 4 | 5 | 6 | 7 | 7 | 7 |
| | Panelist B | 1 | 4 | 5 | 6 | 7 | 7 | 7 |
| | Panelist C | 1 | 4 | 5 | 6 | 7 | 7 | 7 |
| | Average | 1.0 | 4.0 | 5.0 | 6.0 | 7.0 | 7.0 | 7.0 |

| | | Test seasoning liquid 5-7 | Test seasoning liquid 5-8 | Test seasoning liquid 5-9 | Test seasoning liquid 5-10 | Test seasoning liquid 5-11 | Test seasoning liquid 5-12 | Test seasoning liquid 5-13 |
|---|---|---|---|---|---|---|---|---|
| Alanine concentration (to test seasoning liquid) | | 0.00 mg/g | 0.24 mg/g | 0.67 mg/g | 15.00 mg/g | 20.00 mg/g | 65.00 mg/g | 0.24 mg/g |
| Phenethyl acetate concentration (to test seasoning liquid) | | 1500 ppb | 0 ppb | 0 ppb | 0 ppb | 0 ppb | 0 ppb | 1 ppb |
| Umami of meat | Panelist A | 7 | 2 | 4 | 5 | 5 | 5 | 5 |
| | Panelist B | 7 | 3 | 4 | 5 | 5 | 5 | 5 |
| | Panelist C | 7 | 3 | 4 | 5 | 5 | 5 | 5 |
| | Average | 7.0 | 2.7 | 4.0 | 5.0 | 5.0 | 5.0 | 5.0 |

| | | Test seasoning liquid 5-14 | Test seasoning liquid 5-15 | Test seasoning liquid 5-16 | Test seasoning liquid 5-17 | Test seasoning liquid 5-18 |
|---|---|---|---|---|---|---|
| Alanine concentration (to test seasoning liquid) | | 0.67 mg/g | 20.00 mg/g | 65.00 mg/g | 0.67 mg/g | 0.67 mg/g |
| Phenethyl acetate concentration (to test seasoning liquid) | | 1 ppb | 1 ppb | 1 ppb | 1 ppb | 1 ppb |
| Umami of meat | Panelist A | 6 | 6 | 6 | 6 | 6 |
| | Panelist B | 6 | 6 | 6 | 6 | 6 |
| | Panelist C | 6 | 6 | 6 | 6 | 6 |
| | Average | 6.0 | 6.0 | 6.0 | 6.0 | 6.0 |

[Table 10E3]

| | | Control | Test seasoning liquid 5-1 | Test seasoning liquid 5-2 | Test seasoning liquid 5-3 | Test seasoning liquid 5-4 | Test seasoning liquid 5-5 | Test seasoning liquid 5-6 |
|---|---|---|---|---|---|---|---|---|
| Alanine concentration (to test seasoning liquid) | | 0.00 mg/g | 0.00 mg/g | 0.00 mg/g | 0.00 mg/g | 0.00 mg/g | 0.00 mg/g | 0.00 mg/g |

| Phenethyl acetate concentration (to test seasoning liquid) | | 0 ppb | 1 ppb | 10 ppb | 20 ppb | 100 ppb | 500 ppb | 1000 ppb |
|---|---|---|---|---|---|---|---|---|
| Grass smell | Panelist A | 1 | 4 | 5 | 6 | 7 | 7 | 7 |
| | Panelist B | 1 | 4 | 5 | 6 | 7 | 7 | 7 |
| | Panelist C | 1 | 4 | 5 | 6 | 7 | 7 | 7 |
| | Average | 1.0 | 4.0 | 5.0 | 6.0 | 7.0 | 7.0 | 7.0 |

| | | Test seasoning liquid 5-7 | Test seasoning liquid 5-8 | Test seasoning liquid 5-9 | Test seasoning liquid 5-10 | Test seasoning liquid 5-11 | Test seasoning liquid 5-12 | Test seasoning liquid 5-13 |
|---|---|---|---|---|---|---|---|---|
| Alanine concentration (to test seasoning liquid) | | 0.00 mg/g | 0.24 mg/g | 0.67 mg/g | 15.00 mg/g | 20.00 mg/g | 65.00 mg/g | 0.24 mg/g |
| Phenethyl acetate concentration (to test seasoning liquid) | | 1500 ppb | 0 ppb | 0 ppb | 0 ppb | 0 ppb | 0 ppb | 1 ppb |
| Grass smell | Panelist A | 7 | 2 | 3 | 3 | 3 | 3 | 5 |
| | Panelist B | 7 | 2 | 3 | 3 | 3 | 3 | 5 |
| | Panelist C | 7 | 2 | 3 | 3 | 3 | 3 | 5 |
| | Average | 7.0 | 2.0 | 3.0 | 3.0 | 3.0 | 3.0 | 5.0 |

| | | Test seasoning liquid 5-14 | Test seasoning liquid 5-15 | Test seasoning liquid 5-16 | Test seasoning liquid 5-17 | Test seasoning liquid 5-18 |
|---|---|---|---|---|---|---|
| Alanine concentration (to test seasoning liquid) | | 0.67 mg/g | 20.00 mg/g | 65.00 mg/g | 0.67 mg/g | 0.67 mg/g |
| Phenethyl acetate concentration (to test seasoning liquid) | | 1 ppb | 1 ppb | 1 ppb | 1 ppb | 1 ppb |
| Grass smell | Panelist A | 5 | 6 | 6 | 5 | 5 |
| | Panelist B | 6 | 6 | 6 | 6 | 6 |
| | Panelist C | 5 | 6 | 6 | 5 | 5 |
| | Average | 5.3 | 6.0 | 6.0 | 5.3 | 5.3 |

As shown in Table 10E1 to Table 10E3, the umami of meat was improved in a concentration-dependent manner by containing alanine. In addition, the grass smell was improved by containing 0.67 mg/g or more of alanine. However, alanine was not observed to impart the Wagyu beef aroma.

Besides, the combination of alanine and phenethyl acetate also improved an improving action on the beef flavor, regardless of whether the source of alanine was soy sauce or not. However, a test seasoning liquid 5-16 containing 65 mg/g of alanine retained a sweet taste derived from alanine as the concentration of alanine increased.

Note that the control and test seasoning liquids 5-1 to 5-3 were subjected to retort sterilization at 121.1°C for 10 minutes (Fo value: 10), and as is the case with the non-retort sterilization, only when the amount of phenethyl acetate added was 1 ppb or more compared to the control, each effect of increasing the Wagyu beef aroma, improving glass smell, and increasing the umami of the meat was confirmed. In addition, each of the effects was increased with increasing amounts of 10 ppb and 20 ppb.

Example 6 Evaluation of Improving Action of Alanine Added to Usukuchi Shoyu (Light-Colored Soy Sauce) on Beef Flavor

[6-1. Preparation of Liquid Seasoning]

In the same manner as in Examples 1 and 2, each test seasoning liquid was prepared by mixing ground beef, soy sauce (usukuchi), sugar, kelp extract, phenethyl acetate solution, alanine solution, and water in the blending amount shown in the following Table 11E, and then subjected to non-retort sterilization (at 90°C for 5 minutes) .

[Table 11E]

| | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|
| Imported grass-fed beef | 20.0 g | 20.0 g | 20.0 g | 20.0 g | 20.0 g | 20.0 g |
| Soy sauce (usukuchi) | 10.0 g | 10.0 g | 10.0 g | 10.0 g | 10.0 g | 10.0 g |
| Sugar | 5.0 g | 5.0 g | 5.0 g | 5.0 g | 5.0 g | 5.0 g |
| Kelp extract | 0.1 g | 0.1 g | 0.1 g | 0.1 g | 0.1 g | 0.1 g |
| Water | Residue | Residue | Residue | Residue | Residue | Residue |
| Alanine solution | 0.0 g | 4.3 g | 14.8 g | 19.8 g | 64.1 g | 0.0 g |
| Phenethyl acetate solution | 0 µl | 0 µl | 0 µl | 0 µl | 0 µl | 100 µl |
| Total | 100.0 g | 100.0 g | 100.0 g | 100.0 g | 100.0 g | 100.0 g |
| Phenethyl acetate concentration (to test seasoning liquid) | 0 ppb | 0 ppb | 0 ppb | 0 ppb | 0 ppb | 1 ppb |
| Phenethyl acetate concentration (to soy sauce) | 0 ppb | 0 ppb | 0 ppb | 0 ppb | 0 ppb | 10 ppb |
| Alanine concentration (to test seasoning liquid) | 0.24 mg/g | 0.67 mg/g | 15.04 mg/g | 20.04 mg/g | 64.34 mg/g | 0.24 mg/g |
| Alanine concentration (to soy sauce) | 2.39 mg/g | 6.68 mg/g | 150.39 mg/g | 200.39 mg/g | 643.39 mg/g | 2.39 mg/g |

[6-2 Results of Sensory Evaluation]

In the same manner as in Example 1, sensory evaluation was carried out on each test seasoning liquid after non-retort sterilization. Results are shown in Table 12E1 to Table 12E3.

[Table 12E1]

| | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|
| Phenethyl acetate concentration (to test seasoning liquid) | 0 ppb | 0 ppb | 0 ppb | 0 ppb | 0 ppb | 1 ppb |
| Phenethyl acetate concentration (to soy sauce) | 0 ppb | 0 ppb | 0 ppb | 0 ppb | 0 ppb | 10 ppb |

(continued)

| | | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|---|
| Alanine concentration (to test seasoning liquid) | | 0.24 mg/g | 0.67 mg/g | 15.04 mg/g | 20.04 mg/g | 64.34 mg/g | 0.24 mg/g |
| Alanine concentration (to soy sauce) | | 2.39 mg/g | 6.68 mg/g | 150.39 mg/g | 200.39 mg/g | 643.39 mg/g | 2.39 mg/g |
| Wagyu aroma | PanelistA | 1 | 1 | 1 | 1 | 1 | 4 |
| | Panelist B | 1 | 1 | 1 | 1 | 1 | 4 |
| | Panelist C | 1 | 1 | 1 | 1 | 1 | 4 |
| | Average | 1.0 | 1.0 | 1.0 | 1.0 | 1.0 | 4.0 |

[Table 12E2]

| | | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|---|
| Phenethyl acetate concentration (to test seasoning liquid) | | 0 ppb | 0 ppb | 0 ppb | 0 ppb | 0 ppb | 1 ppb |
| Phenethyl acetate concentration (to soy sauce) | | 0 ppb | 0 ppb | 0 ppb | 0 ppb | 0 ppb | 10 ppb |
| Alanine concentration (to test seasoning liquid) | | 0.24 mg/g | 0.67 mg/g | 15.04 mg/g | 20.04 mg/g | 64.34 mg/g | 0.24 mg/g |
| Alanine concentration (to soy sauce) | | 2.39 mg/g | 6.68 mg/g | 150.39 mg/g | 200.39 mg/g | 643.39 mg/g | 2.39 mg/g |
| Umami of meat | PanelistA | 2 | 4 | 5 | 5 | 5 | 5 |
| | Panelist B | 3 | 4 | 5 | 5 | 5 | 5 |
| | Panelist C | 3 | 4 | 5 | 5 | 5 | 5 |
| | Average | 2.7 | 4.0 | 5.0 | 5.0 | 5.0 | 5.0 |

[Table 12E3]

| | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|
| Phenethyl acetate concentration (to test seasoning liquid) | 0 ppb | 0 ppb | 0 ppb | 0 ppb | 0 ppb | 1 ppb |

(continued)

| | | Test seasoning liquid 6-1 | Test seasoning liquid 6-2 | Test seasoning liquid 6-3 | Test seasoning liquid 6-4 | Test seasoning liquid 6-5 | Test seasoning liquid 6-6 |
|---|---|---|---|---|---|---|---|
| Phenethyl acetate concentration (to soy sauce) | | 0 ppb | 0 ppb | 0 ppb | 0 ppb | 0 ppb | 10 ppb |
| Alanine concentration (to test seasoning liquid) | | 0.24 mg/g | 0.67 mg/g | 15.04 mg/g | 20.04 mg/g | 64.34 mg/g | 0.24 mg/g |
| Alanine concentration (to soy sauce) | | 2.39 mg/g | 6.68 mg/g | 150.39 mg/g | 200.39 mg/g | 643.39 mg/g | 2.39 mg/g |
| Grass smell | Panelist A | 2 | 3 | 3 | 3 | 3 | 5 |
| | Panelist B | 2 | 3 | 3 | 3 | 3 | 5 |
| | Panelist C | 2 | 3 | 3 | 3 | 3 | 5 |
| | Average | 2.0 | 3.0 | 3.0 | 3.0 | 3.0 | 5.0 |

As shown in Table 12E1 to Table 12E3, the umami of meat was improved by adding alanine to soy sauce (usukuchi) in a concentration-dependent manner. In addition, the grass smell was improved by containing alanine in an amount of 0.67 mg/g or more. However, the Wagyu beef aroma was not improved by alanine.

Combined with the results of Example 5, it was found that soy sauce (usukuchi) and soy sauce (tokumaru) had similar actions of improving beef flavors depending on the amount of alanine, even though compositional features of amino acids contained therein were different.

Example 7 Evaluation of Improving Action on Raw Meat Flavor

[7-1. Preparation of Liquid Seasoning]

Each test seasoning liquid was prepared by mixing soy sauce (tokumaru) with phenethyl acetate solution prepared in the same manner as in Example 1 in the blending amount shown in the following Table 13E.

[Table 13E]

| | Control | Test seasoning liquid 7-1 | Test seasoning liquid 7-2 | Test seasoning liquid 7-3 | Test seasoning liquid 7-4 |
|---|---|---|---|---|---|
| Soy sauce (tokumaru) | 100.0 g | 100.0 g | 100.0 g | 100.0 g | 100.0 g |
| Phenethyl acetate solution | 0 μl | 100 μl | 100 μl | 100 μl | 100 μl |
| Total | 100.0 g | 100.0 g | 100.0 g | 100.0 g | 100.0 g |
| Phenethyl acetate concentration (to soy sauce) | 0 ppb | 1 ppb | 10 ppb | 20 ppb | 30 ppb |
| Alanine concentration (to soy sauce) | 6.68 mg/g | 6.68 mg/g | 6.68 mg/g | 6.68 mg/g | 6.68 mg/g |

[2-2 Sensory Evaluation Method]

Panelists (3 persons from A to C) with an excellent ability to evaluate flavors of edible raw meat and fish were asked to consume the edible meat and fish by dipping them in each test seasoning liquid at ambient temperature and evaluate the intensity of each flavor of the meat and fish, which come up from the inside of the mouth to the nose when

consumed, at five levels, as follows. The panelists (training period: 10 to 20 years) were trained to discuss and evaluate flavors of the meat and fish before carrying out the sensory test. Characteristics of the flavors of the meat and fish were discussed and reconciled among the panelists to ensure that each panelist had a common understanding thereof. In addition, in order to ensure the validity of the sensory test, the panelists were trained for evaluation using meat and fish dipped in several test seasoning liquids, and the reproducibility of the evaluation by each panelist was checked. After these procedures, the panelists were used to evaluate the flavors of the meat and fish dipped in each test seasoning liquid.

The edible raw meat and fish used were beef sashimi (sliced raw beef) (domestic edible raw frozen product), horse meat sashimi (sliced raw horse meat) (domestic edible raw frozen product), and bonito (domestic edible raw refrigerated product). The raw smell and umami of the edible raw meat and fish were each evaluated based on the following criteria.

<Raw Smell of Meat and Fish>

1: very strongly perceived
2: strongly perceived
3: slightly perceived
4: almost not perceived
5: not perceived

**[0337]** * As the evaluation criteria, the control was set to "1".

<Umami of Meat and Fish>

1: very weakly perceived
2: weakly perceived
3: slightly strongly perceived
4: strongly perceived
5: very strongly perceived

**[0339]** * As the evaluation criteria, the control was set to "1".

[7-3 Results of Sensory Evaluation]

Edible raw meat and fish were dipped in each test seasoning liquid and then consumed. Results of sensory evaluation carried out on them are shown in Table 14E1 to Table 14E3.

[Table 14E1]

| | | Control | Test seasoning liquid 7-1 | Test seasoning liquid 7-2 | Test seasoning liquid 7-3 | Test seasoning liquid 7-4 |
|---|---|---|---|---|---|---|
| Phenethyl acetate concentration (to soy sauce) | | 0 ppb | 1 ppb | 10 ppb | 20 ppb | 30 ppb |
| Alanine concentration (to soy sauce) | | 6.68 mg/g | 6.68 mg/g | 6.68 mg/g | 6.68 mg/g | 6.68 mg/g |
| Raw smell of beef sashimi (sliced raw beef) | PanelistA | 1 | 3 | 4 | 5 | 5 |
| | Panelist B | 1 | 3 | 4 | 4 | 5 |
| | Panelist C | 1 | 3 | 4 | 5 | 5 |
| | Average | 1.0 | 3.0 | 4.0 | 4.7 | 5.0 |

(continued)

| | | Control | Test seasoning liquid 7-1 | Test seasoning liquid 7-2 | Test seasoning liquid 7-3 | Test seasoning liquid 7-4 |
|---|---|---|---|---|---|---|
| Phenethyl acetate concentration (to soy sauce) | | 0 ppb | 1 ppb | 10 ppb | 20 ppb | 30 ppb |
| Alanine concentration (to soy sauce) | | 6.68 mg/g | 6.68 mg/g | 6.68 mg/g | 6.68 mg/g | 6.68 mg/g |
| Umami of beef sashimi (sliced raw beef) | PanelistA | 1 | 3 | 4 | 5 | 5 |
| | Panelist B | 1 | 3 | 5 | 4 | 5 |
| | Panelist C | 1 | 3 | 4 | 5 | 5 |
| | Average | 1.0 | 3.0 | 4.3 | 4.7 | 5.0 |

[Table 14E2]

| | | Control | Test seasoning liquid 7-1 | Test seasoning liquid 7-2 | Test seasoning liquid 7-3 | Test seasoning liquid 7-4 |
|---|---|---|---|---|---|---|
| Phenethyl acetate concentration (to soy sauce) | | 0 ppb | 1 ppb | 10 ppb | 20 ppb | 30 ppb |
| Alanine concentration (to soy sauce) | | 6.68 mg/g | 6.68 mg/g | 6.68 mg/g | 6.68 mg/g | 6.68 mg/g |
| Raw smell of horse meat sashimi (sliced raw horse meat) | Panelist A | 1 | 3 | 4 | 5 | 5 |
| | Panelist B | 1 | 3 | 4 | 4 | 5 |
| | Panelist C | 1 | 3 | 4 | 5 | 5 |
| | Average | 1.0 | 3.0 | 4.0 | 4.7 | 5.0 |

| | | Control | Test seasoning liquid 7-1 | Test seasoning liquid 7-2 | Test seasoning liquid 7-3 | Test seasoning liquid 7-4 |
|---|---|---|---|---|---|---|
| Phenethyl acetate concentration (to soy sauce) | | 0 ppb | 1 ppb | 10 ppb | 20 ppb | 30 ppb |
| Alanine concentration (to soy sauce) | | 6.68 mg/g | 6.68 mg/g | 6.68 mg/g | 6.68 mg/g | 6.68 mg/g |
| Umami of horse meat sashimi (sliced raw horse meat) | Panelist A | 1 | 3 | 4 | 5 | 5 |
| | Panelist B | 1 | 3 | 5 | 4 | 5 |
| | Panelist C | 1 | 3 | 4 | 5 | 5 |
| | Average | 1.0 | 3.0 | 4.3 | 4.7 | 5.0 |

[Table 14E3]

| | | Control | Test seasoning liquid 7-1 | Test seasoning liquid 7-2 | Test seasoning liquid 7-3 | Test seasoning liquid 7-4 |
|---|---|---|---|---|---|---|
| Phenethyl acetate concentration (to soy sauce) | | 0 ppb | 1 ppb | 10 ppb | 20 ppb | 30 ppb |
| Alanine concentration (to soy sauce) | | 6.68 mg/g | 6.68 mg/g | 6.68 mg/g | 6.68 mg/g | 6.68 mg/g |
| Raw smell of bonito sashimi (sliced raw bonito) | PanelistA | 1 | 3 | 4 | 5 | 5 |
| | Panelist B | 1 | 3 | 4 | 4 | 5 |
| | Panelist C | 1 | 3 | 4 | 5 | 5 |
| | Average | 1.0 | 3.0 | 4.0 | 4.7 | 5.0 |

| | | Control | Test seasoning liquid 7-1 | Test seasoning liquid 7-2 | Test seasoning liquid 7-3 | Test seasoning liquid 7-4 |
|---|---|---|---|---|---|---|
| phenethyl acetate concentration (to Soy sauce) | | 0 ppb | 1 ppb | 10 ppb | 20 ppb | 30 ppb |
| Alanine concentration (to Soy sauce) | | 6.68 mg/g | 6.68 mg/g | 6.68 mg/g | 6.68 mg/g | 6.68 mg/g |
| Umami of bonito sashimi (sliced raw bonito | PanelistA | 1 | 3 | 4 | 5 | 5 |
| | Panelist B | 1 | 3 | 4 | 4 | 5 |
| | Panelist C | 1 | 3 | 4 | 5 | 5 |
| | Average | 1.0 | 3.0 | 4.0 | 4.7 | 5.0 |

Raw beef and horse meat have an animal-specific raw smell, mixed with an acidic smell and a blood smell. The test seasoning liquids with phenethyl acetate added suppressed raw odors of beef sashimi (sliced raw beef) and horse meat sashimi (sliced raw horse meat), and umami thereof was strongly perceived (see Table 14E1 and Table 14E2) .

The viscera and blood meat of fish such as bonito contain dimethylamine. Microorganisms attached to the fish reproduce while decomposing dimethylamine, thus generating trimethylamine which causes raw odors, and resulting in a fishy, raw odor. The test seasoning liquids with phenethyl acetate added suppressed raw odor of bonito sashimi (sliced raw bonito), umami thereof was strongly perceived, and a freshly caught fish flavor was perceived.

From the above results, it was found that phenethyl acetate had an improving action on flavors of edible raw meat and fish.

Note that components of unpleasant smells may be common in raw meat and heated meat. For example, an oxidized smell due to lipids in meat is also perceived in raw meat, but it is more strongly perceived in heated meat. Carbonyl compounds are also present in both raw meat and heated meat, leading to a reduction in palatability (see, for example, Kenji Watanabe, et al., Nihon Chikusan Gakkaiho, Volume 45, (1974), Issue 3). In addition, the raw fishy smell is considered to be caused by volatile carbonyl, lower fatty acids, a volatile sulfur-containing compound, or the like, most of which are contained in raw meat (see, for example, Shizuyuki Ota, Journal of the Japan Oil Chemists' Society, Volume 29, (1980), Issue 7).

Example 8 Evaluation of Improving Action on Fish Meat Flavor in the Absence of Soy Sauce

[8-1. Preparation of Liquid Seasoning]

Each test seasoning liquid was prepared by mixing fish meat (dried young sardines), table salt, sugar, kelp extract, phenethyl acetate solution, and alanine solution in the blending amount shown in the following Table 15E with reference to the blend for the control in Table 3E, and then adjusting with water to make 100 g in total.

[Table 15E]

| | Control | Test seasoning liquid 301 | Test seasoning liquid 302 | Test seasoning liquid 303 |
|---|---|---|---|---|
| Fish meat (dried young sardines) | 20.0 g | 20.0 g | 20.0 g | 20.0 g |
| Soy sauce (usukuchi) | 0.0 g | 0.0 g | 0.0 g | 0.0 g |
| Soy sauce (tokumaru) | 0.0 g | 0.0 g | 0.0 g | 0.0 g |
| Table salt | 0.69 g | 0.69 g | 0.69 g | 0.69 g |
| Sugar | 5.0 g | 5.0 g | 5.0 g | 5.0 g |
| Kelp extract | 0.1 g | 0.1 g | 0.1 g | 0.1 g |
| Water | Residue | Residue | Residue | Residue |
| Alanine solution (10 mg/g) | 0.0 g | 6.7 g | 0.0 g | 6.7 g |
| Phenethyl acetate solution | 0 μl | 0 μl | 100 μl | 100 μl |
| Total | 100.0 g | 100.0 g | 100.0 g | 100.0 g |
| Alanine concentration (to test seasoning liquid) | 0.00 mg/g | 0.67 mg/g | 0.00 mg/g | 0.67 mg/g |
| Phenethyl acetate concentration (to test seasoning liquid) | 0 ppb | 0 ppb | 20 ppb | 20 ppb |

Each of the prepared test seasoning liquids was filled in an amount of 100 g into an aluminum pouch. This was subjected to retort sterilization (at 121.1°C for 10 minutes (Fo value: 10)).

Two liquid seasoning solutions for evaluation criteria were prepared with the same blend as the control, and one was subjected to retort sterilization (at 121.1°C for 10 minutes (Fo value: 10)) while the other was sterilized by reaching a temperature of 85°C.

[8-2 Sensory Evaluation Method]

Panelists (3 persons from A to C) with an excellent ability to sniff out fish meat unpleasant smells and the umami of fish meat were asked to take a spoonful of control and test seasoning liquids 301 to 303 having been subjected to retort sterilization at ambient temperature and evaluate fish meat unpleasant smells (raw fishy odors, stuffy smell, acridity, and a bitter taste) and the umami of the fish meat which come up from the inside of the mouth to the nose when consumed as follows. Note that in the evaluation, the panelists were asked to rate a negative control (control having been subjected to retort sterilization) and positive control (product reached 80°C) as control samples at the same time as the sample to be evaluated, and to check for the presence or absence of effects.

[8-3 Results of Sensory Evaluation]

In test seasoning liquids 301 and 302, by containing alanine or phenethyl acetate, fish meat flavor was improved, and the umami of the fish meat was also increased.

In addition, test seasoning liquid 303 containing both alanine and phenethyl acetate had a fish meat flavor similar to that of the positive control, and stronger umami of the fish meat than test seasoning liquids 301 and 302 was perceived, and the effect was remarkable. In contrast, the fish meat unpleasant smell was perceived in the control test seasoning liquid, and the umami of fish meat was insufficient.

From the above results, it was found that phenethyl acetate and alanine had an improving action on the fish meat flavor and an improving action on the umami of fish meat even in test liquids without soy sauce.

Industrial Applicability

The composition of one aspect of the present invention can be used in preparing processed food such as cooked food with desired excellent flavor without imparting heat deterioration smells such as retort smells and meat heating smells and soybean stuffy smells due to retort sterilization, and thus can widely contribute to human health from nutrients suitable for the human body derived from food ingredients. In addition, the food of one aspect of the present invention and the food obtained by the production method of one aspect of the present invention can be industrially produced and served in restaurants, and thus are useful as food used in various situations. The container-packed processed food of one aspect of the present invention is provided for dietary use by itself.

The composition, processed food, and container-packed processed food of one aspect of the present invention

can be industrially produced and served in restaurants as those with improved animal meat flavors, and thus are useful as seasonings and food used in various situations. The method and the flavor improving composition for the animal meat of one aspect of the present invention can be used, for example, to obtain the composition of one aspect of the present invention.

Cross-Reference to Related Applications

This application claims priority to Japanese Patent Application No. 2020-089844 filed on May 22, 2020, and Japanese Patent Application No. 2020-089845 filed on May 22, 2020, the entire contents of which are incorporated herein by reference.

## Claims

1. A container-packed composition comprising soy sauce and having a phenethyl acetate content of 1.0 ppb or more and less than 1,000 ppb.

2. The container-packed composition according to claim 1, further comprising at least one ingredient selected from the group consisting of a seasoning component, vegetables, meat, and seafood.

3. The container-packed composition according to claim 1, further comprising at least one ingredient selected from the group consisting of beef, pork, chicken, and soybean protein.

4. The container-packed composition according to any one of claims 1 to 3, wherein the container-packed composition is a composition for suppressing a heat deterioration smell based on soy sauce or soy sauce and an ingredient.

5. The container-packed composition according to any one of claims 1 to 4, wherein the container-packed composition suppresses a heated smell compared to a heated container-packed composition comprising corresponding soy sauce or soy sauce and an ingredient and having a phenethyl acetate content of less than 1.0 ppb.

6. A method for suppressing a heat deterioration smell, comprising a step of heating a container-packed composition comprising an ingredient and having a phenethyl acetate content of 1.0 ppb or more and less than 1,000 ppb to suppress the heat deterioration smell due to the ingredient.

7. A method of producing a heated container-packed composition, comprising a step of heating a container-packed composition comprising an ingredient and having a phenethyl acetate content of 1.0 ppb or more and less than 1,000 ppb to obtain a container-packed composition in which a heat deterioration smell due to the ingredient is suppressed.

8. The method according to claim 6 or 7, wherein the ingredient is at least one ingredient selected from the group consisting of a seasoning component, vegetables, meat, and seafood.

9. The method according to claim 6 or 7, wherein the ingredient is at least one ingredient selected from the group consisting of soy sauce, beef, pork, chicken, and soybean protein.

10. A container-packed composition comprising at least one animal meat selected from the group consisting of meat and seafood and having a phenethyl acetate content of 1 ppb or more and less than 1,500 ppb.

11. The container-packed composition according to claim 10, further comprising 0.1 mg/g or more and less than 65 mg/g alanine.

12. The container-packed composition according to claim 10 or 11, further comprising soy sauce.

13. The container-packed composition according to any one of claims 10 to 12, wherein the container-packed composition improves an animal meat flavor.

14. The container-packed composition or the method according to any one of claims 1 to 13, wherein the container-packed composition is a container-packed seasoning composition or a container-packed processed food.

**15.** A method for improving an animal meat flavor, comprising a step of mixing at least one animal meat selected from the group consisting of meat and seafood with phenethyl acetate so that the mixture has a phenethyl acetate content of 1 ppb or more and less than 1,500 ppb, to improve the animal meat flavor.

**16.** A method for improving an animal meat flavor, comprising a step of mixing at least one animal meat selected from the group consisting of meat and seafood with phenethyl acetate and alanine so that the mixture has a phenethyl acetate content of 1 ppb or more and less than 1,500 ppb and an alanine content of 0.1 mg/g or more and less than 65 mg/g, to improve the animal meat flavor.

**17.** A method of producing a cooked product, comprising a step of mixing at least one animal meat selected from the group consisting of meat and seafood with phenethyl acetate and alanine so that the mixture has a phenethyl acetate content of 1 ppb or more and less than 1,500 ppb and an alanine content of 0.1 mg/g or more and less than 65 mg/g, to obtain the cooked product.

## INTERNATIONAL SEARCH REPORT

International application No.
PCT/JP2021/019188

A. CLASSIFICATION OF SUBJECT MATTER

A23L 13/00(2016.01)i; A23L 17/00(2016.01)i; A23L 17/40(2016.01)i; A23L 27/00(2016.01)i; A23L 27/20(2016.01)i; A23L 29/00(2016.01)i

FI: A23L27/00 D; A23L27/20 F; A23L17/40 Z; A23L17/00 Z; A23L29/00; A23L13/00 Z; A23L27/00 Z

According to International Patent Classification (IPC) or to both national classification and IPC

B. FIELDS SEARCHED

Minimum documentation searched (classification system followed by classification symbols)

A23L13/00; A23L17/00; A23L17/40; A23L27/00; A23L27/20; A23L29/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2014-168458 A (KIKKOMAN CORPORATION) 18 September 2014 (2014-09-18) paragraphs [0013]-[0016], [0051]-[0103] | 6-11, 13-15<br>16, 17<br>1-5, 12 |
| X<br>Y<br>A | JP 2019-526228 A (UNIV JIANGNAN) 19 September 2019 (2019-09-19) paragraphs [0005]-[0008], examples | 6-11, 13-15<br>16, 17<br>1-5, 12 |
| Y | 武蔵野化学研究所 HP, 2017 [retrieval date 14 July 2021], internet:<URL:https://www.musashino.com/product/name/alanine/> in particular, catalog, etc., (MUSASHINO CHEMICAL LABORATORY, LTD.) | 16, 17 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 14 July 2021 (14.07.2021) | 27 July 2021 (27.07.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/019188

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The composition containing phenethyl acetate, which is the feature shared by the inventions in claims 1, 6, 7, 10, 15, 16, and 17, does not make a contribution over the prior art in light of the disclosures of documents 1 and 2, and thus cannot be said to be a special technical feature.

Therefore, there do not exist other identical or corresponding special technical features among the inventions in claims 1, 6, 7, 10, 15, 16, and 17.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2021/019188

| Patent Documents referred in the Report | Publication Date | Patent Family | Publication Date |
|---|---|---|---|
| JP 2014-168458 A | 18 Sep. 2014 | (Family: none) | |
| JP 2019-526228 A | 19 Sep. 2019 | US 2019/0119764 A1<br>examples<br>WO 2018/214330 A1<br>CN 107177520 A<br>CN 107164250 A<br>KR 10-2019-0017049 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018121633 A
- JP 6040278 B
- JP 3432614 B
- JP 2006340693 A
- JP 4704300 B
- JP 6325277 B
- JP 2014168458 A
- WO 2019526228 A
- JP 2015027309 A
- JP 2006121958 A
- JP 6343710 B
- JP 2020089844 A
- JP 2020089845 A


### Non-patent literature cited in the description


- *Nihon Chikusan Gakkaiho,* 2004, vol. 75 (3), 409-415
- Kojien. 1998
- *MEMOIRS OF THE FACULTY OF AGRICULTURE OF KINDAI UNIVERSITY,* 1972, (5), 85-91, 86, , 87
- *Standard Tables of Food Composition in Japan,* 2015
- **KENJI WATANABE et al.** *Nihon Chikusan Gakkaiho,* 1974, vol. 45 (3
- **SHIZUYUKI OTA.** *Journal of the Japan Oil Chemists' Society,* 1980, vol. 29 (7